(19) Europäisches Patentamt
European Patent Office
Office européen des brevets

(11) **EP 2 703 110 B1**

(12) **EUROPEAN PATENT SPECIFICATION**

(45) Date of publication and mention
of the grant of the patent:
**06.05.2020 Bulletin 2020/19**

(21) Application number: **11864338.6**

(22) Date of filing: **28.04.2011**

(51) Int Cl.:
***B23K 20/12*** *(2006.01)*

(86) International application number:
**PCT/JP2011/060457**

(87) International publication number:
**WO 2012/147204 (01.11.2012 Gazette 2012/44)**

(54) **FRICTION STIR WELDING METHOD AND DEVICE**

REIBSCHWEISSVERFAHREN UND -VORRICHTUNG

PROCÉDÉ ET DISPOSITIF DE SOUDAGE PAR FRICTION-MALAXAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.03.2014 Bulletin 2014/10**

(73) Proprietor: **Primetals Technologies Japan, Ltd.
Hiroshima 7338553 (JP)**

(72) Inventors:
• **KAGA Shinichi
Tokyo 108-0014 (JP)**
• **ONOSE Mitsuru
Tokyo 108-0014 (JP)**
• **TOMINAGA Noriaki
Hiroshima-shi
Hiroshima 733-8553 (JP)**
• **SAITO Takehiko
Hiroshima-shi
Hiroshima 733-8553 (JP)**

• **YOSHIMURA Yasutsugu
Tokyo 108-0014 (JP)**
• **HIRANO Satoshi
Hitachi-shi
Ibaraki 319-1292 (JP)**
• **PARK Seung Hwan
Hitachi-shi
Ibaraki 319-1292 (JP)**

(74) Representative: **Beetz & Partner mbB
Patentanwälte
Robert-Koch-Str. 1
80538 München (DE)**

(56) References cited:
**JP-A- H 115 179       JP-A- H1 110 364
JP-A- 11 048 968       JP-A- 11 320 127
JP-A- 2000 334 577     JP-A- 2002 103 061
JP-A- 2004 276 056     JP-A- 2005 066 643
JP-A- 2008 036 648     JP-A- 2009 018 312
JP-A- 2009 241 771**

**Description**

Technical Field

The present invention relates to a method and apparatus for frictionally stirring a joint portion of metal materials to join the metal materials.

Background Art

Friction stir welding is known as a technique that the surface of a welding tool (rotary tool) shoulder is brought into contact with surfaces of the materials to be joined while the welding tool is rotated, and the materials are frictionally stirred by utilizing the frictional heat between the shoulder surface and the materials surfaces, so that the materials are welded and joined under a solid-phase state below the melting points. This welding technique is already commercialized primarily for joining aluminum alloys in a variety of industrial fields.

Conventional friction stir welding techniques are mainly classified into one-side friction stir welding and both-side friction stir welding.

The one-side friction stir welding is the most general method and is illustrated, for example, in Fig. 12 of Patent Document 1 (Japanese Patent No. 2712838). This uses a welding tool including a probe formed at a tip end of the tool body and having a diameter smaller than that of the tip end of the tool body and a shoulder formed around a portion of the tip end of the tool body at which the probe is formed, and the welding tool is inserted from one surface side of a joint portion (e.g., butting portion) of two metal plates to be joined, and the tool is rotated to frictionally stir the joint portion by utilizing the resulting frictional heat thereby to join the plates (conventional technique 1).

As an example of application of the one-side friction stir welding to an actual industrial product, Patent Document 2 (Japanese Patent No. 3289650) describes the following two problems and a method for solving the problems.

One of the problems is described. In order to perform friction stir welding without generation of a non-stirred portion on a back surface of a joint portion, a distance between a tool edge inserted in the joint portion and a back surface of a material to be processed or a front surface of a backing plate needs to be suppressed to 0.2 mm or less. When joining long materials, however, a tool is thermally expanded. Thus, it is difficult to control the position of the tool edge with high accuracy and suppress the distance to 0.2 mm or less.

The other problem is described. When the tool edge extends through the joint portion, and materials are to be joined, the tool edge contacts the backing plate placed under the back surface of the joint portion and interferes with the backing plate. Thus, a defect may occur on the back surface of the joint portion, and the materials to be processed may be joined to the backing plate.

The method (conventional technique 2) for solving the problems is illustrated in Figs. 3 and 4 of Patent Document 2 (Japanese Patent No. 3289650). The backing plate placed under the back surface of the joint portion has a groove located immediately under the tool. The materials are joined while the edge of the tool extends through the back surface of the joint portion of the materials to be processed and moves in the groove formed between the backing plate and the back surface of the joint portion.

The both-side friction stir welding includes two types.

The first type of the both-side friction stir welding joins two metal plates by frictionally stirring front and back surfaces of a joint portion (e.g., butting portion) of the two metal plates using a single welding tool that is generally called a bobbin tool, and this type is, for example, illustrated in Fig. 32a of Patent Document 1 (Japanese Patent No. 2712838) (conventional technique 3).

The second type of the both-side friction stir welding arranges two welding tools in opposed relationship on the front and back surface sides of a joint portion (e.g., butting portion) of metal plates in such a manner as not to form clearance between the tip ends of probes and joins the metal plates by frictionally stirring the joint portion from both surface sides, and this type is, for example, illustrated in Fig. 14a of Patent Document 1 (Japanese Patent No. 2712838) (conventional technique 4).

Prior Art Literatures

Patent Documents

Patent Document 1: Japanese Patent No. 2712838
Patent Document 2: Japanese Patent No. 3289650
Patent Document 3: Japanese Patent No. JP-B-3317192

Patent Document 3 is regarded as the closest prior art and it discloses in paragraph 10 that a contact between the workpiece and the backing plate can be prevented by providing a groove along the weld line directly under the weld portion of the backing plate arranged on the backside of the workpiece.

In the case of Patent Document 3 the material softened due to friction stirring cannot build up an inner pressure within the recessed portion and is able to flow in the groove.

Summary of the Invention

Problem to be Solved by the Invention

The conventional techniques 1 to 4 have the following problems.

The first is a problem with economy and service life of tools.

The length of the probe of the welding tool used in the one-side friction stir welding of conventional technique 1 is equal to the thickness of the metal plates.

The length of the probe of the bobbin tool used in the both-side friction stir welding of conventional technique 3 is equal to the thickness of the metal plates as is the case with the one-side friction stir welding. The length of probe of two welding tools that are used in the both-side friction stir welding of conventional technique 4 and arranged in opposed relationship on the front and back surfaces are one half the thickness of the metal plates.

Accordingly, when the thickness of the metal plate differs, a need arises to correspondingly change the probe length as well, so that many rotary tools each having different probe length have to be prepared for metal plates of different thicknesses, thereby worsening economy.

Further, in the bobbin tool used in the both-side friction stir welding of conventional technique 3, the friction stirring by the shoulder located opposite from the driving side is performed by power transmitted through the probe. Therefore, in order to drive the shoulder having a diameter larger than that of the probe, it is necessary to set the section modulus of the probe two or more times larger than that of the tool of a one-side friction stir welding apparatus. Thus, with larger diameter of the probe, the diameter of the shoulder needs to be larger as well, so that a friction stir range is enlarged and this increases consumption energy and the size of the apparatus, thereby worsening economy.

According to conventional technique 2, metal that renders plastic flow during welding is pushed into the groove formed in the back surface of the joint portion. As a result, a penetration bead that has the same shape as the groove is formed in the back surface of the joint portion. The penetration bead that has the same shape as the groove formed in the back surface is mechanically removed by a grinder or cutting. Thus, a non-joint portion on the back surface of the joint portion can be avoided (refer to Paragraphs 0023 to 0028 of Patent Document 2). An increase in the number of processes after the joining and a reduction in the yield of the materials, however, cannot be avoided due to the grinder and cutting process for the penetration bead, thereby worsening economy.

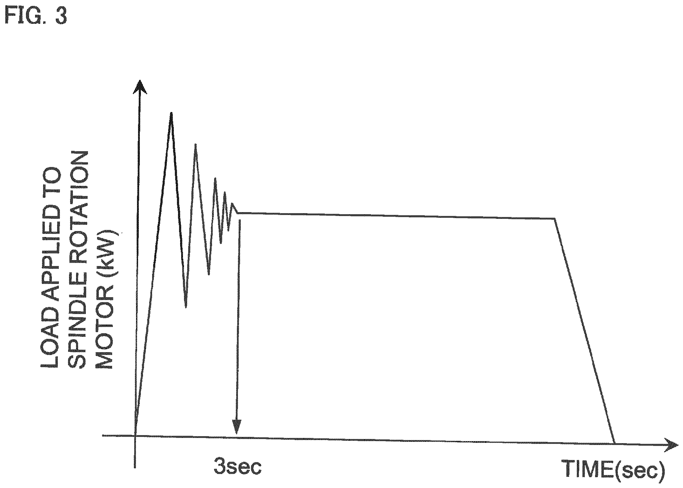

When the groove is filled with the metal, the metal on the surface of the joint portion is reduced and whereby the surface becomes recessed after the joining. Fig. 3(b) shows a projection 8 that is formed on the surface to prevent the surface from becoming recessed. It is, therefore, possible to prevent the surface of the joint portion from becoming recessed (refer to Paragraph 0026 of Patent Document 2). It is, however, necessary to form the projection before the welding. When a material of extrusion formation is used, the projection can be formed in any shape with a molding die. To join plate materials, however, the materials need to be mechanically processed to form the projection. Thus, an increase in the number of mechanical processes and a reduction in the yield of the materials cannot be avoided, thereby worsening economy.

According to conventional technique 2, thermal energy supplied from the rotary tool is released from the backing plate, and whereby thermal loss occurs. Thus, supply of thermal energy equal to or higher than energy required for the friction stir welding is necessary, thereby worsening economy.

The friction stir welding is placed in practical use in the field of nonferrous alloys, such as aluminum, that are materials of relatively low melting points. In general, friction stir welding requires increasing temperature of material to nearly 80% of the melting point with heat by friction stirring. Consequently, in the welding of materials whose melting points exceed 1,000°C, the amount of energy supplied by friction stirring per unit welding length increases and deformation resistance values also increase. Rotary tools therefore require high heat resistance and high toughness, so that expensive materials such as polycrystalline diamonds have to be used, thereby worsening economy.

Additionally, even if such expensive materials as polycrystalline diamonds are used for the tools, service life of tools is reduced due to thermal impacts, tool wear, and a bending stress upon probes, and this hinders friction stir welding from being widely used for materials of high melting point exceeding 1,000°C. When the service life of the tools is short, the tools are frequently replaced, thereby worsening economy.

The second is a problem with a joint defect.

In the bobbin tool of conventional technique 3 (both-side friction stir welding), since the shoulders that are to be placed on the front and back surface sides are united with the probe, a distance between the surfaces of the shoulders is fixed due to the tool structure.

According to conventional technique 4 (both-side friction stir welding), friction stir welding is performed in such a manner as not to form clearance between the tip ends of the probes of the two welding tools that are arranged in opposed relationship on the front and back surface sides of the joint portion, and whereby a distance between the shoulder surfaces of the front and back surfaces is fixed at a joint setting position depending on the thickness of the metal plates.

In the both-side friction stir welding performed under the state that the distance between the surfaces of the shoulders is fixed, when the thickness of the metal plates is slightly changed, the pressure exerted upon the contact surfaces between the shoulders and the metal plates is changed. The change in the surface pressure varies the amount of frictional heat and deteriorates the quality of the joint portion.

In the bobbin tool of conventional technique 3, since the shoulders that are to be placed on the front and back surface sides are united with the probe, a distance between the surfaces of the shoulders is fixed on the front and back sides of a traveling direction of the bobbin tool. Besides the above, the welding tool cannot be inclined, so that it is difficult to give desired surface pressure necessary for the stirring. When the desired surface pressure necessary for the stirring cannot be given, flowablity of the joint portion is reduced, so that joint defect may occur.

A first object of the present invention is to provide a friction stir welding method and apparatus for friction stir welding, which are superior in terms of economy and capable of improving service life of a welding tool (rotary tool).

A second object of the present invention is to provide a friction stir welding method and apparatus for friction stir welding, which are capable of improving the strength of a joint portion and the reliability of welding.

Means for Solving the Problems

To solve the aforementioned problems, according to a first aspect of the present invention, there is provided a friction stir welding method in which a rotary tool and a backing tool are arranged on front and back surface sides of a joint portion of two butted metal plates, the rotary tool frictionally stirs the joint portion and performs friction stir welding on the two metal plates, wherein: the rotary tool includes a tool body having a shoulder portion formed at a tip end portion thereof and at least one protruding portion formed to protrude from the tip end portion of the tool body, the backing tool includes a backing tool body having a pressing force maintaining surface portion formed at a tip end portion thereof and at least one recessed portion which is a cylindrical hole for receiving a tip end of the protruding portion when the two metal plates are to be welded, the method comprising the steps of: arranging the rotary tool and the backing tool in opposed relationship on the front and back surface sides of the joint portion of the two metal plates; rotating the rotary tool; moving the rotary tool in such a direction that the rotary tool approaches the backing tool; inserting the tip end of the protruding portion of the rotary tool into the recessed portion of the backing tool; sandwiching the joint portion between a shoulder surface of the shoulder portion of the rotary tool and a pressing force maintaining surface of the backing tool; pressing the shoulder surface of the shoulder portion of the rotary tool and the pressing force maintaining surface of the backing tool against the front and back surfaces of the joint portion, respectively; moving the rotary tool and the backing tool along the joint portion in synchronization with each other; and frictionally stirring the joint portion in the entire region in the thickness direction of the metal plates by use of the rotary tool.

To solve the aforementioned problems, according to a second aspect of the present invention, there is provided a friction stir welding method in which a rotary tool and a backing tool are arranged on front and back surface sides of a joint portion of two butted metal plates, the rotary tool frictionally stirs the joint portion and performs friction stir welding on the two metal plates, wherein: the rotary tool includes a tool body having a shoulder portion formed at a tip end portion thereof and at least one protruding portion formed to protrude from the tip end portion of the tool body, the backing tool includes a backing tool body having a pressing force maintaining surface portion formed at a tip end portion thereof and at least one recessed portion which is a cylindrical hole for receiving a tip end of the protruding portion when the two metal plates are to be welded, the method comprising the steps of: arranging the rotary tool and the backing tool in opposed relationship on the front and back surface sides of the joint portion of the two metal plates; rotating the rotary tool; moving the rotary tool in such a direction that the rotary tool approaches the backing tool; inserting the tip end of the protruding portion of the rotary tool into the recessed portion of the backing tool; sandwiching the joint portion between a shoulder surface of the shoulder portion of the rotary tool and a pressing force maintaining surface of the backing tool; pressing the shoulder surface of the shoulder portion of the rotary tool and the pressing force maintaining surface of the backing tool against the front and back surfaces of the joint portion, respectively; moving the two metal plates in a welding direction; and frictionally stirring the joint portion in the entire region in the thickness direction of the metal plates by use of the rotary tool.

To solve the aforementioned problems, according to a third aspect of the present invention, in the friction stir welding methods described above, regarding a distance ($\delta$) between the shoulder surface and pressing force maintaining surface of the rotary and backing tools arranged in opposed relationship, at least one of the rotary tool and the backing tool is inclined so that a distance ($\delta 2$) between the surfaces on a back side of a traveling direction of the rotary and backing tools is smaller than a distance ($\delta 1$) between the surfaces on a front side of the traveling direction of the rotary and backing tools.

To solve the aforementioned problems, according to a fourth aspect of the present invention, in the friction stir welding methods described above, the rotary tool is moved by position control to a planned insertion depth in the thickness direction of the metal plates before the start of the friction stir welding; the rotary tool is moved by position control from an edge surface of the joint portion of the two metal plates and starts the friction stir welding while the insertion depth of the rotary tool is maintained; the control is switched to load constant control of controlling an insertion position of the rotary tool so that a load applied to the rotary tool is a predetermined value after the start of the friction stir welding; before the tools reach a joint end portion at which the friction stir welding is terminated, the control is switched to the position control of maintaining an insertion position of the rotary tool at that time and the tools pass through the joint end portion; and the backing tool is moved by the position control to a planned insertion depth in the thickness direction of the metal plates before the start of the friction stir welding and the position control is performed to maintain the position from the start to end of the friction stir welding.

To solve the aforementioned problems, according to a fifth aspect of the present invention, there is provided a friction stir welding apparatus in which a rotary tool and a backing tool are arranged on front and back surface sides of a joint portion of two butted metal plates, and the rotary tool frictionally stirs the joint portion and performs friction stir welding on the two metal plates, comprising: first and second clamping devices that clamp the metal plates, respectively; a tool rotation device to which the rotary tool is attached and that rotationally drives the rotary tool so that the rotary tool and the backing tool are arranged in opposed relationship on the front and back surface sides of the joint portion of the metal plates; a tool position maintaining device that maintains the backing tool at a metal plate back surface position; a tool pressing device that causes the rotary tool attached to the tool rotation device to move in such a direction that the rotary tool approaches the backing tool and presses the rotary tool against the front surface of the joint portion of the metal plates; and moving devices that move the rotary tool attached to the tool rotation device and the backing tool along the joint portion while the rotary tool and the backing tool are synchronized with each other, wherein: the rotary tool includes a tool body having a shoulder portion formed at a tip end portion thereof and at least one protruding portion formed so as to protrude from the tip end portion of the tool body; the backing tool includes a tool body having a pressing force maintaining surface portion formed at a tip end portion thereof and at least one recessed portion which is a cylindrical hole formed at the tip end portion of the tool body and configured to receive a tip end of the protruding portion when the two metal plates are to be welded; the tool pressing device being suitable for applying a pressing force to the joint portion by inserting the tip end of the protruding portion of the rotary tool into the recessed portion of the backing tool, pressing the shoulder surface of the shoulder portion of the rotary tool against the front surface of the joint portion, and sandwiching the joint portion between the shoulder surface of the rotary tool and the pressing force maintaining surface of the backing tool when the rotary tool is moved in a direction so as to approach the backing tool; and the moving devices being suitable for moving the rotary tool and the backing tool along the joint portion under the state that the tip end of the protruding portion of the rotary tool is inserted in the recessed portion of the backing tool, the shoulder surface of the shoulder portion of the rotary tool is pressed against the front surface of the joint portion, and the rotary tool and the backing tool are synchronized with each other, so that the rotary tool frictionally stirs the joint portion in the entire region in a thickness direction of the metal plates.

To solve the aforementioned problems, according to a sixth aspect of the present invention, there is provided a friction stir welding apparatus in which a rotary tool and a backing tool are arranged on front and back surface sides of a joint portion of two butted metal plates, and the rotary tool frictionally stirs the joint portion and performs friction stir welding on the two metal plates, comprising: first and second clamping devices that clamp the metal plates, respectively; a tool rotation device to which the rotary tool is attached and that rotationally drives the rotary tool so that the rotary tool and the backing tool are arranged in opposed relationship on the front and back surface sides of the joint portion of the metal plates; a tool position maintaining device that maintains the backing tool at a metal plate back surface position; a tool pressing device that causes the rotary tool attached to the tool rotation device to move in such a direction that the rotary tool approaches the backing tool and presses the rotary tool against the front surface of the joint portion of the metal plates; and a moving device that causes the clamping devices to move the two metal plates in a welding direction, wherein: the rotary tool includes a tool body having a shoulder portion formed at a tip end portion thereof and at least one protruding portion formed so as to protrude from the tip end portion of the tool body; the backing tool includes a tool body having a pressing force maintaining surface portion formed at a tip end portion thereof and at least one recessed portion which is a cylindrical hole formed at the tip end portion of the tool body and configured to receive a tip end of the protruding portion when the two metal plates are to be welded; the tool pressing device being suitable for applying a pressing force to the joint portion by inserting the tip end of the protruding portion of the rotary tool into the recessed portion of the backing tool, pressing the shoulder surface of the shoulder portion of the rotary tool against the front surface of the joint portion, and sandwiching the joint portion between the shoulder surface of the rotary tool and the pressing force maintaining surface of the backing tool when the rotary tool and the backing tool are moved in a direction so as to approach each other; and the moving device being suitable for moving the two metal plates in the welding direction under the state that the tip end of the protruding portion of the rotary tool is inserted in the cylindrical recessed portion of the backing tool, the shoulder surface of the shoulder portion of the rotary tool is pressed against the front surface of the joint portion, so that the rotary tool frictionally stirs the joint portion in the entire region in a thickness direction of the metal plates.

To solve the aforementioned problems, according to a seventh aspect of the present invention, the friction stir welding apparatus described above further comprising: inclination supporting devices for inclining and supporting at least one of the rotary tool and the backing tool such that, regarding a distance between the shoulder surface and the pressing force maintaining surface of the rotary and backing tools and arranged in opposed relationship, a distance between the surfaces on a back side of a traveling direction of the rotary and backing tools is smaller than a distance between the surfaces on a front side of the traveling direction of the rotary and backing tools.

To solve the aforementioned problems, according to an eighth aspect of the present invention, the friction stir welding apparatus described above further comprises a control device that controls the tool pressing device, the tool position maintaining device, and the moving devices so that the rotary tool is moved by position control to a planned insertion depth in the thickness direction of the metal plates before the start of the friction stir welding; the rotary tool is moved in the welding progress direction by position control from the edge surface of the joint portion of the two metal plates and starts the friction stir welding while the insertion depth of the rotary tool is maintained; after the start of the friction stir welding, the control is switched to load constant control of controlling an insertion position of the rotary tool so that a load applied to the rotary tool is a predetermined value; before the tools reach a joint end portion at which the friction stir welding is terminated, the control is switched to the position control of maintaining an insertion position of the rotary tool at that time and the tools pass through the joint end portion; and the backing tool is moved by the position control to a planned insertion depth in the thickness direction of the metal plates before the start of the friction stir welding and the position control is performed to maintain the position from the start to end of the friction stir welding.

To solve the aforementioned problems, according to a ninth aspect of the present invention, in the friction stir welding apparatus described above, the rotary tool is made of a cemented carbide alloy of sintered tungsten carbide or a tungsten alloy, and the two metal plates to be joined are made of a material having a melting point of 1000°C or higher.

A friction stir welding tool set for frictionally stirring a joint portion of two metal plates to perform friction stir welding and join the two metal plates comprises a rotary tool and a backing tool that are arranged in opposed relationship on front and back surface sides of the joint portion of the two metal plates and frictionally stir the joint portion, wherein: the rotary tool includes a tool body having a shoulder portion formed at a tip end portion thereof and at least one protruding portion formed so as to protrude from the tip end portion of the tool body; the backing tool includes a tool body having a pressing force maintaining surface portion formed at a tip end portion thereof and at least one recessed portion formed at the tip end portion of the tool body and configured to receive a tip end of the protruding portion when the two metal plates are to be welded; the rotary tool and the backing tool are moved along the joint portion and frictionally stir the joint portion in the entire region in a thickness direction of the metal plates under the state that a pressing force is applied to the joint portion by inserting the tip end of the protruding portion of the rotary tool into the recessed portion of the backing tool, pressing a shoulder surface of the shoulder portion of the rotary tool against the front surface of the joint portion, and sandwiching the joint portion between the shoulder surface of the rotary tool and the pressing force maintaining surface of the backing tool.

Effects of the Invention

According to the present invention, the following effects can be obtained.

First, effects (first effects) on economy and tool service life are described.

In the first, second, fifth and sixth aspects of the present invention, since the rotary and backing tools arranged in opposed relationship on the front and back surface sides of the joint portion are separated from each other, an insertion depth of the protruding portion of the rotary tool in the recessed portion of the backing tool (a distance between the tip end of the protruding portion of the rotary tool and the pressing force maintaining surface of the backing tool) can be freely adjusted within a range in which the insertion depth is not zero. Thus, even when the thicknesses of the metal plates are different, the protruding portion of the rotary tool can be inserted into the recessed portion of the backing tool to match with the thicknesses of the metal plates, whereby the metal plates having thicknesses in a range of the length of the protruding portion can be subjected to friction stir welding over the entire range of the joint portion of the metal plates. Thus, since the rotary tool need not be replaced with a rotary tool having different probe length to match with the thicknesses of the metal plates, many rotary tools each having different probe length need not be prepared, the running cost is suppressed and the economy can be improved.

In addition, the rotary and backing tools are separated from each other. Thus, unlike the bobbin tool, it is not necessary to transfer power through the probe to the pressing force maintaining surface portion of the backing tool, the diameter of the probe (protruding portion) can be made smaller than that of the bobbin tool. It is, therefore, possible to prevent the diameter of the shoulder portion from being increased due to an increase in the diameter of the probe. Thus the size of the apparatus will not increase, and the economy can be improved also in this respect.

Since the backing tool moves along the joint portion in synchronization with the rotary tool, a groove-shaped penetration bead or the like is not formed, and also penetration bead removal, which would be otherwise performed by grinding or cutting, is not executed. In addition, since the amount of the metal on the surface of the joint portion is hardly reduced, a projection need not be formed on the surface of the joint portion before the welding. It is, therefore, possible to suppress an increase in the number of processes and a reduction in the yield of the materials and improve the economy.

The materials soften and flow into the recessed portion of the backing tool due to the friction stirring, filling a gap, and the pressing force maintaining surface of the backing tool functions in the same manner as the backing plate of conventional technique 2 (one-side friction stir welding). The pressing force maintaining surface of the backing tool needs only to have an area allowing the pressing force of the rotary tool to be maintained. The area of the pressing force maintaining surface may be smaller than that of the conventional backing plate. As the area of the pressing force maintaining surface is smaller, a heat diffusion range is made small, thereby making it possible to suppress thermal energy loss and improve the economy.

Since thermal energy loss can be suppressed, the amount of heat supplied to the rotary tool can be reduced. Thus, as in the ninth aspect of the present invention, since the rotary tool may be made of cemented carbide alloy of sintered tungsten carbide or a tungsten alloy, an expensive material such as polycrystalline diamond need not be used for the material of the rotary tool, thereby making it possible to improve the economy.

Since the amount of heat supplied to the rotary tool can be reduced, the service life of the tools can be improved.

In the ninth aspect of the present invention, since the rotary tool is made of a cemented carbide alloy of sintered tungsten carbide, a tungsten alloy, or the like, the rotary tool having the long service life and superior in terms of economy can be provided for friction stirring of metal plates whose melting points are 1000°C or higher.

Next, effects (second effects) on improvement of the strength of the joint portion and the reliability of the welding are described.

Since the rotary tool frictionally stirs the joint portion of the metal plates in the entire region in the thickness direction of the plates, the strength of the joint portion can be improved.

Since the rotary tool and the backing tool are separated from each other and the distance (distance between edges of the tools in the thickness direction of the metal plates) between the rotary and backing tools can be adjusted, load control can be applied for pressing of the rotary tool against the joint portion as in the fourth and eighth aspects of the present invention.

In the fourth and eighth aspects of the present invention, applying the load control in such a way, it is possible to prevent pressure changes between the surfaces of the joint portion of the metal plates and the shoulder surface of the rotary tool and the pressing force maintaining surface of the backing tool due to a slight change in the thickness of the metal plates. Further it is possible to reduce a variation in a thermal load, suppress a reduction in quality (joint defect) of the joint portion J, and join the metal plates with high reliability.

Since the rotary tool and the backing tool are separated from each other, the axes of the tools can be inclined to each other. Specifically, the distance $\delta2$ between the surfaces on the back side of the traveling direction can be smaller than the distance $\delta1$ between the surfaces on the front side of the traveling direction as in the third and seventh aspects of the present invention.

In the third and seventh aspects of the present invention, at least one of the rotary tool and the backing tool is inclined so that the distance $\delta2$ between the surfaces on the back side of the traveling direction is smaller than the distance $\delta1$ between the surfaces on the front side of the traveling direction. By doing so, the pressing force applied to the metal plates can be increased, and the flowability of the joint portion by the friction stir welding can be enhanced, with the result that it is possible to suppress a reduction in quality (joint defect) of the joint portion J and joint the metal plates with high reliability.

The materials soften and flow into the recessed portion of the backing tool due to the friction stirring, filling a gap. Thus, since the protruding portion of the rotary tool, inserted in the recessed portion of the backing tool, undergoes inner pressure within the recessed portion through the softened materials filling the gap, a vibration damping force acts thereon and thus the rotary tool has an improved vibration damping performance in the radial direction. As a result, chatter vibration is suppressed and uniform friction stirring is possible, and thus also in this respect, it is possible to suppress joint defect and join the metal plates with high reliability.

Brief Description of the Drawings

[Fig. 1]

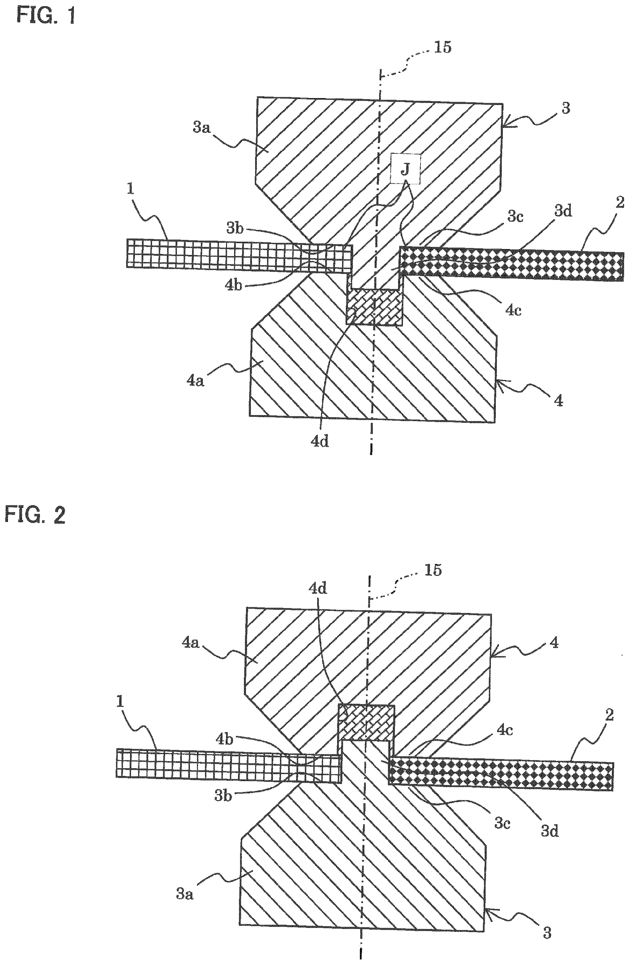

Fig. 1 is an enlarged cross sectional view of tip end portions of a rotary tool and backing tool for friction stir welding according to an embodiment of the present invention and shows the state in which the rotary tool and the backing tool are used when welding is performed.

[Fig. 2]

Fig. 2 is a diagram showing the state in which the rotary tool and the backing tool are used when the welding is performed in the case where the positions of the rotary and backing tools are reversed with respect to front and back surfaces of a joint portion.

[Fig. 3]

Fig. 3 is a time chart showing a change in a load applied to a spindle rotation motor of the rotary tool with respect to a length of a part that has been welded by the rotary tool performing the friction stir welding (time after the start of the welding).

[Fig. 4]

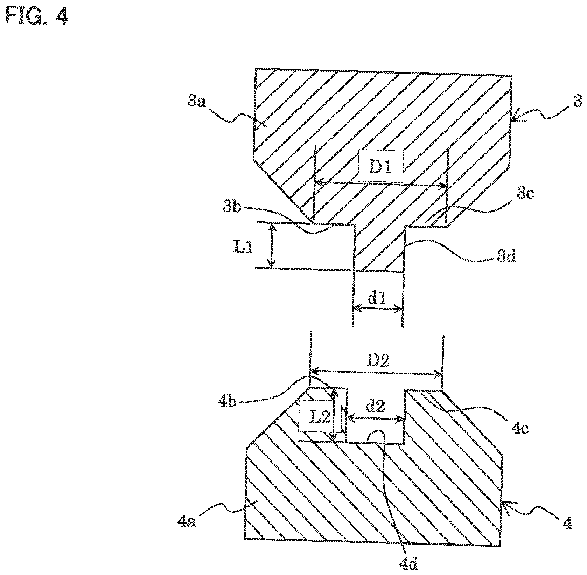

Fig. 4 is a diagram illustrating relationships of dimensions of parts of the rotary tool and backing tool.

[Fig. 5]

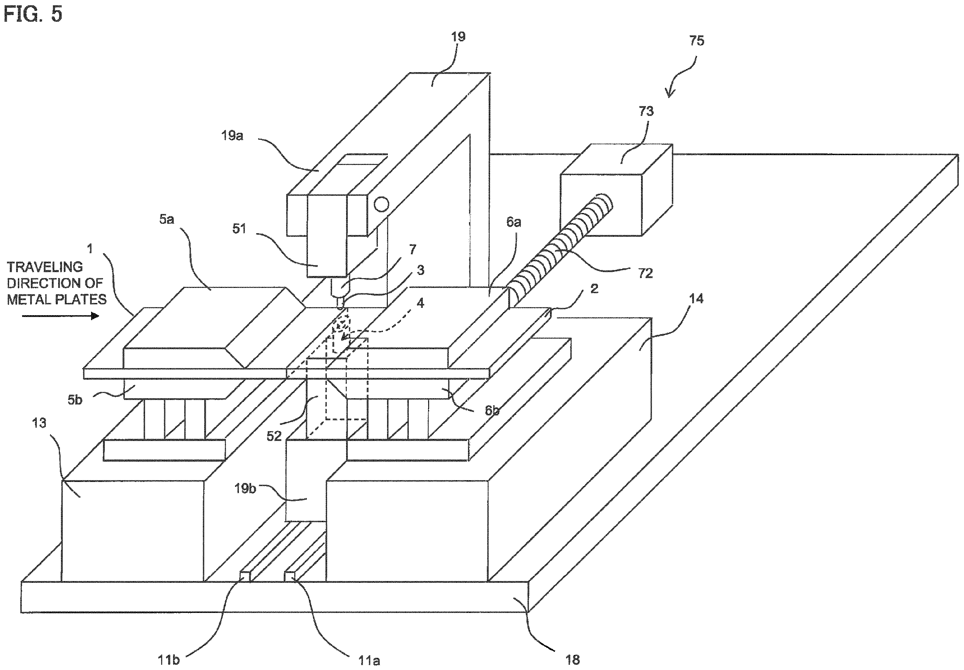

Fig. 5 is a perspective view of a friction stir welding apparatus (first apparatus) according to the embodiment of the present invention, with a part thereof omitted.

[Fig. 6]

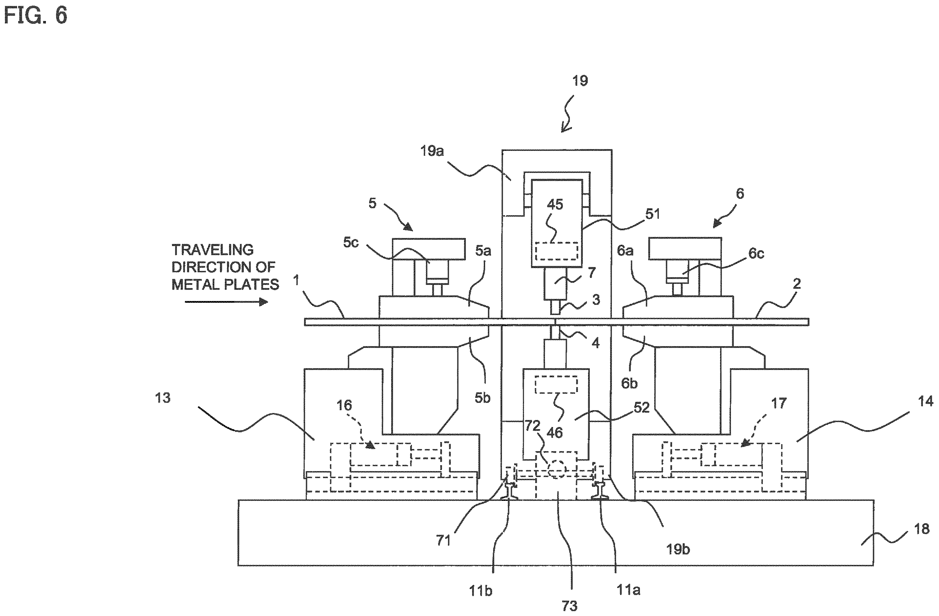

Fig. 6 is a schematic front view of a main part of the friction stir welding apparatus shown in Fig. 5.

[Fig. 7]

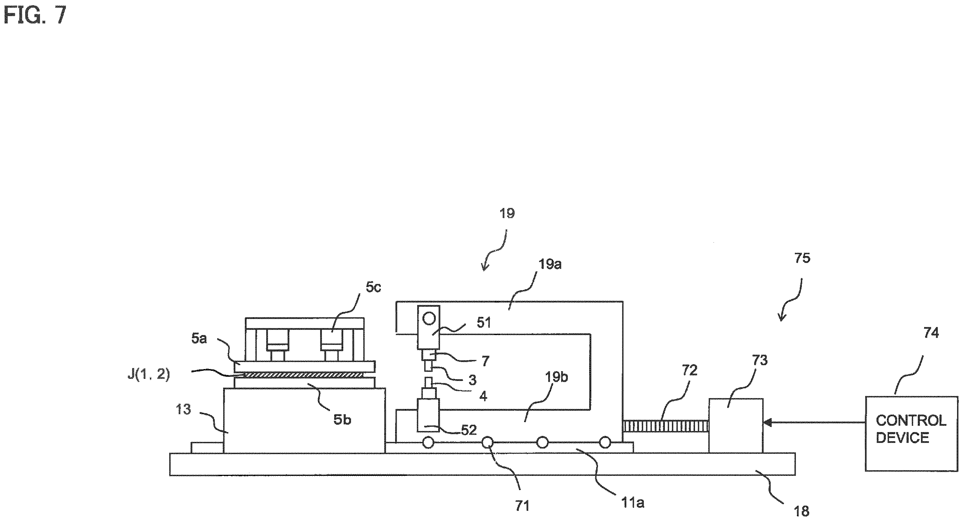

Fig. 7 is a schematic side view of the main part of the friction stir welding apparatus shown in Fig. 5.

[Fig. 8]

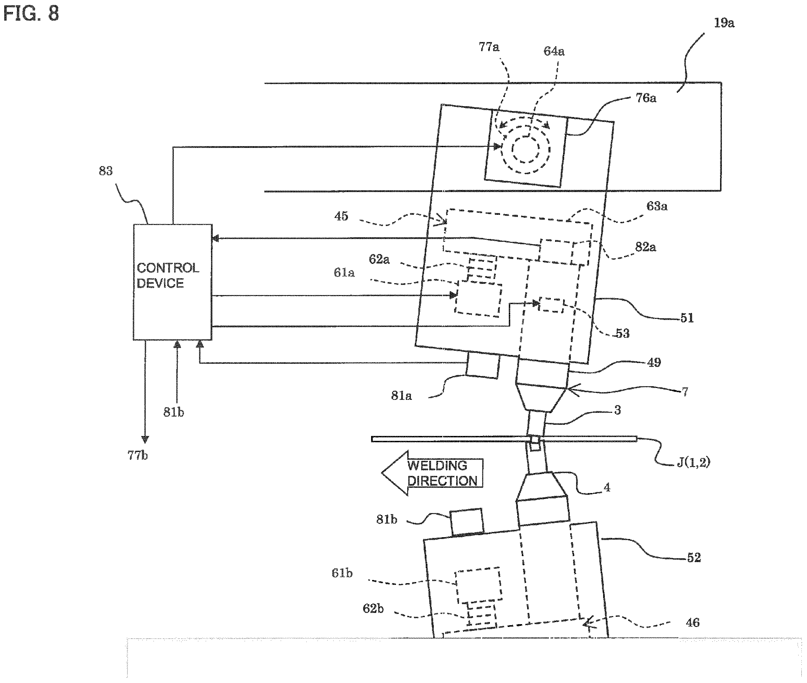

Fig. 8 is a diagram illustrating an upper half of the friction stir welding apparatus shown in Fig. 5 with a control system.

[Fig. 9]

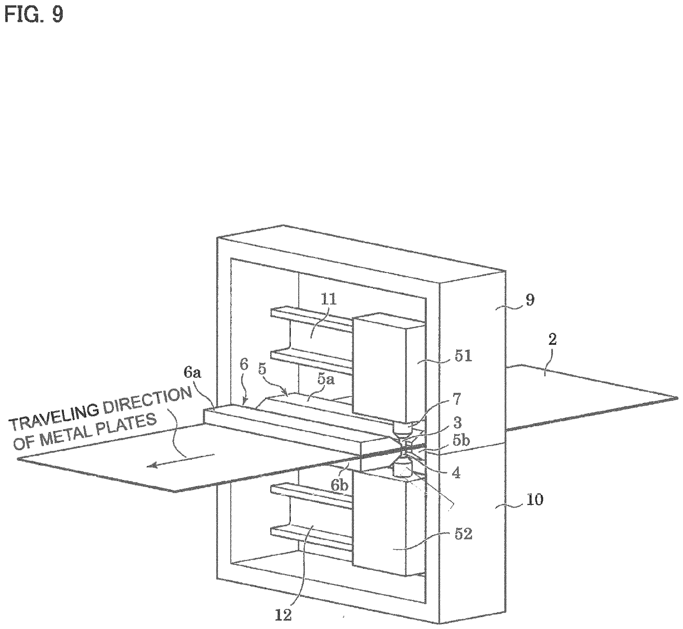

Fig. 9 is a perspective view of another friction stir welding apparatus (second apparatus), with a part thereof omitted, showing a diagram of a scheme for electrically synchronizing axes of the rotary tool and backing tool with each other.

[Fig. 10]

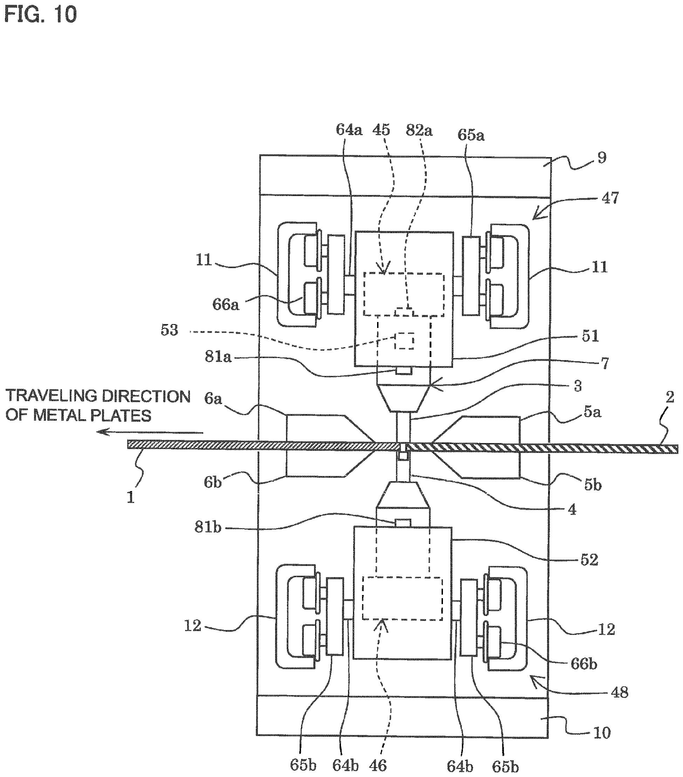

Fig. 10 is a schematic front view of a main part of the friction stir welding apparatus shown in Fig. 9.

[Fig. 11]

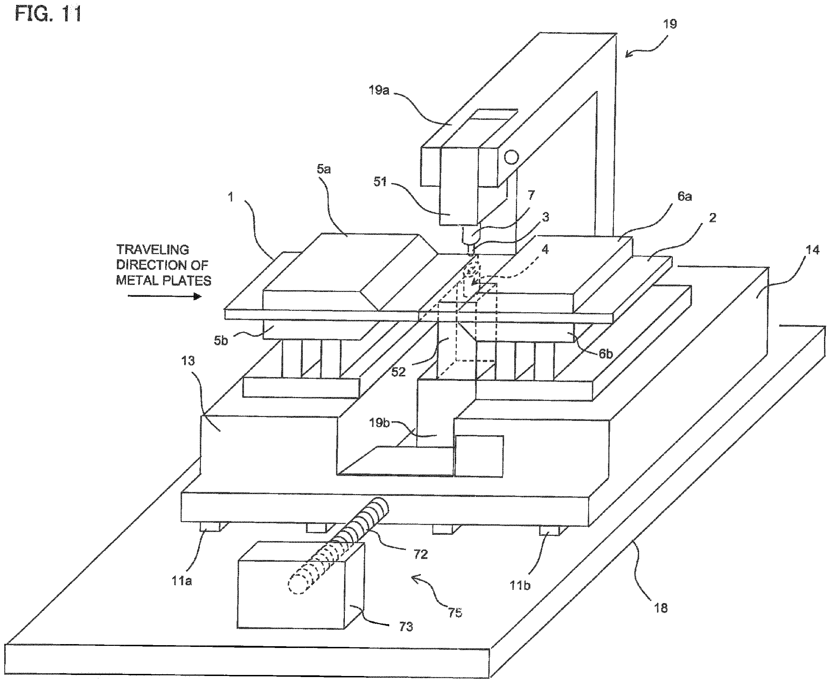

Fig. 11 is a perspective view of another friction stir welding apparatus (third apparatus) and shows a diagram of a scheme for moving butting portions of metal plates in a welding direction upon welding, without showing a part of the diagram.

[Fig. 12]

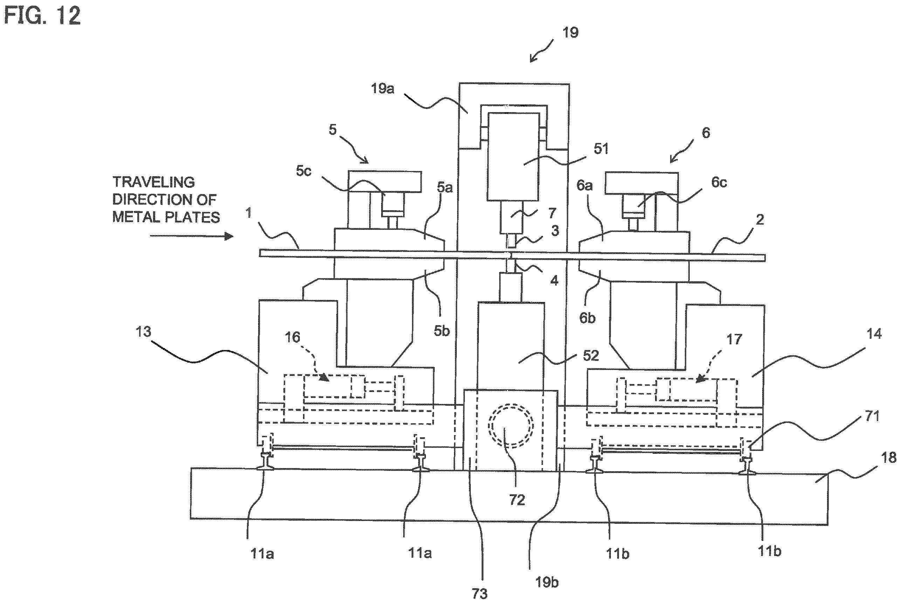

Fig. 12 is a schematic front view of a main part of the friction stir welding apparatus shown in Fig. 11.

[Fig. 13]

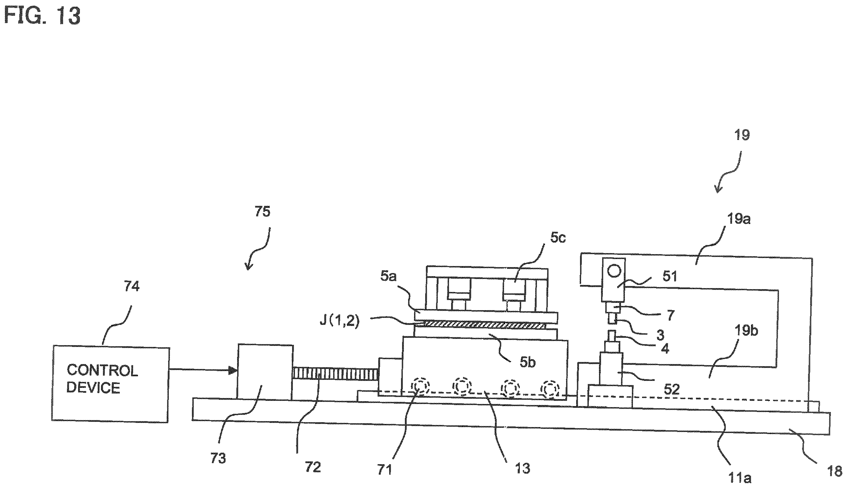

Fig. 13 is a schematic side view of the main part of the friction stir welding apparatus shown in Fig. 11.

[Fig. 14]

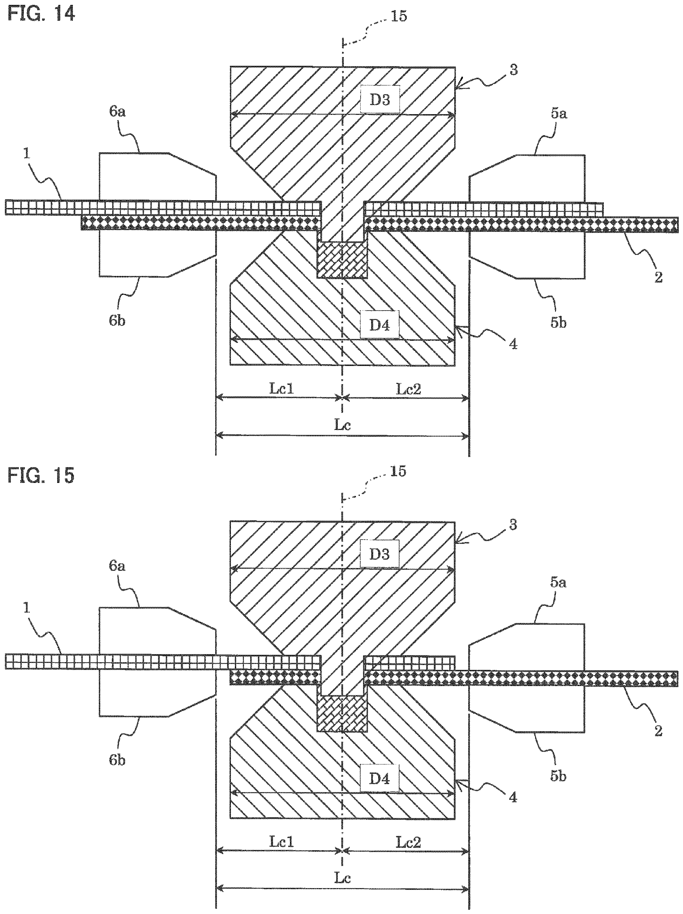

Fig. 14 is a diagram showing a state in which two metal plates are welded together in the case where the welding method according to the present invention is applied to the lap welding of the two metal plates and showing a clamping method.

[Fig. 15]

Fig. 15 is a diagram showing another state in which two metal plates are welded together in the case where the welding method according to the present invention is applied to the lap welding of the two metal plates and showing a clamping method.

[Fig. 16]

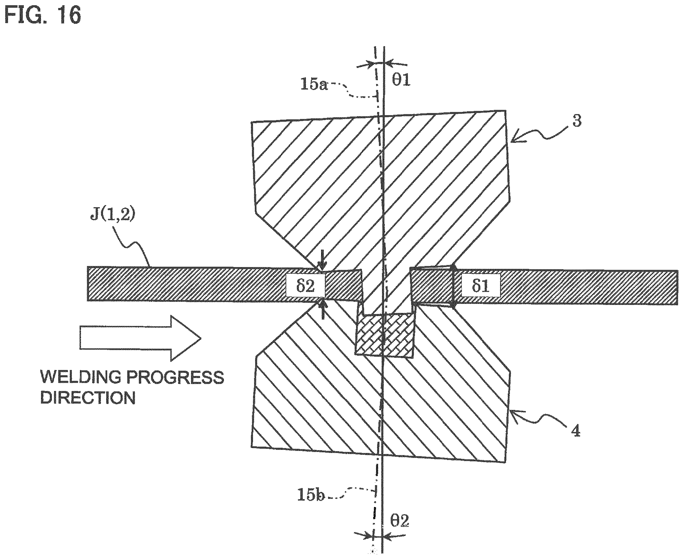

Fig. 16 is a cross-sectional view describing inclinations of the tools.

[Fig. 17]

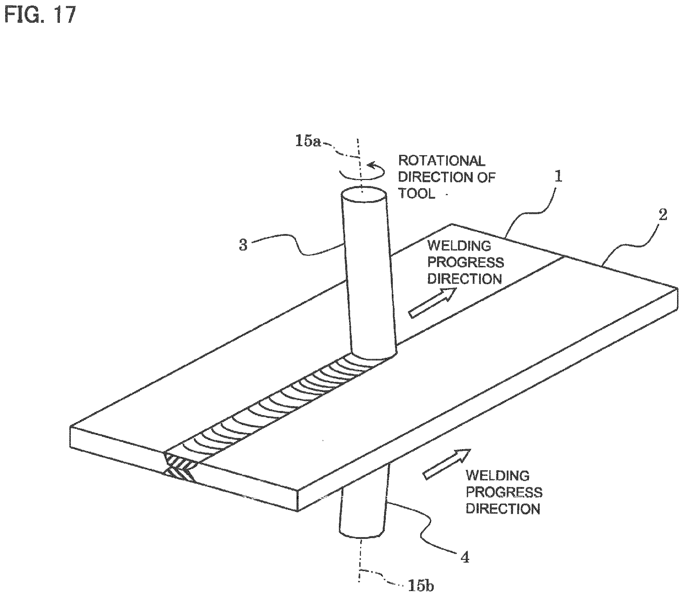

Fig. 17 is a perspective view describing the inclinations of the tools.

[Fig. 18]

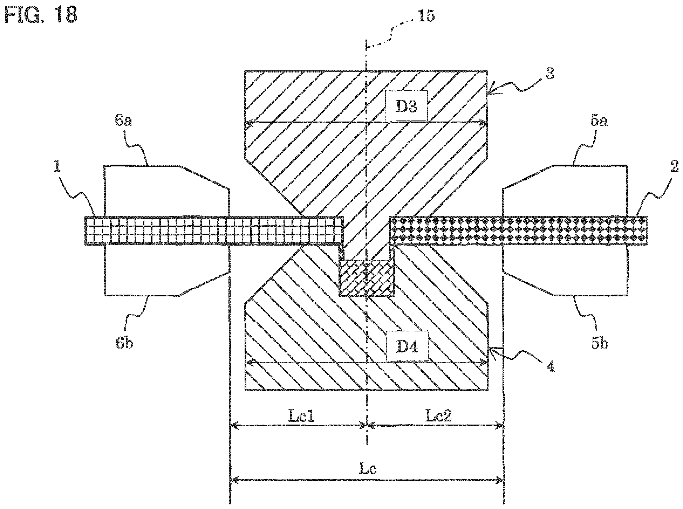

Fig. 18 is a diagram showing positional relationships between the rotary tool, the backing tool, and entry and delivery clamping devices (i.e., a distance between the entry and delivery clamping devices).

[Fig. 19]

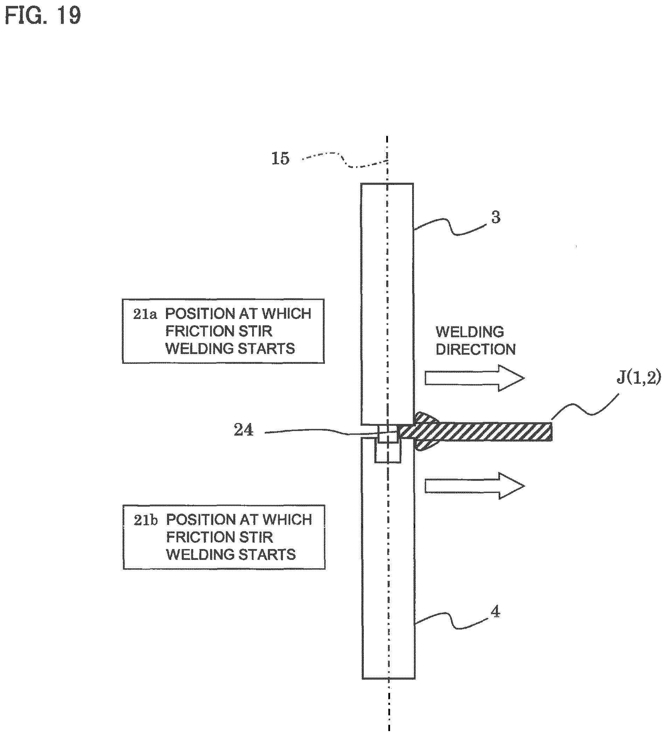

Fig. 19 is a diagram describing the case where inclination angles of the rotary and backing tools are set to zero (the tools are not inclined) and the rotary and backing tools are inserted from an edge surface of the joint portion.

[Fig. 20]

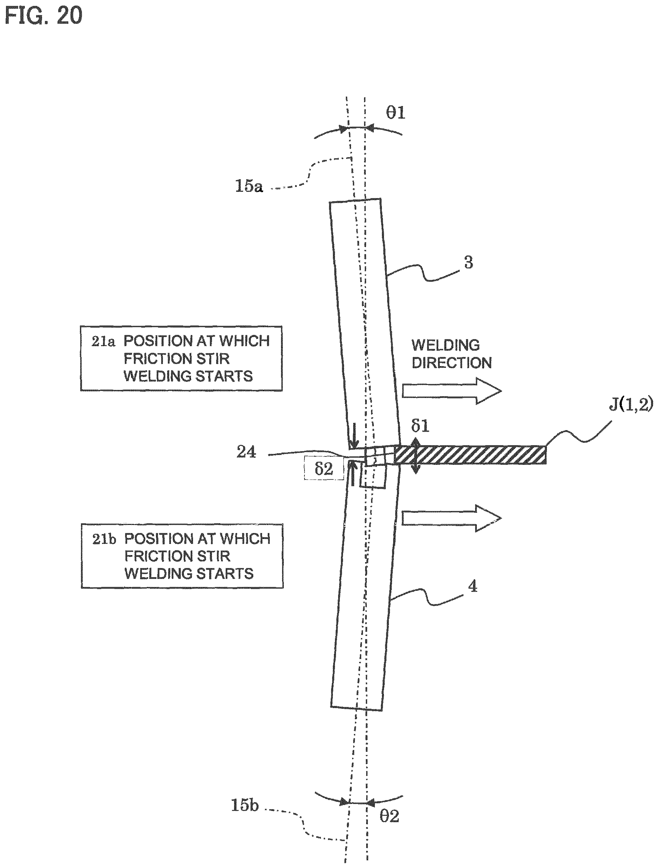

Fig. 20 is a diagram showing a state in which the rotary tool and the backing tool are inclined at certain angles and inserted from the edge surface of the joint portion.

[Fig. 21]

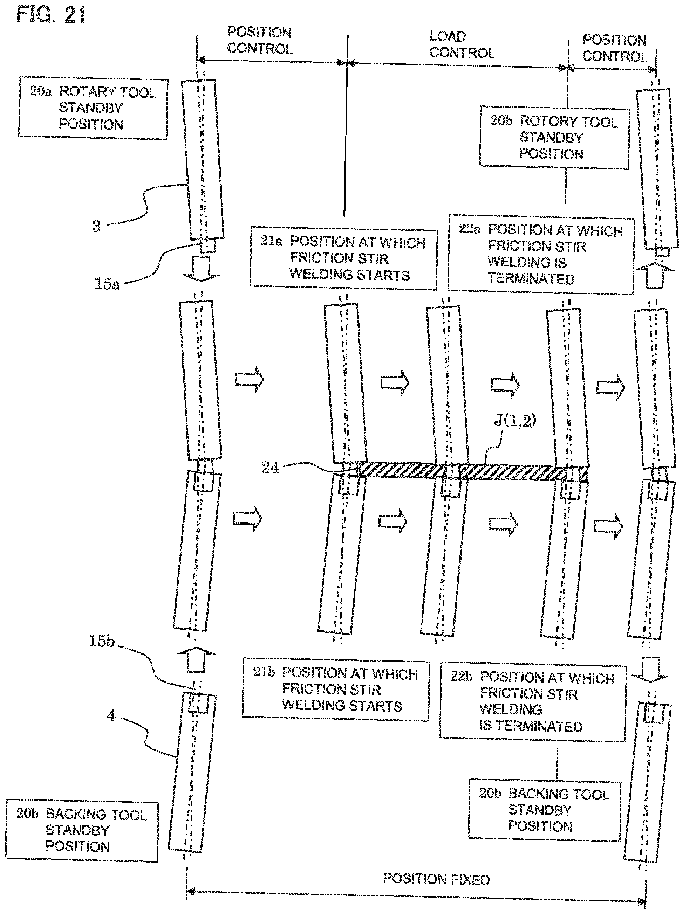

Fig. 21 is a diagram showing an operation control (first control) of performing the friction stir welding without plunging while the rotary and backing tools are inclined.

[Fig. 22]

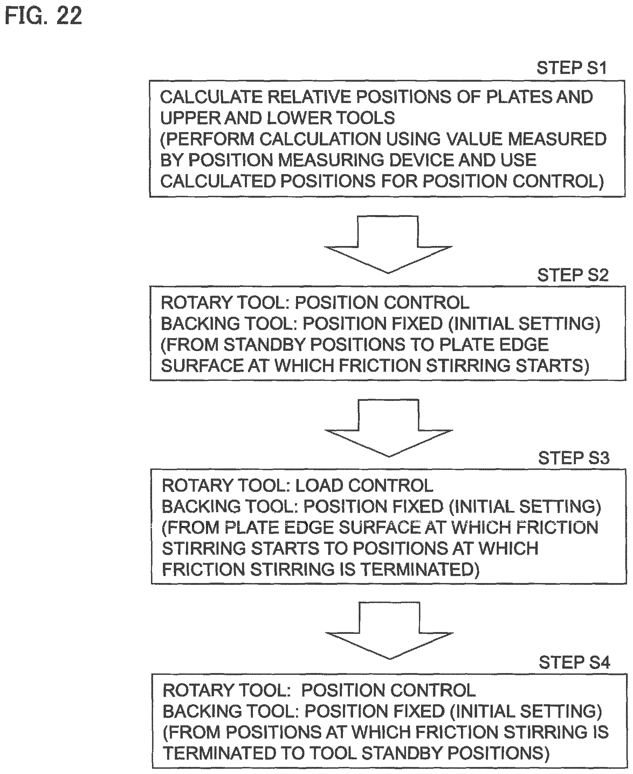

Fig. 22 is a control flowchart showing procedures of a process (first control) that is performed by a control device in the operation control shown in Fig.21.

[Fig. 23]

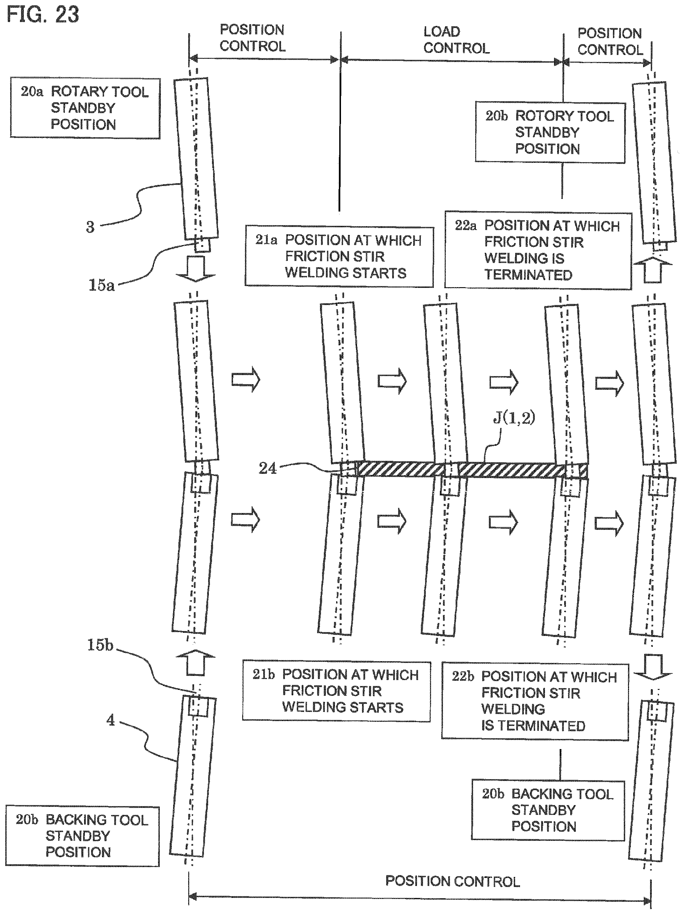

Fig. 23 is a diagram showing another operation control (second control) of performing the friction stir welding without plunging while the rotary and backing tools are inclined.

[Fig. 24]

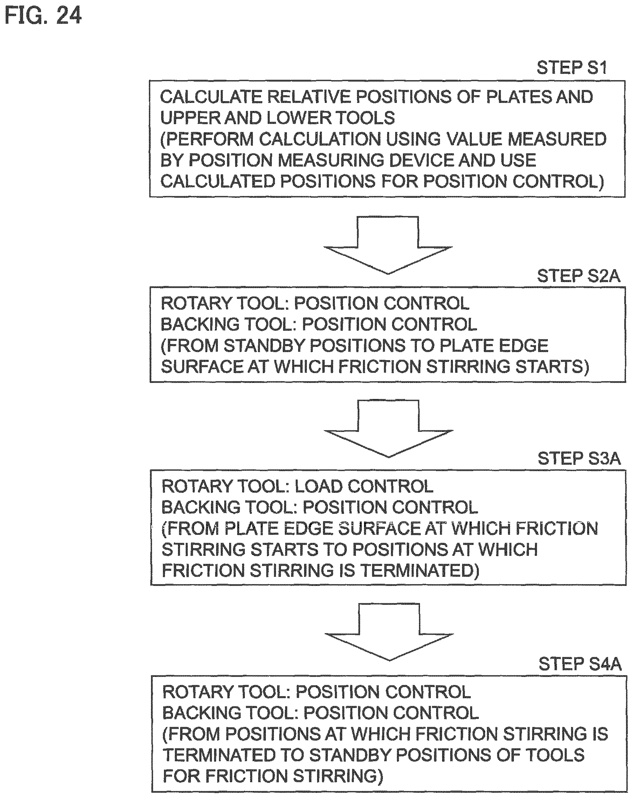

Fig. 24 is a control flowchart showing procedures of a process (second control) that is performed by the control device in the operation control shown in Fig. 23.

[Fig. 25]

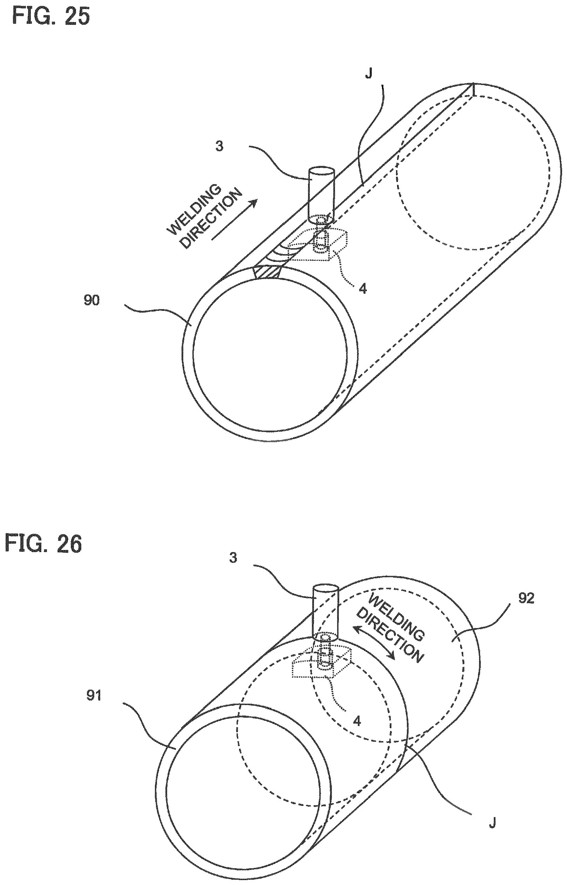

Fig. 25 is a perspective view showing the case where a metal plate is formed in a cylindrical shape, both end portions of the metal plate are butted, and the friction stir welding is performed on the butted portions so that the metal plate forms an integrated cylindrical member.

[Fig. 26]

Fig. 26 is a perspective view showing friction stir welding that is performed to join together two pipe members that form a single long member.

[Fig. 27A]

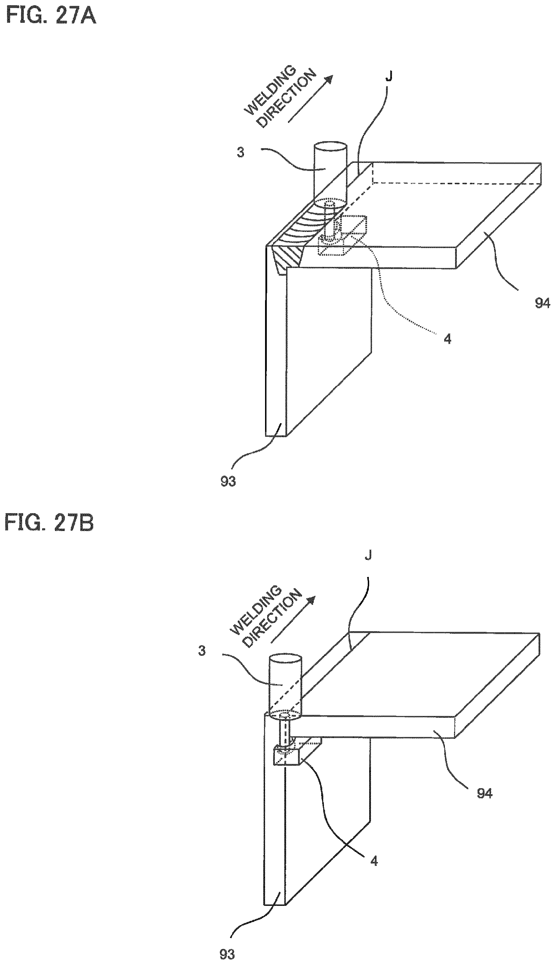

Fig. 27A is a perspective view showing a state in which two metal plates are arranged so as to form an L shape and the friction stir welding is performed on the two metal plates.

[Fig. 27B]

Fig. 27B is a perspective view showing a state in which two metal plates are arranged so as to form an L shape and the friction stir welding starts to be performed on the two metal plates.

[Fig. 28]

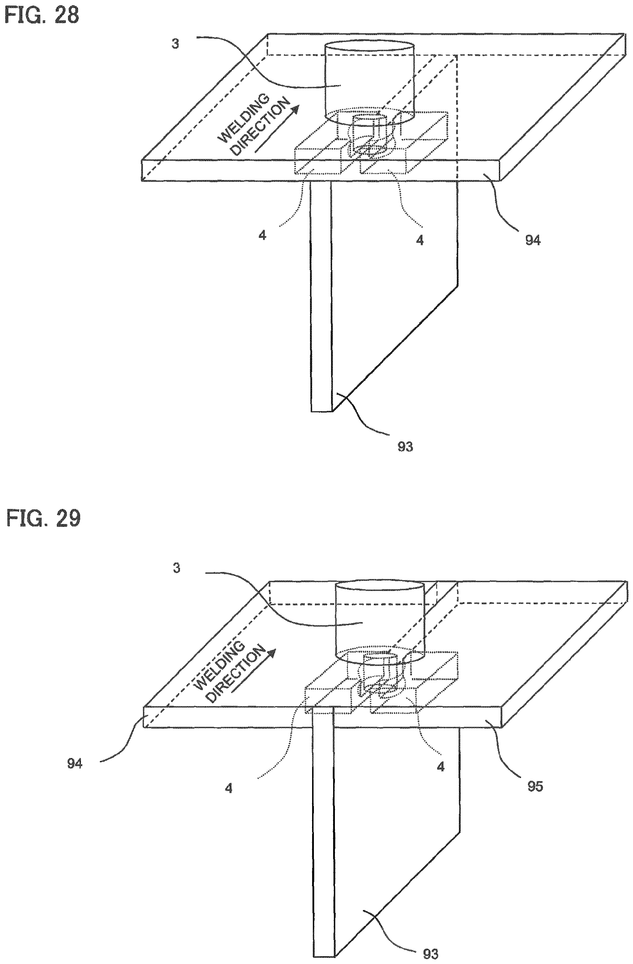

Fig. 28 is a perspective view showing a state in which two metal plates are arranged so as to form a T shape and the friction stir welding is performed.

[Fig. 29]

Fig. 29 is a perspective view showing a state in which three metal plates are arranged so as to form a T shape and the friction stir welding is performed.

[Fig. 30]

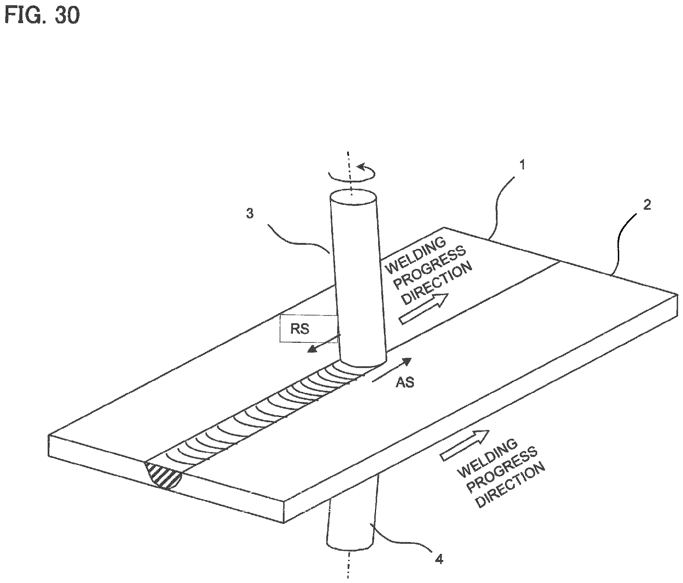

Fig. 30 is a diagram showing relationships between a rotational direction of the rotary tool, an advancing side, and a retreating side.

[Fig. 31]

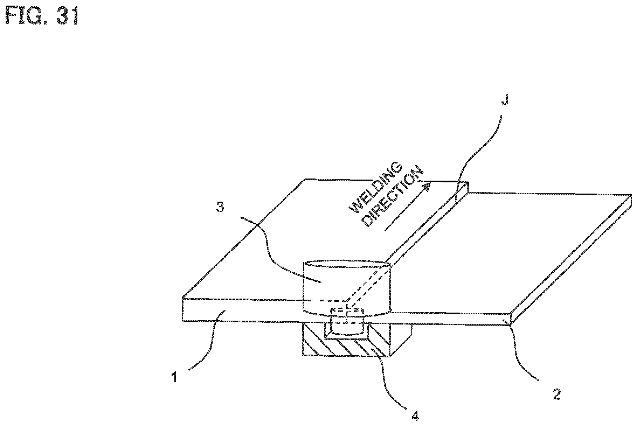

Fig. 31 is a diagram describing a case (first case of different thicknesses) where a step forms on the front surface side of two metal plates.

[Fig. 32]

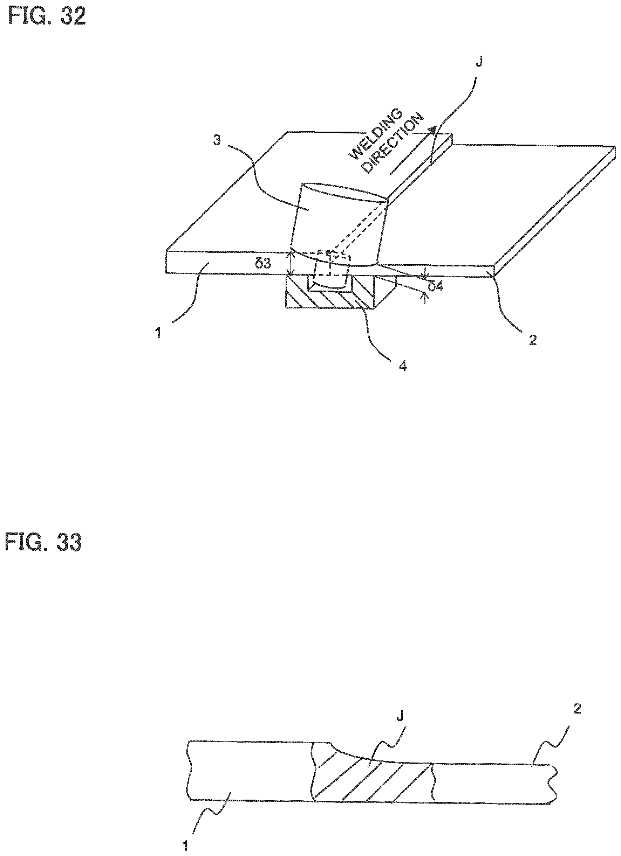

Fig. 32 is a diagram showing a state in which a tail end of the rotary tool is inclined toward the side of a metal plate with a smaller thickness in the case shown in Fig. 31.

[Fig. 33]

Fig. 33 is a conceptual diagram showing a cross-sectional shape of a joint portion after the welding (in the first case of the different thicknesses).

[Fig. 34]

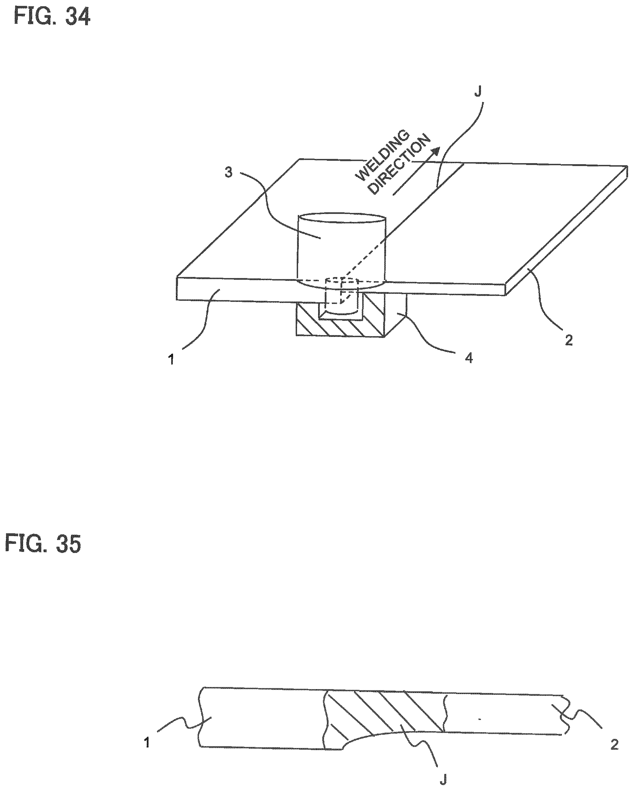

Fig. 34 is a diagram showing a case (second case of different thicknesses) where a step forms on the back surface side of the two metal plates.

[Fig. 35]

Fig. 35 is a conceptual diagram showing a cross-sectional shape of a joint portion after the welding (in the second case of the different thicknesses).

[Fig. 36]

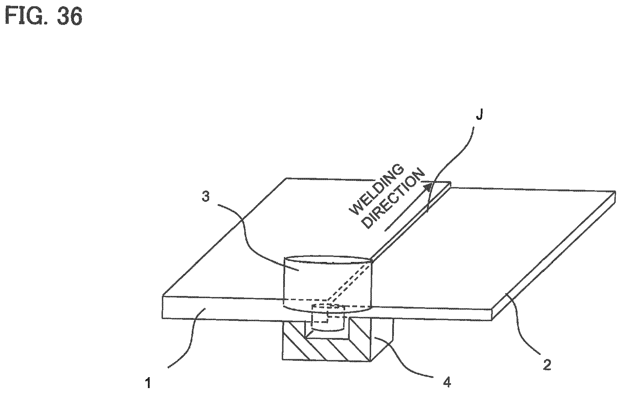

Fig. 36 is a diagram showing a case (third case of different thicknesses) where steps occur on the front and back surface sides of the two metal plates.

[Fig. 37]

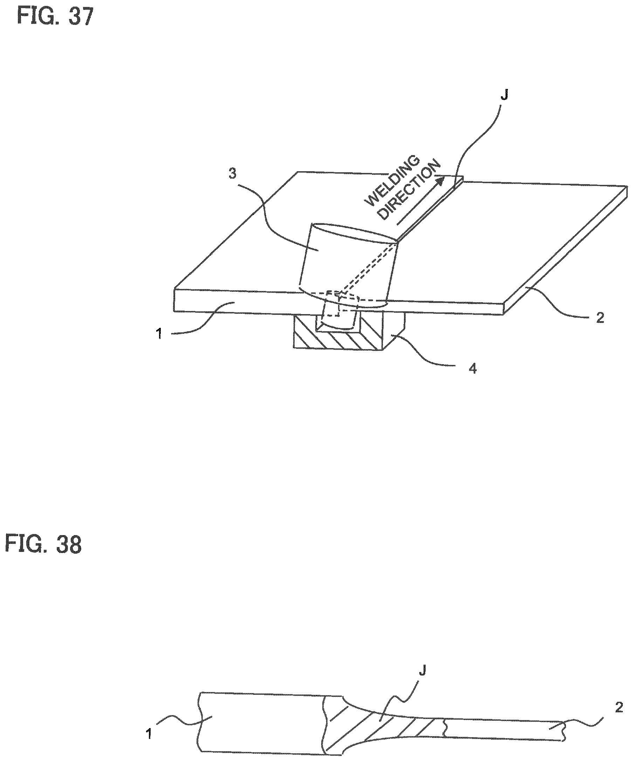

Fig. 37 is a diagram illustrating a state in which the rotary tool is inclined toward the side of the metal plate with the smaller thickness in the case shown in Fig. 36.

[Fig. 38]

Fig. 38 is a conceptual diagram showing a cross-sectional shape of a joint portion after the welding (in the third case of the different thicknesses).

Mode for Carrying Out the Invention

Next, an embodiment of the present invention is described with reference to the accompanying drawings.

<Configuration of tool set and summary of method>

Fig. 1 is an enlarged cross sectional view of tip end portions of a tool set for the embodiment. Fig. 1 shows a state in which the tool set is used when the welding is performed. The welding is butt welding as an example.

In Fig. 1, the tool set for the embodiment has a rotary tool 3 and a backing tool 4 that are arranged in opposed relationship on the sides of front and back surface of a joint portion J of two metal plates 1, 2 and frictionally stirs the joint portion J. The tool set is a collective term of the rotary tool 3 and the backing tool 4. The rotary tool 3 includes a tool body 3a having a shoulder portion 3c formed at a tip end portion thereof and having a shoulder surface 3b configured to press the joint portion J and a pin-shaped protruding portion (probe) 3d formed at the tip end portion of the tool body 3a and protruding from the shoulder surface 3b. The backing tool 4 includes a tool body 4a having a pressing force maintaining surface portion 4c with a pressing force maintaining surface 4b for receiving a pressing force necessary for the friction stir welding formed at the tip end portion of the tool body 3a and having a recessed portion 4d formed at the pressing force maintaining surface 4b of the tool body 4a and configured to receive the tip end of the protruding portion 3d therein when the two metal plates 1, 2 are to be welded.

The protruding portion (probe) 3d of the rotary tool 3 has a cylindrical outer shape, and the recessed portion 4d of the backing tool 4 preferably has a cylindrical inner shape as well. The shapes of the pressing force maintaining surface 4b and recessed portion 4d may be changed according to the shapes of the metal plates to be welded (described later).

The welding method is performed using the tool set, and its summary is described below. First, the rotary tool 3 and the backing tool 4 are arranged in opposed relationship on the front and back surface sides of the joint portion J of the two metal plates 1, 2. Next, the backing tool 4 is held so that the pressing force maintaining surface 4b of the backing tool 4 is located on the back surface side of the joint portion J. Then, the rotary tool 3 is rotated and moved in a direction to approach the backing tool 4. The tip end of the protruding portion 3d of the rotary tool 3 is inserted in the recessed portion 4d of the backing tool 4 so that the joint portion J is sandwiched between the shoulder surface 3b and the pressing force maintaining surface 4b and the shoulder surface 3b of the rotary tool 3 is pressed against the front surface of the joint portion J. A pressing force of the rotary tool 3 against the front surface of the joint portion J is maintained by the pressing force maintaining surface 4b of the backing tool 4 arranged on the back surface side of the joint portion J. Under the state (in which the tip end of the protruding portion 3d of the rotary tool 3 is inserted in the recessed portion 4d of the backing tool 4, and the shoulder surface 3b of the rotary tool 3 and the pressing force maintaining surface 4b of the backing tool 4 are pressed against the front and back surfaces of the joint portion J), the rotary tool 3 is moved along the joint portion J while being rotated. The protruding portion 3d extends through an entire region of the joint portion J in the thickness direction of the metal plates when the friction stir welding is performed during the movement of the rotary tool 3. Thus, the entire region of the joint portion J in the thickness direction of metal plates is frictionally stirred, and the two metal plates 1, 2 are joined in the entire region of the joint portion J in the thickness direction of the metal plates.

<Summary of Effects>

In the welding method according to the present embodiment, since the rotary and backing tools 3 and 4 arranged in opposed relationship on the front and back surface sides of the joint portion J are separated from each other, the insertion depth of the protruding portion 3d of the rotary tool 3 in the recessed portion 4d of the backing tool 4 (a distance between the tip end of the protruding portion 3d and the pressing force maintaining surface 4d) can be freely adjusted within a range in which the insertion depth is not zero. Thus, even when the thicknesses of the metal plates 1 and 2 are different, the protruding portion 3d of the rotary tool 3 can be inserted into the recessed portion 4d of the backing tool 4 to match with the thicknesses of the metal plates 1 and 2, whereby the metal plates 1 and 2 having thicknesses in a range of the length of the protruding portion 3d can be subjected to friction stir welding over the entire range of the joint portion J. Thus, since the rotary tool need not be replaced with a rotary tool having different probe length to match with the thicknesses of the metal plates, many rotary tools each having different probe length need not be prepared, the running cost is suppressed and the economy can be improved.

In addition, the rotary tool 3 and the backing tool 4 are separated from each other. Thus, unlike the bobbin tool, it is not necessary to transfer power through the probe to the backing tool 4. The diameter of the probe (protruding portion) 3d can be made smaller than that of the bobbin tool. It is, therefore, possible to prevent the diameter of the shoulder portion from being increased due to an increase in the diameter of the probe. Thus the size of the apparatus will not increase, and the economy can be improved also in this respect.

In addition, since the rotary tool 3 frictionally stirs the joint portion J of the metal plates 1 and 2 in the entire region of the joint portion J in the thickness direction of the metal plates, the strength of the joint portion J can be improved.

Further, since the rotary and backing tools 3 and 4 are separated from each other and the distance between the rotary and backing tools 3 and 4 can be adjusted, the load control can be applied for pressing of the rotary tool against the joint portion (described later). Since the load control can be applied in this way, by adjusting the insertion depth of the protruding portion 3d of the rotary tool 3 into the recessed portion 4d of the backing tool 4 depending on a slight change in the thickness of the metal plates (thickness of the joint portion), the friction stir welding can be performed without fixing the distance between the shoulder surface 3b of the rotary tool 3 and the pressing force maintaining surface 4b of the backing tool 4. This can prevent pressure changes between the shoulder surface 3b of the rotary tool 3 and the pressing force maintaining surface 4b of the backing tool 4 and the front and back surfaces of the joining portion of the metal plates due to the slight change in the thickness of the metal plates, and can reduce a variation in a thermal load, so that a reduction in quality (joint defect) of the joint portion J can be prevented and the metal plates can be joined with high reliability.

In addition, in the welding method according to the present embodiment, since the rotary tool 3 and the backing tool 4 are separated from each other, the axes 15 of the tools can be inclined. Specifically, regarding a distance $\delta$ between the shoulder surface 3b and pressing force maintaining surface 4b of the rotary and backing tools 3 and 4 arranged in opposed relationship, a distance $\delta 2$ between the surfaces on a back side of a traveling direction of the tools can be smaller than a distance $\delta 1$ between the surfaces on a front side of a traveling direction of the tools by inclining at least one of the tool axes 15 (described later). Thus, the pressing force applied to the joint portion J can be increased, and the flowability of the joint portion by the friction stir welding can be improved and thus it is possible to suppress a joint defect and join the metal plates with high reliability.

Fig. 2 is a diagram showing the state in which the rotary tool 3 and the backing tool 4 are used when the welding is performed in the case where the positions of the rotary and backing tools 3 and 4 are reversed with respect to the front and back surfaces of the joint portion J. In Fig. 1, the rotary tool 3 that has the protruding portion (probe) 3d formed at the tip end portion of the tool body 3a is arranged on the front surface side of the joint portion J, and the backing tool 4 that has the recessed portion 4d formed at the tip end portion of the backing tool body 4a is arranged on the back surface side of the joint portion J. As shown in Fig. 2, even when the positions of the rotary and backing tools 3 and 4 are reversed with respect to the front and back surfaces of the joint portion J, the aforementioned effects do not change and the following effects do not change.

<Materials>

Materials of the rotary tool 3 and backing tool 4 are described below.

The one-side friction stir welding is placed in practical use in the field of nonferrous alloys, such as aluminum, that are materials of relatively low melting points. In general, friction stir welding requires increasing temperature of material to nearly 80% of the melting point with heat by friction stirring. Consequently, in the welding of materials whose melting points exceed 1,000°C, the amount of energy supplied by friction stirring per unit welding length increases and deformation resistance values also increase. The rotary tool 3 therefore requires high heat resistance and high toughness, so that expensive materials such as polycrystalline diamonds have to be used.

Additionally, even if such expensive materials are used for the tools, service life of the tools is reduced due to thermal impacts, tool wear, and a bending moment acting upon probes and protruding portions, etc., and this hinders friction stir welding from being widely used for materials of high melting point exceeding 1,000°C.

In the present embodiment, the materials softened by friction stirring flows into the recessed portion 4d of the backing tool 4 to fill a gap. Thus, the pressing force maintaining surface 4b of the backing tool 4 functions in the same manner as a conventional backing plate. The pressing force maintaining surface 4b of the backing tool 4 needs only to have an area allowing the pressing force of the rotary tool 3 to be maintained. The area of the pressing force maintaining surface 4b may be smaller than that of the conventional backing plate. Since the area of the pressing force maintaining surface 4b is small, a heat diffusion range can be small, and it is possible to suppress thermal energy loss and improve economy.

Since thermal energy loss can be suppressed, the amount of heat supplied to the rotary tool 3 can be reduced. Thus, since the rotary tool may be made of a cemented carbide alloy of sintered tungsten carbide or a tungsten alloy, an expensive material such as polycrystalline diamond need not be used for the material of the rotary tool 3, thereby making it possible to improve the economy.

Since the rotary tool 3 is made of a cemented carbide alloy of sintered tungsten carbide, a tungsten alloy, or the like, the rotary tool having the long service life and superior in terms of economy can be provided for friction stirring of metal plates whose melting points are 1000°C or higher.

In addition, since the material of the backing tool 4 has a high heat retaining property (i.e., has a low heat transfer coefficient), it is possible to further reduce loss of heat, suppress the amount of thermal energy to be supplied, and thereby improve the economy. For example, the material of the backing tool 4 may be ceramic or titanium.

<Suppression of chatter vibration>

Fig. 3 is a time chart showing a change in a load applied to a spindle rotation motor for the rotary tool with respect to a length of a part that has been welded by the rotary tool 3 and the backing tool 4 performing the friction stir welding (time after the start of the welding).

When a rotary tool that does not have a probe or a protruding portion moves in a direction in which the welding is performed and an eccentric load is applied to a shoulder surface (that contacts the surfaces of the metal plates) of the rotary tool, a chatter vibration may occur to cause the friction stirring to be uneven and thereby cause a joint defect.

According to the experiment conducted by the present inventors, it has been confirmed that when the length of the part (that is to be inserted into the recessed portion 4d of the backing tool 4) of the protruding portion (probe) 3d of the rotary tool 3 is larger than 0 mm, a chatter vibration lasts for several seconds right after the start of the welding and then can be suppressed. This is because the materials are softened and fill the recessed portion 4d, and the protruding portion 3d of the rotary tool 3 undergoes inner pressure through the softened materials filling the recessed portion 4d of the backing tool 4, so that a vibration damping force acts thereon. As a result, chatter vibration is suppressed and uniform friction stirring is possible, and thus also in this respect, it is possible to suppress a joint defect and join the metal plates with high reliability.

In addition, if the material of an amount that corresponds to the gap fills the recessed portion 4d before the start of the welding, the vibration can be prevented.

<Consideration of dimensional relationships of parts>

Fig. 4 shows relationships of dimensions of parts. Relationships of dimensions of parts of the rotary tool 3 and relationships of dimensions of parts of the backing tool 4 are described with reference to Fig. 4 and Table 1.

[Table 1]

Table 1: Thicknesses of metal plates, Diameter of shoulder portion, and dimensions (diameter and length) of protruding portion

|  | Thicknesses of metal plates | Diameter D1 of shoulder portion | Diameter d1 of protruding portion | Length L1 of protruding portion |
|---|---|---|---|---|
| 1 | Larger than 0 mm and equal to or less than 1 mm | Larger than 3 mm and equal to or less than 8 mm | Larger than 1 mm and equal to or less than 4 mm | Larger than thickness of joint portion and equal to or less than 2 mm |
| 2 | Larger than 1 mm and equal to or less than 3 mm | Larger than 5 mm and equal to or less than 15 mm | Larger than 1 mm and equal to or less than 8 mm | Larger than thickness of joint portion and equal to or less than 4 mm |
| 3 | Larger than 3 mm and equal to or less than 6 mm | Larger than 8 mm and equal to or less than 20 mm | Larger than 2 mm and equal to or less than 12 mm | Larger than thickness of joint portion and equal to or less than 7 mm |
| 4 | Larger than 6 mm and equal to or less than 10 mm | Larger than 12 mm and equal to or less than 25 mm | Larger than 4 mm and equal to or less than 15 mm | Larger than thickness of joint portion and equal to or less than 11 mm |

As described above, as effects of the tool set, it is not necessary to replace the rotary tool with a rotary tool provided with a probe having a different length on the basis of the thicknesses of the metal plates and to prepare many rotary tools each having different probe length, the running cost is suppressed, and thus the economy can be improved.

The effects are described with reference to the third item of Table 1. Joint portions of which the thicknesses are larger than 2 mm and equal to or smaller than 7 mm can be supported by the single tool set in consideration of the fact that the thicknesses of the metal plates are larger than 3 mm and equal to or smaller than 6 mm and may be slightly changed (by approximately 1 mm). When the thicknesses of the metal plates 1 and 2 to be joined are not in the range, another tool set is required. A range of the thicknesses of metal plates to be joined by the single tool set is several times as large as that of the thicknesses of metal plates to be joined by conventional friction stir welding, and the economy is significantly improved.

When the thicknesses of the metal plates 1 and 2 are not in the range, another rotary tool needs to be prepared (for example, the metal plates are changed from the third item of Table 1 to the fourth item).

The diameter D1 of the shoulder portion 3c (shoulder surface 3b), the diameter d1 of the protruding portion 3d, and the length L1 of the protruding portion 3d, which are included in the rotary tool 3 having the protruding portion 3d (probe) formed at the tip end portion of the tool body 3a, are changed depending on the thicknesses of the metal plates 1 and 2 to be joined by the friction stir welding, deformation resistance, and welding conditions.

(Diameter D1 of shoulder portion of rotary tool)

First, the diameter D1 of the shoulder portion 3c (shoulder surface 3b) of the rotary tool 3 is described. A main factor for determining the diameter D1 of the shoulder portion is the amount of heat that is transferred to the joint portion per unit time. In the friction stir welding, a joint defect may occur due to a lack of the amount of frictional heat or an excessive amount of frictional heat. It is, therefore, necessary that the diameter D1 of the shoulder portion be selected to generate a desired amount of frictional heat.
According to the experiment (in which plates having a thickness of up to 10 mm are used) conducted by the present inventors, an excellent joint portion was formed under the setting states shown in Table 1. Specifically, the friction stir welding can be performed under the state that the amount of frictional heat is not insufficient or excessive in the following cases: where the thicknesses of the metal plates are larger than 0 mm and equal to or less than 1 mm and the diameter D1 of the shoulder portion is larger than 3 mm and equal to or less than 8 mm; where the thicknesses of the metal plates are larger than 1 mm and equal to or less than 3 mm and the diameter D1 of the shoulder portion is larger than 5 mm and equal to or less than 15 mm; where the thicknesses of the metal plates are larger than 3 mm and equal to or less than 6 mm and the diameter D1 of the shoulder portion is larger than 8 mm and equal to or less than 20 mm; and where the thicknesses of the metal plates are larger than 6 mm and equal to or less than 10 mm and the diameter D1 of the shoulder portion is larger than 12 mm and equal to or less than 25 mm. Thus, an excellent joint portion causing no joint defect can be formed.

(Diameter d1 of protruding portion of rotary tool)

Next, the diameter d1 of the protruding portion 3d of the shoulder portion 3c (shoulder surface 3b) of the rotary tool 3 that has the protruding portion 3d (probe) formed at the tip end portion of the tool body 3a is described below.
A main factor for determining a lower limit of the diameter d1 of the protruding portion is a bending moment that acts on the protruding portion 3d when the friction stir welding is performed. When the diameter d1 of the protruding portion 3d is small, the section modulus cannot be ensured and the protruding portion 3d may be fractured. It is, therefore, necessary that the section modulus be set so that the protruding portion 3d is not fractured.
A main factor for determining an upper limit of the diameter d1 of the protruding portion is the amount of frictional heat that is generated when the friction stir welding is performed. The amount of frictional heat is determined by a contact area of the shoulder surface 3b with the surfaces of the metal plates. The area of the shoulder surface 3b of the rotary tool 3 that contacts the surfaces of the metal plates varies depending on the diameter D1 of the shoulder portion and the diameter d1 of the protruding portion. The diameter d1 of the protruding portion is determined based on the premise that the diameter d1 of the protruding portion is smaller than the diameter D1 of the shoulder portion. When the ratio of the diameter d1 of the protruding portion to the diameter D1 of the shoulder portion is large, the contact area with the surfaces of the metal plates is small and the amount of frictional heat may be insufficient. It is, therefore, necessary that the diameter d1 of the protruding portion be set so that a joint defect does not occur due to a lack of the amount of frictional heat.
According to the experiment (in which the plates having a thickness of up to 10 mm are used) conducted by the present inventors, the settings shown in Table 1 were obtained. Specifically, it has been confirmed that the protruding portion 3d is not fractured due to the bending moment that acts on the protruding portion 3d when the friction stir welding is performed in the following cases: where the thicknesses of the metal plates are larger than 0 mm and equal to or less than 1 mm and the diameter d1 of the protruding portion 3d is larger than 1 mm and equal to or less than 4 mm; where the thicknesses of the metal plates are larger than 1 mm and equal to or less than 3 mm and the diameter d1 of the protruding portion 3d is larger than 1 mm and equal to or less than 8 mm; where the thicknesses of the metal plates are larger than 3 mm and equal to or less than 6 mm and the diameter d1 of the protruding portion 3d is larger than 2 mm and equal to or less than 12 mm; and where the thicknesses of the metal plates are larger than 6 mm and equal to or less than 10 mm and the diameter d1 of the protruding portion 3d is larger than 4 mm and equal to or less than 15 mm.
It has been confirmed that when the upper limit of the diameter d1 of the protruding portion is selected from the range shown above with respect to the diameter D1 of the shoulder portion that is set by parameters such as the thicknesses of the metal plates and the deformation resistance, the friction stir welding can be performed under the state that the amount of frictional heat is not insufficient. Thus, an excellent joint portion can be formed while a joint defect does not occur.

(Length L1 of protruding portion of rotary tool)

Next, the length L1 of the protruding portion 3d of the shoulder portion 3c (shoulder surface 3b) of the rotary tool 3 that has the protruding portion 3d (probe) formed at the tip end portion of the tool body 3a is described.

A main factor for determining the length L1 of the protruding portion is the thicknesses of the metal plates. When the length L1 of the protruding portion 3d is smaller than the thicknesses of the metal plates, a non-joint portion that is generally called a kissing bond is formed. It is, therefore, necessary that the length L1 of the protruding portion 3d be set so that a non-joint portion is not formed and the plates can be welded together through an entire groove.

According to the experiment (in which the plates having a thickness of up to 10 mm are used) conducted by the present inventors, the settings shown in Table 1 were obtained. Specifically, it has been confirmed that the plates can be welded together through the entire groove without a non-joint portion that is generally called a kissing bond in the following cases: where the thicknesses of the metal plates are larger than 0 mm and equal to or less than 1 mm and the length L1 of the protruding portion 3d is larger than the thicknesses of the metal plates and equal to or less than 2 mm; where the thicknesses of the metal plates are larger than 1 mm and equal to or less than 3 mm and the length L1 of the protruding portion 3d is larger than the thicknesses of the metal plates and equal to or less than 4 mm; where the thicknesses of the metal plates are larger than 3 mm and equal to or less than 6 mm and the length L1 of the protruding portion 3d is larger than the thicknesses of the metal plates and equal to or less than 7 mm; and where the thicknesses of the metal plates are larger than 6 mm and equal to or less than 10 mm and the length L1 of the protruding portion 3d is larger than the thicknesses of the metal plates and equal to or less than 11 mm.

(Description of dimensional relationships of backing tool 4)

For example, in the present embodiment, the backing tool body 4a is formed in a cylindrical shape and has the pressing force maintaining surface 4b formed at the tip end of the cylinder and the recessed portion 4d for receiving the protruding portion 3d of the rotary tool 3 during the welding. It is assumed that the recessed portion 4d is a cylindrical hole. It is assumed that the pressing force maintaining surface 4b is a surface that is brought into contact with the metal plates. The diameter D2 of the pressing force maintaining surface portion 4c (pressing force maintaining surface 4b), the diameter d2 of the recessed portion 4d, and the depth L2 of the recessed portion 4d, which are included in the backing tool 4 having the recessed portion 4d at the tip end portion of the backing tool body 4a, are determined on the basis of the diameter D1 of the shoulder portion, the diameter d1 of the protruding portion, and the length L1 of the protruding portion, which are included in the rotary tool 3. According to the experiment conducted by the present inventors, it is preferable that the diameter D2 of the pressing force maintaining surface 4b of the backing tool 4 be equal to the diameter D1 of the shoulder portion of the rotary tool 3. It is preferable that the diameter d2 of the recessed portion be larger than the diameter d1 of the protruding portion and equal to or less than a value of (d1 + 2 mm). When the depth L2 of the recessed portion is longer than the length L1 of the protruding portion and is equal to or less than a value of (L1 + 1 mm) or less, an excellent joint portion is formed. (Description of diameter d2 (= d1 + 2 mm) and length L2 (= L1 + 1 mm) of recessed portion)

In the welding method according to the present invention, regarding the distance δ between the shoulder surface 3b and pressing force maintaining surface 4b of the rotary and backing tools 3 and 4 arranged in opposed relationship, it is preferable that the friction stir welding be performed under the state that at least one of the rotary and backing tools 3 and 4 is inclined so that the distance δ2 between the surfaces on the back side of the traveling direction of the tools is smaller than the distance δ1 between the surfaces on the front side of the traveling direction of the tools (refer to Fig. 16).

In this case, the diameter d2 and length L2 of the recessed portion are determined on the basis of geometric relationships between the thicknesses of the metal plates that are to be subjected to the friction stir welding, the diameter d1 and length L1 of the protruding portion 3d of the rotary tool 3, the insertion depth of the protruding portion 3d into the recessed portion 4d, and inclination angles of the rotary and backing tools 3 and 4.

The diameter d2 and length L2 of the recessed portion are set to the minimum values so that the protruding portion 3d can be inserted into and inclined in the recessed portion 4d without interference in the recessed portion 4d.

When the diameter d2 and length L2 of the recessed portion are increased, the protruding portion 3d can be inserted into and inclined in the recessed portion 4d without interference in the recessed portion 4d. However, when the diameter d2 and length L2 of the recessed portion are excessively increased, the amount of the materials that flow into the recessed portion 4d is increased. This may cause a joint defect.

According to the experiment (in which the plates having a thickness of up to 10 mm are used) conducted by the present inventors, it has been confirmed that when the diameter d2 of the recessed portion 4d is equal to or less than a value of d1 + 2 mm and the length L2 of the recessed portion 4d is equal to or less than a value of L1 + 1 mm, an excellent joint portion causing no joint defect can be formed without interference of the protruding portion 3d in the recessed portion 4d.

Although not shown for the rotary tool 3, depending on the materials of the metal plates that are to be subjected to the friction stir welding or the like, the shoulder surface 3b, protruding portion 3d, and the recessed portion 4d may be processed so that: spiral grooves are formed in the shoulder surface 3b; a screw is formed in the protruding portion 3d; and a female screw is formed in the recessed portion 4d, respectively. In this case, a stirring efficiency can be improved in the friction stir welding.

Fig. 4 shows that the diameter d1 of the probe or the protruding portion is constant regardless of the position in the direction in which the length L1 is measured and the diameter d2 of the recessed portion is constant regardless of the position in the direction in which the length L2 is measured. Even when the protruding portion and the recessed portion are formed in a tapered shape, the effects of the friction stir welding are not changed.

<Configuration of apparatus>

The embodiment of the friction stir welding apparatus that performs the welding method according to the present invention is described. The friction stir welding apparatus may be any of the following first to third apparatuses.

(First apparatus: Movements of tools and mechanical alignment)

Fig. 5 is a perspective view of the friction stir welding apparatus (first apparatus) according to the embodiment of the present invention, with a part thereof omitted. Fig. 6 is a schematic front view of a main part of the friction stir welding apparatus. Fig. 7 is a schematic side view of the main part of the friction stir welding apparatus. Fig. 8 is a diagram showing an upper half of the friction stir welding apparatus with a control system.

In Figs. 5 to 8, the friction stir welding apparatus for metal plates according to the present embodiment includes entry and delivery clamping devices 5 and 6 for clamping the front and back surfaces of the two metal plates 1 and 2; a tool rotation device 7 that arranges the rotary tool 3 on the front surface side of the joint portion J of the two metal plates 1, 2 and rotationally drives the rotary tool 3; a tool position maintaining device 46 that arranges and holds the backing tool 4 on the back surface side of the joint portion J of the two metal plates 1 and 2 and in opposed relationship with the rotary tool 3; a tool pressing device 45 that moves the rotary tool 3 in a direction to cause the rotary tool 3 to approach the backing tool 4 and presses the rotary tool 3 against the front surface of the joint portion J of the metal plates 1 and 2; a carriage frame 19 in which the tool pressing device 45 and the tool position maintaining device 46 are arranged; and a moving device 75 that moves the rotary tool 3 and the backing tool 4 along the joint portion J in the welding direction.

The entry clamping device 5 and the delivery clamping device 6 have upper and lower clamping plates 5a, 5b and 6a, 6b, respectively, the upper and lower clamping plates 5a, 5b and 6a, 6b can be opened and closed by opening-closing mechanism including opening-closing cylinders 5c, 6c shown in Fig. 6.

In order to match butting positions and a welding line of the two plates 1, 2 with friction stir welding positions of the rotary and backing tools 3 and 4, cylinders 16, 17 are arranged in entry and delivery frames 13, 14 so that the rotary and backing tools 3, 4 can be moved in a direction perpendicular to the welding line under the state that the two metal plates 1, 2 are clamped by the entry and delivery clamping devices 5, 6. Electric motors may be used instead of the cylinders.

The carriage frame 19 is formed in a C shape and has an upper horizontal frame 19a and a lower horizontal frame 19b. The rotary tool 3 is held by the upper horizontal frame 19a through the tool rotation device 7 and the tool pressing device 45. The backing tool 4 is held by the lower horizontal frame 19b through the tool position maintaining device 46.

Wheels 71 are arranged at a bottom portion of the carriage frame 19. The wheels 71 can travel on rails 11a, 11b arranged on a base plate 18.

The moving device 75 has the wheels 71, a screw 72, a traveling motor 73, and a control device 74 (a function of a control device 83). An end of the screw 72 is connected to the carriage frame 19. The traveling motor 73 rotationally drives the screw 72. When the traveling motor 73 is driven by a command of the control device 74, the screw 72 rotates and the carriage frame 19 moves. Thus, the rotary tool 3 and the backing tool 4 move in the direction (welding direction) perpendicular to the traveling direction of the metal plates 1, 2 while being mechanically aligned with each other.

As described above, the rotary tool 3 has the protruding portion (probe) 3d formed at the tip end portion of the tool body 3a and protruding from the shoulder surface 3b, while the backing tool 4 has the recessed portion 4d formed at the pressing force maintaining surface 4b of the backing tool body 4a and configured to receive the tip end of the protruding portion 3d.

The backing tool 4 is arranged on the back surface side of the joint portion J of the two metal plates 1, 2 and is maintained at this position by the tool position maintaining device 46.

The shape of the tool position maintaining device 46 is set so that the backing tool 4 is arranged on the back surface side of the joint portion J of the two metal plates 1, 2 (the position is fixed).

The tool rotation device 7 has therein a rotation motor 53 for rotationally driving the rotary tool 3.

The tool pressing device 45 moves the rotary tool 3 in the direction to cause the rotary tool 3 to approach the backing tool 4 and presses the shoulder surface 3b against the front surface of the joint portion J so as to cause the joint portion J to be sandwiched between the shoulder surface 3b and the pressing force maintaining surface 4b and thereby apply a pressing force to the joint portion J.

The rotary tool 3 is rotationally driven by the tool rotation device 7, and the shoulder surface 3b is pressed against the front surface of the joint portion J under the state that the tip end of the protruding portion 3d of the rotary tool 3 is inserted in the recessed portion 4d of the backing tool 4 by the tool pressing device 45.

The tool rotation tool 7 and the tool pressing device 45 are at least partially housed in an upper casing 51. The tool position maintaining device 46 is at least partially housed in a lower casing 52.

In this manner, the backing tool 4 is held and set by the tool position maintaining device 46 on the back surface side of the joint portion J of the two metal plates 1, 2. In fact, however, the set position of the backing tool 4 may slightly vary. In this case, the two metal plates 1, 2 are bent and absorb the slight variation due to the pressing force applied by the tool pressing device 45.

When the materials to be joined are high in stiffness and the shapes of the metal plates are changed by an irregularity of the joint portion J of the butted metal plates, the front and back surfaces of the joint portion J may not be sufficiently pressed by only the pressing force applied by the tool pressing device 45.

In this case, the tool position maintaining device 46 may have a position adjusting function. The tool position maintaining device 46 vertically moves the backing tool 4 and thereby brings the pressing force maintaining surface 4b of the backing tool 4 into contact with the back surface of the joint portion. The tool position maintaining device 46 has a position maintaining motor 61b, which is driven to adjust position of the pressing force maintaining surface 4b of the backing tool 4.

The tool position maintaining device 46 maintains the pressing force applied by the tool pressing device 45 through the pressing force maintaining surface 4b of the backing tool 4 arranged on the back surface side of the joint portion J. In addition, a pressing force may be applied from the backing tool 4 by the position adjusting function adjusting the pressing force maintaining surface 4b to contact with the back surface of the joint portion J, while the pressing force maintaining surface 4b maintains the pressing force applied by the rotary tool 3.

As shown in Fig. 8, the rotary tool pressing device 45 includes a pressing motor 61a, a screw 62a to be rotationally driven by the pressing motor 61a, and a support frame 63a that moves linearly in an axial direction of the screw 62a by rotation of the screw 62a. The tool rotation device 7 is connected to the support frame 63a so as to move linearly in the axial direction of the screw 62a together with the support frame 63a.

The friction stir welding apparatus further includes an upper inclining support device 76a for holding the rotary tool 3 with the axis 15a thereof inclined and a lower inclining support device 76b for holding the backing tool 4 with the axis 15b thereof inclined. The inclining support devices 76a, 76b are of an angle adjustable type. The upper inclining support device 76a is provided on the upper horizontal frame 19a and has an angle adjusting motor 77a that rotationally drives a shaft 64a supported by the upper horizontal frame 19a. The lower inclining support device 76b is provided on the lower horizontal frame 19b and has an angle adjusting motor 77b that rotationally drives a shaft 64b supported by the lower horizontal frame 19b. The inclining support devices 76a, 76b may be of a fixed type that fixedly supports the rotary and backing tools 3, 4 with the axes 15 thereof inclined.

(Second apparatus: Movements of tools and electric alignment)

Fig. 9 is a perspective view of another friction stir welding apparatus (second apparatus), with a part thereof omitted. Fig. 10 is a schematic front view of a main part of the second apparatus.

In Figs. 9 and 10, the friction stir welding apparatus includes the entry and delivery clamping devices 5 and 6 for clamping respectively the front and back surfaces of the two metal plates 1 and 2; the tool rotation device 7 that arranges the rotary tool 3 on the front surface side of the joint portion J of the two metal plates 1, 2 and rotationally drives the rotary tool 3; the tool position maintaining device 46 that arranges and holds the backing tool 4 on the back surface side of the joint portion J of the two metal plates 1 and 2 and in opposed relationship with the rotary tool 3 ; the tool pressing device 45 that moves the rotary tool 3 in the direction to cause the rotary tool 3 to approach the backing tool 4 and presses the rotary tool 3 against the front surface of the joint portion J of the metal plates 1 and 2; and moving devices 47, 48 that move the rotary tool 3 and the backing tool 4 in the welding direction along the joint portion J.

As described above, the rotary tool 3 has the protruding portion (probe) 3d formed at the tip end portion of the tool body 3a and protruding from the shoulder surface 3b, while the backing tool 4 has the recessed portion 4d formed at the pressing force maintaining surface 4b of the backing tool body 4a and configured to receive the tip end of the protruding portion 3d.

The tool position maintaining device 46 arranges and holds the backing tool 4 on the back surface side of the joint portion J of the two metal plates 1, 2.

The tool pressing device 45 is controlled so as to move the rotary tool 3 attached to the tool rotation device 7 in the direction to cause the rotary tool 3 to approach the backing tool 4, cause the tip end of the protruding portion 3d of the rotary tool 3 to be inserted in the recessed portion 4d of the backing tool 4, cause the joint portion J to be sandwiched between the shoulder surface 3b and the pressing force maintaining surface 4b, and press the shoulder surface 3b of the rotary tool 3 against the front surface of the joint portion J.

The upper and lower moving devices 47, 48 are controlled so that the rotary tool 3 is rotationally driven by the tool rotation device 7; the tip end of the protruding portion 3d of the rotary tool 3 is inserted in the recessed portion 4d of the backing tool 4 by the tool pressing device 45; the joint portion J is sandwiched between the shoulder surface 3b and the pressing force maintaining surface 4b; the shoulder surface 3b of the rotary tool 3 is pressed against the front surface of the joint portion J; the rotary tool 3 and the backing tool 4 are moved along the joint portion J under the state that the backing tool 4 is arranged and held by the tool position maintaining device 46 on the back surface side of the joint portion J of the two metal plates 1, 2; and the rotary tool 3 performs the friction stir welding in the entire region of the joint portion J in the thickness direction of the metal plates.

The entry clamping device 5 has the upper and lower clamping plates 5a, 5b, while the delivery clamping device 6 has the upper and lower clamping plates 6a, 6b. The upper and lower clamping plates 5a, 5b, 6a, 6b can be opened and closed by opening-closing mechanisms provided with driving devices (not shown).

The tool rotation device 7 has therein the rotation motor 53 for rotationally driving the rotary tool 3. The tool rotation device 7 and the tool pressing device 45 are at least partially housed in the upper casing 51. The tool position maintaining device 46 is at least partially housed in the lower casing 52.

The upper moving device 47 includes left and right upper rails 11 and 11 both fixed to an upper housing 9; left and right traveling frames 65a and 65a that support the casing 51 via axles 64a and 64a, respectively; left/right and front/rear wheels 66a and 66a that are provided on the left and right traveling frames 65a, 65a and travel on the upper rails 11, 11; and traveling motors 67a and 67a (not shown) that are mounted on the left and right traveling frames 65a, 65a and drive one of the front and rear wheels 66a, 66a. The tool rotation device 7 and the tool pressing device 45 travel on the upper rails 11, 11 perpendicularly to a traveling direction of the metal plates 1 and 2, along the joint portion J.

The lower moving device 48 is configured in the same manner, and the tool position maintaining device 46 travels on lower rails 12, 12 fixed to a lower housing 10, perpendicularly to the traveling direction of the metal plates 1, 2, along the joint portion J.

The traveling motors 67a, 67a of the upper moving device 47 and traveling motors 67b, 67b of the lower moving device 48 are synchronously controlled. Thus, the rotary tool 3 and the backing tool 4 travel in the direction perpendicular to the traveling direction of the metal plates 1 and 2 under the state that the rotary tool 3 and the backing tool 4 are electrically aligned with each other.

(Third apparatus: Movements of metal plates, electric alignment, and mechanical alignment)

Fig. 11 is a perspective view of another friction stir welding apparatus (third apparatus), with a part thereof omitted. Fig. 12 is a schematic front view of a main part of the friction stir welding apparatus. Fig. 13 is a schematic side view of the main part of the friction stir welding apparatus.

The friction stir welding apparatus (third apparatus) moves the frames 13, 14 fixing the entry and delivery clamping devices 5, 6 in the welding direction and thereby moves the two metal plates 1, 2 in the welding direction along the joint portion J. The entry frame 13 and the delivery frame 14 are formed as an integral frame through a connecting member and travel in the direction (welding direction) perpendicular to the traveling direction of the metal plates 1, 2 under the state that the entry frame 13 and the delivery frame 14 are mechanically aligned with each other by driving of the moving device 75.

The entry frame 13 and the delivery frame 14 may have a position sensor and travel in the direction (welding direction) perpendicular to the traveling direction of the metal plates 1, 2 under the state that the entry frame 13 and the delivery frame 14 are electrically aligned with each other on the basis of positions measured by the position sensors.

The control system provided for the welding apparatus according to the present embodiment is described later.

<Welding method>

Next, the following describes, as an example, the case where the method (hereinafter merely referred to as welding method) for performing the friction stir welding on the metal plates using the aforementioned friction stir welding apparatuses (first to third apparatuses) according to the embodiment of the present invention is applied to butt welding.

The rotary tool 3 and the backing tool 4 are inserted in the joint portion J (butting portion) of the two metal plates 1, 2 from the front and back surface sides of the joint portion J, frictionally stir the joint portion J using frictional heat generated by rotation of the rotary tool 3, and join the two metal plates 1, 2 together.

In the welding method according to the present embodiment, the rotary tool 3 and the backing tool 4 sandwich the metal plates 1, 2, and the front and back surfaces of the metal plates 1, 2 are clamped by the entry and delivery clamping devices 5, 6 arranged on both sides of the rotary and backing tools 3, 4.

The back tool 4 is arranged and held by the tool position maintaining device 46 on the back surface side of the joint portion J of the two metal plates 1, 2. Next, the tool pressing device 45 is driven to move the rotary tool 3 arranged in opposed relationship with the backing tool 4 on the front surface side of the butting portion or joint portion J of the two metal plates 1, 2 so as to cause the rotary tool 3 to approach the backing tool 4, and insert the protruding portion (probe) 3d of the rotary tool 3 into the recessed portion 4d of the backing tool 4 so as not to cause a non-joint portion in the entire region of the joint portion J in the thickness direction of the metal plates.

While the pressing force maintaining surface 4b of the backing tool 4 is held on the back surface side of the joint portion J of the two metal plates 1, 2, the tool rotation device 7 is driven to rotate the rotary tool 3, the shoulder surface 3b of the rotary tool 3 is pressed against the front surface of the joint portion J of the two metal plates 1, 2 and the rotary tool 3 frictionally stirs the joint portion J. The pressing force applied by the rotary tool 3 to the front surface of the joint portion J is maintained by the pressing force maintaining surface 4b of the backing tool 4 arranged on the back surface side of the joint portion J.

Under the state (in which the protruding portion 3d of the rotary tool 3 is inserted in the recessed portion 4d of the backing tool 4, and the shoulder surface 3b of the rotary tool 3 and the pressing force maintaining surface 4b of the backing tool 4 are pressed against the front and back surfaces of the joint portion J, respectively), the moving device (of the first apparatus) 75 is driven to move the rotary tool 3 along the joint portion J in the direction (welding direction) perpendicular to the traveling direction of the metal plates 1, 2 while the rotary tool 3 being rotated and the friction stir welding is thereby performed.

In the second apparatus, the moving devices 47, 48 are driven to move the rotary tool 3 along the joint portion J in the direction (welding direction) perpendicular to the traveling direction of the metal plates 1, 2 while the rotary tool 3 being rotated and the friction stir welding is thereby performed.

In the third apparatus, the moving device 75 (of the apparatus 3) is driven to move the frames 13, 14 that fix the entry and delivery clamping devices 5, 6 clamping the metal plates 1, 2, respectively. The friction stir welding is performed by moving the two metal plates 1, 2 in the welding direction.

In the welding method according to the present embodiment, at least one of the rotary and backing tools 3, 4 is inclined by the inclining support devices 76a, 76b so that the distance δ2 between the surfaces on the back side of the traveling direction of the tools is smaller than the distance δ1 between the surfaces on the front side of the traveling direction of the tools. It is assumed that the distance between the shoulder surface 3b of the rotary tool 3 and the pressing force maintaining surface 4b of the backing tool 4 is the distance δ between the surfaces. In the inclined state, the rotary tool 3 is moved in the direction (welding direction) perpendicular to the traveling direction of the metal plates 1, 2 while being rotated and the friction stir welding is thereby performed (described later).

<Lap welding>

Figs. 14 and 15 show a state during welding when the welding method according to the present invention is applied to the lap welding of two metal plates, and Figs. 14 and 15 show the difference in clamping system when the welding method of the present invention is applied to the lap welding of two metal plates.

Similarly to the friction stir welding of the butted metal plates, also in the friction stir welding of lapped metal plates 1 and 2, as shown in Figs. 14 and 15, the present inventors carried out the friction stir welding by forming the protruding portion 3d that protrudes from the shoulder surface 3b at the tip end portion of the rotary tool 3, forming the recessed portion 4d for receiving the tip end of the protruding portion 3d at the pressing force maintaining surface 4b formed at the tip end portion of the backing tool 4 opposed to the rotary tool 3, and moving the rotary and backing tools 3 and 4 along the joint portion J under the state that at least the tip end of the protruding portion 3d of the rotary tool 3 is inserted into the recessed portion 4d of the backing tool 4.

When the present invention is applied to the lap welding, the clamping of the metal plates 1 and 2 by the entry and delivery clamping devices 5 and 6 comprises two cases in which one is to clamp the two lapped metal plates 1 and 2 together and the other is to clamp the metal plates 1 and 2 individually.

Fig. 14 shows the former case, in which a lap portion of the two metal plates is relatively long, and the entry and delivery clamping devices 5 and 6 clamp the metal plates 1 and 2 together on the both sides of the lap portion forming a joint portion. Fig. 15 shows the latter case, in which the entry and delivery clamping devices 5 and 6 clamps the metal plates 1 and 2 individually on the both sides of the lap portion forming a joint portion.

In the example of Fig. 14, it is difficult to enhance a degree of contact in the lap portion during welding. In addition, since heights at which the entry and delivery clamping devices 5 and 6 are positioned do not match, a height-adjusting mechanism is required. In this respect, the example of Fig. 15 is considered to be preferable.

<Effects of welding apparatus and welding method>

As described above, by performing the welding method according to the present invention using the welding apparatuses shown in Figs. 5 to 13, it is possible to improve economy by prolonging the service life of the rotary tool and to join the metal plates with high reliability by suppressing joint defect and rupturing of the metal plates.

<Other characteristics: Inclinations of tools>

Next, further details of the features of the welding method and apparatus according to the present embodiment are described below.

First, inclinations of the rotary and backing tools 3 and 4 are described below.

Fig. 16 is a cross sectional view describing the inclinations of the tools, and Fig. 17 is a perspective view of the tools. It is assumed that the distance between the shoulder surface 3b of the rotary tool 3 and the pressing force maintaining surface 4b of the backing tool 4 is the distance $\delta$ between the surfaces.

In the present embodiment, the friction stir welding is performed with the rotary tool 3 being rotated under the state at least one of the rotary and backing tools 3, 4 is inclined so that the distance $\delta2$ between the surfaces on the back side of the traveling direction of the tools is smaller than the distance $\delta1$ between the surfaces on the front side of the traveling direction of the tools.

The diameter d2 of the recessed portion 4d of the backing tool 4 is set on the basis of the diameter d1, length L1 and inclination angle $\theta1$ of the protruding portion 3d of the rotary tool 3 so that the protruding portion 3d of the rotary tool 3 and the recessed portion 4d of the backing tool 4 do not interfere with each other (refer to Fig. 4).

Thus, it is possible to increase pressure to be applied between the materials and the shoulder surface 3b of the rotary tool 3 and the pressing force maintaining surface 4b of the backing tool 4, improve the flowability of the joint portion by the friction stir welding, and suppress a joint defect by inclining at least one of the rotary and backing tools 3, 4 so that the distance $\delta2$ between the surfaces on the back side of the traveling direction of the tools is smaller than the distance $\delta1$ between the surfaces on the front side of the traveling direction of the tools.

In addition, the materials softened by the friction stirring flows into the recessed portion 4d of the backing tool 4 to fill a gap. Thus, since the probe or protruding portion 3d of the rotary tool 3 inserted in the recessed portion 4d of the backing tool 4 undergoes inner pressure within the recessed portion 4d of the backing tool 4 through the softened materials filling the gap, a vibration damping force acts thereon and thus the rotary tool 3 has an improved vibration damping performance in the radial direction. As a result, chatter vibration is suppressed and uniform friction stirring is possible and thus also in this respect, it is possible to suppress a joint defect and improve the strength of the joint portion.

When at least one of inclination angles $\theta1$, $\theta2$ of the rotary and backing tools 3, 4 is excessively large, an insertion depth of the shoulder surface in the metal plates 1 and 2 on the back side of the traveling direction is increased. This increase, in turn, thrusts a joint portion material away from beads by the volumes of the inserted shoulder portion 3c and pressing force maintaining surface portion 4c, partially thinning down the plate thickness at the joint portion, and thus reducing the strength of the plates at the joint portion. In particular, if the metal plates 1 and 2 to be joined are as thin as 2 mm or less, thickness of the plates at the joint portion decreases at a high rate and the rupture of the plate begins at the joint portion.

When the plate thickness of the metal plates 1 and 2 is 2 mm or less, therefore, by controlling the inclination angle $\theta1$ or $\theta2$ to exceed 0°, but not greater than 3°, a decrease in the strength of the plates at the joint portion due to a partial decrease in the thickness of the plates is suppressed, and hence the plate rupture at the joint portion is suppressed. Further, to suppress the local decrease in the thickness of the plates at the joint portion, the inclination angle $\theta1$ or $\theta2$ is preferably controlled to exceed 0°, but not greater than 2°, and more preferably controlled to exceed 0°, but not greater than 1°.

<Other characteristics: Distance between clamping devices>

Fig. 18 is a diagram showing positional relationships (distance between the entry and delivery clamping devices) between the rotary tool 3, the backing tool 4, and the entry and delivery clamping devices 5, 6.

Next, the relationship between the distance Lc between the entry and delivery clamping devices 5, 6 and the diameter D3 of the rotary tool 3 and the relationship between the distance Lc between the entry and delivery clamping devices 5, 6 and the diameter D4 of the backing tool 4 (for example, when the backing tool is formed in a cylindrical shape) are described with reference to Fig. 18. Although the butt welding is described as an example, the same description applies to the lap welding.

When the materials forming the metal plates 1 and 2 are low in stiffness, that is, when the thicknesses t1 and t2 of the metal plates are smaller than the diameter of the shoulder portion 3c of the rotary tool 3 and the diameter of the pressing force maintaining surface portion 4c of the backing tool 4 and thin or when high-temperature deformation resistance values σ1 and σ2 are small, it is preferable that the distance Lc between the entry clamping device 5 and the delivery clamping device 6 be set to be not less than 1.5 times, but not greater than 5.0 times the tool body diameter D3 of the rotary tool 3 or the body diameter D4 of the backing tool 4, and as shown in Fig. 18, that the clamping devices clamp the metal plates in the vicinity of the rotary and backing tools 3 and 4. Specifically, the entry and delivery clamping devices 5 and 6 are preferably arranged with respect to the rotary and backing tools 3 and 4 so that the following expressions are satisfied:

$$Lc = D3 \; (D4) \; x \; (1.5 \; to \; 5.0)$$

$$Lc = Lc1 + Lc2$$

Lc: Distance between the entry and delivery clamping devices Lc1: Distance between the rotary tool axis and the entry clamping device
Lc2: Distance between the rotary tool axis and the delivery clamping device
D3: Tool body diameter of the rotary tool
D4: Tool body diameter of the backing tool

In the present invention, the relationship between the distance between the clamping devices and the rotary and backing tools is defined as mentioned above for the following reasons. If the materials forming the metal plates 1 and 2 are low in stiffness, that is, if the thicknesses t1 and t2 of the metal plates are small, or if the high-temperature deformation resistance values σ1 and σ2 are small, when friction stir welding is carried out while the metal plates 1 and 2 are clamped by the entry and delivery clamping devices 5 and 6, it is likely to result in buckling of the metal plates 1 and 2 due to the thermal expansion and thermal deformation by friction heat generated during friction stir welding, the exclusion force during passing of the probe or protruding portion, and a shearing force to the material generated by the rotation of the shoulder portion 3c. After a great deal of consideration on the above problems, the present inventors obtained the following knowledge:

When the thicknesses of metal plates (steel plates) are equal to or not less than 3 mm, if the distance Lc between the clamping devices is not greater than 125 mm for a tool diameter D (= D3 = D4) of 25 mm, the metal plates were able to be welded without buckling.
The distance Lc of the clamping devices in this case is not greater than 5 times the tool diameter D.

In addition, when thicknesses of metal plates (steel plates) are not greater than 3 mm, in case of the distance Lc of 5 times the tool diameter D (= D3 = D4), some of the metal plates suffered buckling and were unable to be welded.

It was confirmed, therefore, that when the thicknesses of the metal plates are not greater than 3 mm, by setting the distance Lc within a range not greater than 5 times the tool diameter D, appropriately, depending on the plate thickness or high-temperature deformation resistance value of the material, the metal plates can be welded without buckling.

For these reasons, by controlling the distance Lc between the entry clamping device 5 and the delivery clamping device 6 to be not greater than 5 times the tool diameter D, the metal plates 1 and 2 can be welded without buckling due to the thermal expansion and thermal deformation by frictional heat generated during friction stir welding, the exclusion force during passing of the probe or protruding portion and the shearing force to the material generated by the rotation of the shoulder portion 3c of the rotary tool 3.

Additionally, when the thicknesses of the plates are not greater than 3 mm, the distance Lc between the entry clamping device 5 and delivery clamping device 6 is more preferably set to be not less than 1.5 times, but not greater than 3 times the tool body diameter D, and even more preferably set to be not less than 1.5 times, but not greater than 2 times the diameter.

Meanwhile, during friction stirring with the rotary tool 3, it is unavoidable for the rotary tool 3 to generate minute vibration due to a change in a load at the joint portion, clearances in movable portions, etc. Additionally, bringing the entry clamping device 5 and the delivery clamping device 6 too close to the rotary and backing tools 3 and 4 is liable to cause interference (contact) therebetween. By setting the distance Lc between the entry clamping device 5 and the delivery clamping device 6 to be not less than 1.5 times the tool body diameter D3 of the rotary tool 3 and the tool body diameter D4 of the backing tool 4, interference between the rotary and backing tools 3 and 4 and the entry and delivery clamping devices 5 and 6 is prevented from occurring even when the rotary and backing tools 3 and 4 generate minute vibration, thereby improving the apparatus life.

As described above, by setting the distance Lc between the entry clamping device 5 and delivery clamping device 6 to be not less than 1.5 times, but not greater than 5.0 times the rotary tool diameter and clamping the front and back surfaces of both metal plates 1 and 2 in the vicinity of the shoulder portion and the pressing force maintaining surface portion with the clamping devices 5 and 6, even when the materials are thin and low in stiffness, buckling of the metal plates due to the thermal expansion and thermal deformation by frictional heat generated during friction stir welding, the exclusion force during passing of the probe or protruding portion and the shearing force to the material generated by the rotation of the shoulder portion is suppressed, butting accuracy of the metal plates 1 and 2 is maintained at a high level and stable welding is performed.

<Other characteristics: Plunging-less>

Next, plunging-less is described.

In the conventional one-side friction stir welding, since thermal diffusion to the backing plate occurs, the operation called "plunging" is required before the start of friction stirring. The plunging operation is performed to maintain the insertion positions of the rotary and backing tools until, by the frictional heat that is generated between the shoulder surface of the rotary tool and the surfaces of metal plates 1 and 2 by rotating the rotary tool under the state that the shoulder surface of the rotary tool is brought into contact with the surfaces of the metal plates 1 and 2, the temperatures of the metal plate materials are increased to nearly 80% of the melting points at which the materials are softened. After the metal plates 1 and 2 are softened, the rotary tool is moved in the welding direction while the friction stir depth is fixed or the load of the tool rotation motor of the friction stirring device is controlled to be constant whereby friction stir welding is performed. Since the plunging is time-consuming, the welding cycle time is correspondingly prolonged, and this restricts enhancement of production efficiency.

The pressing force maintaining surface portion 4c of the backing tool 4 functions in the same manner as the backing plate for one-side friction stir welding. On the other hand, the pressing force maintaining surface 4b of the backing tool 4 has a smaller area contributing to thermal diffusion than the backing plate for one-side friction stir welding. Thus, the present inventors have focused attention to the findings that the diffusion of heat to the backing plate, which occurred in the conventional one-side friction stir welding, does not occur and thermal energy supplied to the joint portion is suppressed whereby temperature elevation is achieved in a short time. The present inventors has considered that it might be possible to omit the plunging process that is performed before the start of the friction stir welding and has tried starting the friction stir welding right from edge surfaces of the metal plates 1 and 2 without plunging. As a result, it has been confirmed that the metal plates 1 and 2 render smooth plastic flow.

More preferably, when the friction stir is performed in advance so that the gap between the probe or the protruding portion 3d of the rotary tool 3 and the recessed portion 4d of the backing tool 4 is filled with the same material as the metal plates, it is possible to suppress a vibration due to an initial eccentric load as described above.

In the welding method of the present invention, therefore, plunging-less friction stir welding that does not involve the plunging operation can be performed, which in turn allows the welding cycle time to be reduced and production efficiency to be enhanced.

<Other characteristics: plunging-less and tool inclinations>

Next, the plunging-less and the inclinations of the rotary and backing tools 3 and 4 are described.

Fig. 19 is an explanatory diagram showing the case in which the rotary and backing tools 3 and 4 are inserted from an edge surface 24 of the joint portion under the state that the inclination angles of the rotary and backing tools 3 and 4 are set to 0 degrees (or the tools are not inclined). In order to start the friction stir welding without plunging, insertion positions of the rotary and backing tools 3 and 4 when inserted from the edge surface 24 of the joint portion are determined on the basis of the relative positions of the joint portion J to the rotary and backing tools 3 and 4. As shown in Fig. 19, when the insertion positions of the tip end portion 3d of the rotary tool 3 and recessed portion 4d of the backing tool 4 are slightly shifted and the tip end portion 3d of the rotary tool 3 is excessively inserted, the side surfaces of the rotary and backing tools 3 and 4 may press the edge surface 24 of the joint portion J and whereby cause a trouble such as buckling of the metal plates 1 and 2 and a friction stirring defect.

Fig. 20 shows the state in which the rotary and backing tools 3 and 4 are inserted from the edge surface 24 of the joint portion J under the state that the rotary and backing tools 3 and 4 are appropriately inclined. In order to smoothly insert the rotary and backing tools 3 and 4 from the edge surface 24 of the joint portion J, regarding the distance $\delta$ between the shoulder surface 3b and pressing force maintaining surface 4b of the rotary and backing tools 3 and 4 arranged in opposed relationship as shown in Fig. 20, stirring is performed under the state that at least one of the rotary and backing tools 3 and 4 is inclined so that the distance $\delta 2$ between the surfaces on the back side in the traveling direction of the tools is smaller than the distance $\delta 1$ between the surfaces on the front side of the traveling direction of the tools.

The inclination angles $\theta 1$ and $\theta 2$ in this case are preferably set to be greater than 0°, but not greater than 10°, more preferably greater than 0°, but not greater than 6°, and even more preferably greater than 0°, but not greater than 3°.

With such setting, since the rotary and backing tools 3 and 4 contacts the edge surface 24 first with the shoulder surface 3b of the rotary tool 3 and the pressing force maintaining surface 4b of the backing tool 4, the side surfaces of the rotary and backing tools do not press the edge surface 24. The friction stir welding, therefore, can be smoothly started without plunging while a trouble such as metal plate buckling and friction stirring defect does not occur. In the friction stir welding process thereafter, since the rotary and backing tools 3 and 4 are inclined, the surface pressures between the materials and the shoulder surface 3b of the rotary tool 3 and the pressing force maintaining surface 4b of the backing tool 4 are increased, and the occurrence of burrs and welding defects during friction stir welding can be suppressed.

<Other characteristics: Operation control>

Next, operation control for carrying out friction stir welding without plunging is described below.

A control system associated with the operation control is described.

As shown in Fig. 8, the welding apparatus according to the present embodiment includes: an upper position measuring device 81a mounted on a lower surface of the upper casing 51; an upper load measuring device 82a mounted between the cylindrical body of the tool rotation device 7 and the support frame 63a; a lower position measuring device (load cell) 81b mounted on an upper surface of the lower casing 52; and a control device 83.

The control device 83 receives values measured by the upper position measuring device 81a and the upper load measuring device 82a and performs predetermined arithmetic processing. The control device 83 then transmits command signals to the rotation motor 53 of the tool rotation device 7, the pressing motor 61a of the tool pressing device 45, and the traveling motor 73 of the moving device 75 to control operations of the tool rotation device 7, the tool pressing device 45 and the moving device 75.

By way of example, in Fig. 8, the upper position measuring device 81a is of non-contact type, but it may be of contact type. In addition, when the inclining support devices 76a, 76b are of angle adjustable type, the control device 83 transmits command signals to the angle control motors 77a and 77b of the inclining support devices 76a, 76b on the basis of preset data to incline the rotary and backing tools 3, 4 and hold the tools at a predetermined angle.

If the welding apparatus has a configuration in which the backing tool 4 arranged on the lower side can be moved in a vertical direction, the control device 83 receives a value measured by the lower position measuring device 81b, performs predetermined arithmetic processing, and controls an operation of the tool position maintaining device 46. As well as the upper position measuring device 81a, the lower position measuring device 81b may be of non-contact type or contact type.

(First control)

Fig. 21 is a diagram illustrating operation control for carrying out friction stir welding without plunging while the rotary tool 3 and the backing tool 4 are inclined. Fig. 22 is a control flowchart of procedures of a process that is performed by the control device 83 shown in Fig. 8.

As shown in Figs. 21 and 22, before the start of friction stir welding, the rotary and backing tools 3 and 4 are positioned at standby positions 20a and 20b, respectively. At the standby positions 20a and 20b, the rotary and backing tools 3 and 4 are inclined.

The upper position measuring device 81a (refer to Fig. 8) that is mounted on the upper casing 51 is used to measure distances between the joint portion J and the rotary and backing tools 3 and 4, and a planned insertion depth of the protruding portion 3d of the rotary tool 3 is computed (step S1). Next, the backing tool 4 is fixed to an initial setting position, the pressing motor 61a is driven to move the protruding portion 3d of the rotary tool 3 to the planned insertion depth by position control (step S2). At this time, the shoulder surface 3b of the rotary tool 3 is set to a predetermined range (e.g., the plate thickness t) on the basis of the value measured by the position measuring device 81a. Then, under the state that the insertion positions of the tools are maintained by position control, the moving device 75 is driven to move the upper and lower casings 51 and 52 in the welding direction (step S2) and friction stir welding is started from friction stir starting positions 21a and 21b at the edge surface 24 of the joint portion. At this time, as described above, the friction stir welding is started without plunging by inserting the protruding portion 3d of the rotary tool 3 into the metal plates 1, 2 from the edge surface 24 of the joint portion while pressing the shoulder surface 3b of the rotary tool 3 and the pressing force maintaining surface 4b of the backing tool 4 against the edge surface 24 as the position of the rotary tool is controlled and the position of the backing tool is fixed (refer to Fig. 21, etc.).

After the start of friction stir welding, a constant load control is carried out to control the insertion position of the rotary tool 3 so that the load applied to the rotation motor 53 for the rotary tool 3 is maintained at a predetermined value on the basis of a control current of the rotation motor 53 for the rotary tool 3 (step S3), and before the tools reach positions 22a and 22b at which friction stir welding finishes, the control is switched to constant position control to maintain the insertion positions of the tools at that time (step S4) and further to control the tools to pass through the friction stir finishing positions 22a and 22b. As for the backing tool 4, even after the start of friction stir welding, the position is maintained fixed and the backing tool 4 is allowed to pass through the friction stir finishing positions 22a and 22b with the position maintained fixed (step S2 to step S4).

In this way, by switching the control for the rotary tool 3 to the constant load control after the start of friction stir welding, stable friction stirring can be performed even when the thickness of the joint portion J varies.

The above control in each step is carried out by the control device 83 that receives the value measured by the upper position measuring device 81a and then provides, on the basis of the measured value and the control current of the rotation motor 53, operating commands to various actuators such as the rotation motor 53, the pressing motors 61a, and the traveling motor 73.

Although in the above operation control, the constant load control of the rotary tool 3 is carried out by using the control current of the rotation motor 53, the value measured by the load measuring device 82a may be used instead. Additionally, although the position control of the rotary tool 3 is carried out by using the value measured by the upper position measuring device 81a, a rotation sensor such as an encoder that detects the rotational amount of the upper pressing motor 61a may be used instead.

(Second control)

Fig. 23 is a diagram showing operation control of carrying out friction stir welding without plunging while the rotary tool 3 and the backing tool 4 are inclined when the welding apparatus has a configuration in which the backing tool 4 can be moved in the vertical direction. Fig. 24 is a control flowchart of procedures of a process that is performed by the control device 83 shown in Fig. 8.

As shown in Figs. 23 and 24, before the start of friction stir welding, the rotary tool 3 and the backing tool 4 are positioned at the standby positions 20a and 20b, respectively. At the standby positions 20a and 20b, the rotary and backing tools 3 and 4 are inclined.

In addition, the upper and lower position measuring devices 81a and 81b (refer to Fig. 8) that are mounted on the upper casings 51 and 52 are used to measure distances between the joint portion J and the rotary and backing tools 3 and 4, and planned insertion depths of the rotary and backing tools 3 and 4 are computed (step S1). Next, the pressing motor 61a and a position maintaining motor 61b are driven to move the tools 3 and 4 to the planned insertion depths by position control (step S2A) . At this time, the shoulder surface 3b of the rotary tool 3 and the pressing force maintaining surface 4b of the backing tool 4 are set to a predetermined range (e.g., the plate thickness t) on the basis of the values measured by the position measuring devices 81a and 81b. Then, under the state that the insertion positions of the tools are maintained by position control, the moving device 75 is driven to move the upper casings 51, 52 in the welding direction (step S2A) and friction stir welding is started from friction stir starting positions 21a and 21b at the edge surface 24 of the joint portion. At this time, as described above, the friction stir welding is started without plunging by inserting the rotary and backing tools 3 and 4 into the metal plates from the edge surface 24 while pressing the shoulder surface 3b of the rotary tool 3 and the pressing force maintaining surface 4b of the backing tool 4 against the edge surface 24 as the position control is maintained (refer to Fig. 23, etc.) .

After the start of the friction stir welding, the constant load control is carried out to control the insertion position of the rotary tool so that the load applied to the rotation motor 53 of the rotary tool 3 is maintained at a predetermined value on the basis of the control current of the rotation motor 53 for the rotary tool 3 (step S3A), and before the tools reach positions 22a and 22b at which the friction stir welding finishes, the control is switched to the constant position control to maintain the insertion positions of the tools at that time (step S4A) and further to control the tools to pass through the friction stir finishing positions 22a and 22b. As for the backing tool 4, even after the start of the friction stir welding, the position control is maintained and the tool 4 is allowed to pass through the friction stir finishing positions 22a and 22b while the position control is maintained (step S2A to step S4).

In this way, by switching the control for the rotary tool 3 to the constant load control after the start of the friction stir welding, stable friction stirring can be performed even when the thickness of the joint portion J varies.

Especially even when the materials to be joined are high in stiffness, the shapes of the metal plates are changed by an irregularity of the joint portion J of the butted metal plates, and the front and back surfaces of the joint portion J cannot be sufficiently pressed by only the pressing force applied by the tool pressing device 45, stable friction stirring can be performed by maintaining the position control of the backing tool 4.

The above control in each step is carried out by the control device 83 that receives the values measured by the upper and lower position measuring devices 81a, 81b and then provides, on the basis of the measured values and the control current of the rotation motor 53, operating commands to various actuators such as the rotation motor 53, the pressing motors 61a, the position maintaining motor 61b, and the traveling motor 73.

Although in the above operation control, the constant load control of the rotary tool 3 is carried out by using the control current of the rotation motor 53, the value measured by the load measuring device 82a may be used instead. Additionally, although the position control of the rotary and backing tools 3 and 4 is carried out by using the values measured by the upper and lower position measuring devices 81a, 81b, rotation sensors such as encoders that detect the rotational amounts of the upper pressing motor 61a and the position maintaining motor 61b may be used instead.

<Example of application>

Next, as embodiments of the present invention, the cases where the present invention is applied to various welded joints are described with reference to Figs. 25 to 29. The cases where the thicknesses of the two metal plates are different are described with reference to Figs. 31 to 38.

(Cylindrical materials)

Figs. 25 and 26 are perspective views of a welding method for cylindrical materials (hereinafter referred to as pipe materials) that are represented by pipes. Fig. 25 is the perspective view showing the case where a metal plate is formed in a cylindrical shape, both end portions of the metal plate are butted, and the friction stir welding is performed on the butting portions so that the metal plate forms an integrated cylindrical member. Fig. 26 is the perspective view showing friction stir welding that is performed to join together two pipe members that form a single long member.

The pressing force maintaining surface 4b of the backing tool 4 is processed and formed in a shape corresponding to the shape of a back surface (a cylindrical shape) of the pipe material 90.

As shown in Fig. 25, the metal plate 90 is formed in the cylindrical shape, and both end portions of the metal plate 90 are butted. At the butting portion, the rotary tool 3 and the backing tool 4 are arranged in opposed relationship on the front and back surface sides of a joint portion J of the pipe material. Next, the rotary tool 3 is rotated and moved in a direction to approach the backing tool 4 so that the tip end of the protruding portion 3d of the rotary tool 3 is inserted in the recessed portion 4d of the backing tool 4, the pressing force maintaining surface 4b of the backing tool 4 is brought into contact with the back surface of the joint portion J so that the joint portion J is sandwiched between the shoulder surface 3b and the pressing force maintaining surface 4b, and the shoulder surface 3b of the rotary tool 3 is pressed against the front surface of the joint portion J. Next, under the state (in which the tip end of the protruding portion 3d of the rotary tool 3 is inserted in the recessed portion 4d of the backing tool 4, the pressing force maintaining surface 4b of the backing tool 4 is in contact with the back surface of the joint portion J, the joint portion J is sandwiched between the shoulder surface 3b and the pressing force maintaining surface 4b, and the shoulder surface 3b is pressed against the front surface of the joint portion J), the rotary tool 3 is moved along the joint portion J while being rotated. When the friction stirring is performed during the movement, the protruding portion 3d is inserted in the entire region of the joint portion J in the thickness direction of the metal plates. This operation causes the entire region of the joint portion J in the thickness direction of the metal plates to be frictionally stirred and causes both ends of the metal plate 90 to be joined together in the entire region of the joint portion J in the thickness direction of the metal plates. For the operation control from the start of the welding to the end of the welding, the control described with reference to Figs. 21 to 24 is appropriately applied.

Although the rotary and backing tools 3 and 4 are moved along the joint portion (joint line) J, the metal plate 90 formed in the cylindrical shape may be moved so that the rotary tool 3 and the backing tool 4 relatively moves along the joint portion J (joint line).

In welding shown in Fig. 26, an end portion of a pipe material 91 and an end portion of a pipe material 92 are butted, and the butting portions (joint portion J) are subjected to the friction stir welding.

(L shape, T shape)

The present invention is applicable to welding of an L-shaped member and a T-shaped member.

Figs. 27A and 27B are perspective views showing the case where a metal plate 93 and a metal plate 94 are arranged in an L shape and corner portions of the metal plates 93 and 94 are in contact with each other and subjected to the friction stir welding. Fig. 27A is the perspective view showing a state in which the friction stir welding is being performed, while Fig. 27B is the perspective view showing a state in which the friction stir welding is started. Fig. 28 is a perspective view showing the case where the metal plate 93 and the metal plate 94 are arranged in a T shape. Fig. 29 is a perspective view showing the case where the metal plate 93, the metal plate 94, and a metal plate 95 are arranged in a T shape.

As shown in Figs. 27A and 27B, the metal plate 93 and the metal plate 94 are arranged in the L shape. At the contact portion (corner portion) of the metal plates 93 and 94, the rotary tool 3 and the backing tool 4 are arranged in opposed relationship on the front and back surface sides of the joint portion J. Next, the rotary tool 3 is rotated and moved in a direction to approach the backing tool 4 so that the tip end of the protruding portion 3b of the rotary tool 3 is inserted into the recessed portion 4d of the backing tool 4, the pressing force maintaining surface 4b of the backing tool 4 is brought into contact with the back surface of the joint portion J so that the joint portion J is sandwiched between the shoulder surface 3b and the pressing force maintaining surface 4b, and the shoulder surface 3b of the rotary tool 3 is pressed against the front surface of the joint portion J. Then, under the state (in which the tip end of the protruding portion 3d of the rotary tool 3 is inserted in the recessed portion 4d of the backing tool 4, the pressing force maintaining surface

4b of the backing tool 4 is in contact with the back surface of the joint portion J, the joint portion J is sandwiched between the shoulder surface 3b and the pressing force maintaining surface 4b, and the shoulder surface 3b of the rotary tool 3 is pressed against the front surface of the joint portion J), the rotary tool 3 is moved along the joint portion J while being rotated. When the friction stir welding is performed during the movement, the protruding portion 3d is inserted in the entire region of the joint portion J in the thickness direction of the metal plates. The metal plate 94 is joined together with the metal plate 93 in the entire region of the joint portion J in the thickness direction of the metal plates. For a control method from the start of the welding to the end of the welding, the control described with reference to Figs. 21 to 24 is appropriately applied.

Although the rotary and backing tools 3 and 4 are moved along the joint portion (joint line) J in the welding direction, the metal plates 93, 94 may be moved instead so that the rotary tool 3 and the backing tool 4 relatively moves along the joint portion J (joint line).

In the welding shown in Fig. 28, the metal plate 93 and the metal plate 94 are arranged in the T shape and subjected to the friction stir welding. In the welding shown in Fig. 29, the metal plate 93, the metal plate 94, and the metal plate 95 are arranged in the T shape and subjected to the friction stir welding.

The pressing force maintaining surface portion 4c of the backing tool 4 is processed into such a shape that a part of the pressing force maintaining surface portion 4c is removed and the recessed portion 4d is open at the removed part. The side surfaces of the metal plate 93, however, extend along the joint portion J and cover the removed part of the pressing force maintaining surface portion 4c, and whereby the effects of the present invention are not changed.

(Different thicknesses and step)

The present invention is applicable to the case where the two metal plates are different in thickness and the joint portion has a step. Hereinafter, first to third cases of different thicknesses are described.

Fig. 30 is a diagram showing relationships between a rotational direction of the rotary tool and advancing and retreating sides. As shown in Fig. 30, a side on which the rotational direction of the rotary tool 3 and the progress direction of the friction stirring (welding direction or tool traveling direction) match is referred to as an advancing side AS, while a side on which the rotational direction of the rotary tool 3 and the progress direction of the friction stirring are opposed is referred to as a retreating side RS.

First case of different thicknesses

Fig. 31 is a diagram describing the case where a step forms on the front surface side (upper side in Fig. 31) of the two metal plates 1, 2 in order that no step forms on the back surface side (lower side in Fig. 31). In this case, the metal plates 1, 2 are arranged so that the metal plate 1 with a larger thickness is located on the retreating side RS and the metal plate 2 with a smaller thickness is located on the advancing side AS.

The metal easily renders plastic flow from the metal plate 1 with the larger thickness to the metal plate 2 with the smaller thickness by the friction stirring of the rotary tool 3 (RS to AS). A burr that corresponds to extra plastic flow collides with the step (AS to RS) and is discharged in the welding direction. It is, therefore, possible to suppress generation of a burr on a bead edge portion of the front surface of the joint portion and form the joint portion of which the quality of the front surface is maintained.

Fig. 32 is a diagram showing a state in which a tail end of the rotary tool 3 is inclined toward the side of the metal plate 2 with the smaller thickness in the case shown in Fig. 31. It is assumed that a distance between the shoulder surface 3b of the rotary tool 3 and the pressing force maintaining surface 4b of the backing tool 4 is the distance $\delta$. The rotary tool 3 is inclined so that the distance $\delta2$ between the surfaces on the back side of the traveling direction of the tools is smaller than the distance $\delta1$ between the surfaces on the front side of the traveling direction of the tools (refer to Fig. 16) and a distance $\delta4$ between the surfaces on the side of the metal plate 2 with the smaller thickness is smaller than a distance $\delta3$ between the surfaces on the side of the metal plate 1 with the larger thickness and the shoulder surface 3b of the rotary tool 3 is substantially in contact with the front surfaces of the thick metal plate 1 and the thin metal plate 2 when the rotary tool 3 is viewed from the side surface in a direction in which the rotary tool 3 is moved.

Fig. 33 is a schematic view of a cross sectional shape of the joint portion after the welding. The back surfaces of the metal plates 1, 2 are substantially matched by performing the friction stir welding under the states shown in Figs. 31 and 32.

The present inventors have conducted a friction stir welding experiment under the states shown in Figs. 31 and 32. The welding was performed under the state that the rotational speed of the rotary tool 3 was 1000 rpm and the movement speed (welding speed) was 2 m per minute. The soundness of the joint portions was evaluated by observing cross sections of formed joint portions and conducting a 180° bending test on the formed joint portions. As a result of the observation of the cross sections, it was found that the joint portions were formed without a defect. In the bending test, it was confirmed that a crack did not occur and the joint portions were formed soundly.

Second case of different thicknesses

Fig. 34 is a diagram describing the case where a step forms on the back surface side (lower side of Fig. 34) of the two metal plates 1, 2 in order that no step forms on the front surface side (upper side of Fig. 34). In this case, the pressing force maintaining surface 4b of the backing tool 4 is processed and formed in a shape corresponding to the difference (step on the back surface side) between the thicknesses of the metal plates 1, 2. Specifically, since a vertical position at which the backing tool 4 corresponding to the thin metal plate 2 is located is higher than a vertical position at which the backing tool 4 corresponding to the thick metal plate 1 is located, the pressing force maintaining surface 4b of the backing tool 4 is brought into contact with the back surfaces of the metal plates 1, 2.

Fig. 35 is a schematic diagram showing a cross sectional shape of the joint portion after the welding. The front surfaces of the metal plates 1, 2 are substantially matched by performing the friction stir welding under the state shown in Fig. 34.

The present inventors have carried out the friction stir welding under the state that the rotational speed of the rotary tool 3 was 1000 rpm and the movement speed (welding speed) was 2 m per minute in the second case in the same manner as the first case. The soundness of formed joint portions was evaluated by observing cross sections of the formed joint portions and conducting the 180° bending test on the formed joint portions. As a result of the observation of the cross sections, it was found that the joint portions were formed without a defect. In the bending test, it was confirmed that a crack did not occur and the joint portions were formed soundly.

Third case of different thicknesses

Fig. 36 is a diagram describing the case where a step forms on each of the front and back surface sides of butting portions of two metal plates 1, 2 with the centers thereof aligned. In this case, the rotary tool 3 is set so that the higher side of the step is the retreating side (RS) and the lower side of the step is the advancing side (AS). The pressing force maintaining surface 4b of the backing tool 4 is processed and formed in a shape corresponding to the difference (step on the back surface side) between the thicknesses of the metal plates 1, 2.

Fig. 37 is a diagram showing a state in which the tail end of the rotary tool 3 is inclined toward the side of the metal plate 2 with the smaller thickness in the case shown in Fig. 36.

Fig. 38 is a schematic view of a cross sectional shape of a joint portion after the welding. The centers of the metal plates 1, 2 in the thickness direction are substantially matched by performing the friction stir welding under the states shown in Figs. 36 and 37.

The present inventors have carried out the friction stir welding under the state that the rotational speed of the rotary tool 3 was 1000 rpm and the movement speed (welding speed) was 2 m per minute in the third case in the same manner as the first and second cases. The soundness of formed joint portions was evaluated by observing cross sections of the formed joint portions and conducting the 180° bending test on the formed joint portions. As a result of the observation of the cross sections, it was found that the joint portions were formed without a defect. In the bending test, it was confirmed that a crack did not occur and the joint portions were formed soundly.

Consideration of first to third cases of different thicknesses

The shapes of the step portions after the welding can be changed to the different shapes shown in Figs. 33, 35, and 38 by changing the arrangement of the metal plates 1, 2, the arrangement and inclination of the rotary tool 3, and the arrangement and shape of the backing tool 4.

In the second and third cases of different thicknesses, the pressing force maintaining surface 4b of the backing tool 4 is processed and formed in a shape corresponding to the difference (step on the back surface side) between the thicknesses of the metal plates 1, 2. The effects of the present invention, however, can be obtained without the processing if the difference (step) between the thicknesses is less than 2 mm.

If the amount of the step is equal to or larger than 2 mm, a joint defect may occur or the strength of the joint portion may be reduced, and it is preferable to process the shape of the backing tool. If backing tools 4 are prepared for variations in the differences (amounts of steps) between the thicknesses, the economy is worsened. Thus, the welding of the first case of different thicknesses is suitable.

Description of Reference Numerals and Symbols

1, 2        Metal plates
3           Rotary tool

| | |
|---|---|
| 3a | Tool body |
| 3b | Shoulder surface |
| 3c | Shoulder portion |
| 3d | Protruding portion (probe) |
| 4 | Backing tool |
| 4a | Body |
| 4b | Pressing force maintaining surface |
| 4c | Pressing force maintaining surface portion |
| 4d | Recessed portion |
| 5 | Entry clamping device |
| 5a, 5b | Upper and lower clamping plates |
| 6 | Delivery clamping device |
| 6a, 6b | Upper and lower clamping plates |
| 7 | Tool rotation device |
| 9 | Upper housing |
| 10 | Lower housing |
| 11a, | b Rails |
| 11, 12 | Upper and lower rails |
| 13, | 14 Frames |
| 15 | Axis |
| 18 | Base plate |
| 19 | Carriage frame |
| 19a, 19b | Upper and horizontal frames |
| 20a | Rotary tool standby position |
| 20b | Backing tool standby position |
| 21a | Upper position at which friction stir welding is started |
| 21b | Lower position at which friction stir welding is started |
| 22a | Upper position at which friction stir welding is terminated |
| 22b | Lower position at which friction stir welding is terminated |
| 24 | Metal plate edge surface at which friction stir welding |
| is | started |
| 45 | Tool pressing device |
| 46 | Tool position maintaining device |
| 47 | Upper moving device |
| 48 | Lower moving device |
| 51 | Upper casing |
| 52 | Lower casing |
| 53 | Rotation motor |
| 61a | Pressing motor |
| 61b | Position maintaining motor |
| 62a, 62b | Screws |
| 63a, 63b | Support frames |
| 64a, 64b | Shafts |
| 65a, 65b | Traveling frames |
| 66a, 66b | Wheels |
| 67a, 67b | Traveling motors |
| 71 | Wheel |
| 72 | Screw |
| 73 | Traveling motor |
| 74 | Control device (for traveling) |
| 75 | Moving device |
| 76a | Upper inclining support device |
| 76b | Lower inclining support device |
| 77a, | 77b Angle adjusting motors |
| 81a | Upper position measuring device |
| 81b | Lower position measuring device |
| 82a | Upper load measuring device |
| 83 | Control device |

90 to 95    Metal Plates (application examples)
J            Joint portion

**Claims**

1.  A friction stir welding method in which a rotary tool (3) and a backing tool (4) are arranged on front and back surface sides of a joint portion (J) of two butted metal plates (1, 2), the rotary tool frictionally stirs the joint portion and performs friction stir welding on the two metal plates, wherein:

    the rotary tool (3) includes a tool body (3a) having a shoulder portion (3c) formed at a tip end portion thereof and at least one protruding portion (3d) formed to protrude from the tip end portion of the tool body, wherein the backing tool (4) includes a backing tool body (4a) having a pressing force maintaining surface portion (4c) formed at a tip end portion thereof and at least one recessed portion (4d) which is a cylindrical hole for receiving a tip end of the protruding portion (3d) when the two metal plates (1, 2) are to be welded, the method comprising the steps of:

    arranging the rotary tool (3) and the backing tool (4) in opposed relationship on the front and back surface sides of the joint portion (J) of the two metal plates;
    rotating the rotary tool (3); moving the rotary tool (3) in such a direction that the rotary tool (3) approaches the backing tool (4); inserting the tip end of the protruding portion (3d) of the rotary tool (3) into the recessed portion (4d) of the backing tool; sandwiching the joint portion (J) between a shoulder surface (3b) of the shoulder portion (3c) of the rotary tool and a pressing force maintaining surface (4b) of the backing tool; pressing the shoulder surface (3b) of the shoulder portion of the rotary tool and the pressing force maintaining surface (4b) of the backing tool against the front and back surfaces of the joint portion, respectively; moving the rotary tool (3) and the backing tool (4) along the joint portion in synchronization with each other; and frictionally stirring the joint portion in the entire region in the thickness direction of the metal plates by use of the rotary tool (3).

2.  A friction stir welding method in which a rotary tool (3) and a backing tool (4) are arranged on front and back surface sides of a joint portion (J) of two butted metal plates (1, 2), the rotary tool frictionally stirs the joint portion and performs friction stir welding on the two metal plates, wherein:

    the rotary tool (3) includes a tool body (3a) having a shoulder portion (3c) formed at a tip end portion thereof and at least one protruding portion (3d) formed to protrude from the tip end portion of the tool body, the backing tool (4) includes a backing tool body (4a) having a pressing force maintaining surface portion (4c) formed at a tip end portion thereof and at least one recessed portion (4d) which is a cylindrical hole for receiving a tip end of the protruding portion (3d) when the two metal plates (1, 2) are to be welded, the method comprising the steps of:

    arranging the rotary tool (3) and the backing tool (4) in opposed relationship on the front and back surface sides of the joint portion (J) of the two metal plates;
    rotating the rotary tool (3); moving the rotary tool (3) in such a direction that the rotary tool (3) approaches the backing tool (4); inserting the tip end of the protruding portion (3d) of the rotary tool (3) into the recessed portion (4d) of the backing tool; sandwiching the joint portion (J) between a shoulder surface (3b) of the shoulder portion (3c) of the rotary tool and a pressing force maintaining surface (4b) of the backing tool; pressing the shoulder surface (3b) of the shoulder portion of the rotary tool and the pressing force maintaining surface (4b) of the backing tool against the front and back surfaces of the joint portion, respectively; moving the two metal plates (1, 2) in a welding direction; and frictionally stirring the joint portion in the entire region in the thickness direction of the metal plates by use of the rotary tool (3).

3.  The friction stir welding method according to claim 1 or 2, wherein:
    regarding a distance ($\delta$) between the shoulder surface (3b) and pressing force maintaining surface (4b) of the rotary and backing tools (3) and (4) arranged in opposed relationship, at least one of the rotary tool (3) and the backing tool (4) is inclined so that a distance ($\delta2$) between the surfaces on a back side of a traveling direction of the rotary and backing tools is smaller than a distance ($\delta1$) between the surfaces on a front side of the traveling direction of the rotary and backing tools.

4. The friction stir welding method according to any of claims 1 to 3, wherein:

the rotary tool (3) is moved by position control to a planned insertion depth in the thickness direction of the metal plates (1, 2) before the start of the friction stir welding;
the rotary tool is moved by position control from an edge surface (24) of the joint portion of the two metal plates and starts the friction stir welding while the insertion depth of the rotary tool (3) is maintained;
the control is switched to load constant control of controlling an insertion position of the rotary tool so that a load applied to the rotary tool (3) is a predetermined value after the start of the friction stir welding;
before the tools reach a joint end portion at which the friction stir welding is terminated, the control is switched to the position control of maintaining an insertion position of the rotary tool (3) at that time and the tools pass through the joint end portion; and
the backing tool (4) is moved by the position control to a planned insertion depth in the thickness direction of the metal plates (1, 2) before the start of the friction stir welding and the position control is performed to maintain the position from the start to end of the friction stir welding.

5. A friction stir welding apparatus in which a rotary tool (3) and a backing tool (4) are arranged on front and back surface sides of a joint portion (J) of two butted metal plates (1, 2), and the rotary tool frictionally stirs the joint portion and performs friction stir welding on the two metal plates, comprising:

first and second clamping devices (5, 6) that clamp the metal plates (1, 2), respectively;
a tool rotation device (7) to which the rotary tool is attached and that rotationally drives the rotary tool so that the rotary tool (3) and the backing tool (4) are arranged in opposed relationship on the front and back surface sides of the joint portion (J) of the metal plates (1, 2);
a tool position maintaining device (46) that maintains the backing tool (4) at a metal plate back surface position;
a tool pressing device (45) that causes the rotary tool (3) attached to the tool rotation device to move in such a direction that the rotary tool (3) approaches the backing tool (4) and presses the rotary tool against the front surface of the joint portion of the metal plates; and
moving devices (47, 48, 75) that move the rotary tool (3) attached to the tool rotation device and the backing tool (4) along the joint portion (J) while the rotary tool (3) and the backing tool (4) are synchronized with each other, wherein:

the rotary tool (3) includes a tool body (3a) having a shoulder portion (3c) formed at a tip end portion thereof and at least one protruding portion (3d) formed so as to protrude from the tip end portion of the tool body;
the backing tool (4) includes a tool body (4a) having a pressing force maintaining surface portion (4c) formed at a tip end portion thereof and at least one recessed portion (4d) which is a cylindrical hole formed at the tip end portion of the tool body and configured to receive a tip end of the protruding portion (3d) when the two metal plates (1, 2) are to be welded;
the tool pressing device (45) is suitable for applying a pressing force to the joint portion (J) by inserting the tip end of the protruding portion (3d) of the rotary tool into the recessed portion (4d) of the backing tool, pressing the shoulder surface (3b) of the shoulder portion of the rotary tool against the front surface of the joint portion, and sandwiching the joint portion (J) between the shoulder surface (3b) of the rotary tool and the pressing force maintaining surface (4b) of the backing tool when the rotary tool is moved in a direction so as to approach the backing tool; and
the moving devices (47, 48, 75) are suitable for moving the rotary tool (3) and the backing tool (4) along the joint portion under the state that the tip end of the protruding portion (3d) of the rotary tool is inserted in the recessed portion (4d) of the backing tool, the shoulder surface (3b) of the shoulder portion of the rotary tool is pressed against the front surface of the joint portion, and the rotary tool (3) and the backing tool (4) are synchronized with each other, so that the rotary tool (3) frictionally stirs the joint portion in the entire region in a thickness direction of the metal plates.

6. A friction stir welding apparatus in which a rotary tool (3) and a backing tool (4) are arranged on front and back surface sides of a joint portion (J) of two butted metal plates (1, 2), and the rotary tool frictionally stirs the joint portion and performs friction stir welding on the two metal plates, comprising:

first and second clamping devices (5, 6) that clamp the metal plates (1, 2), respectively;
a tool rotation device (7) to which the rotary tool is attached and that rotationally drives the rotary tool so that the rotary tool (3) and the backing tool (4) are arranged in opposed relationship on the front and back surface sides of the joint portion (J) of the metal plates (1, 2);
a tool position maintaining device (46) that maintains the backing tool (4) at a metal plate back surface position;
a tool pressing device (45) that causes the rotary tool (3) attached to the tool rotation device to move in such a direction that the rotary tool (3) approaches the backing tool (4) and presses the rotary tool against the front surface of the joint portion of the metal plates; and
a moving device (75) that causes the clamping devices (5, 6) to move the two metal plates (1, 2) in a welding direction, wherein:

the rotary tool (3) includes a tool body (3a) having a shoulder portion (3c) formed at a tip end portion thereof and at least one protruding portion (3d) formed so as to protrude from the tip end portion of the tool body;
the backing tool (4) includes a tool body (4a) having a pressing force maintaining surface portion (4c) formed at a tip end portion thereof and at least one recessed portion (4d) which is a cylindrical hole, formed at the tip end portion of the tool body and configured to receive a tip end of the protruding portion (3d) when the two metal plates (1, 2) are to be welded;
the tool pressing device (45) is suitable for applying a pressing force to the joint portion (J) by inserting the tip end of the protruding portion (3d) of the rotary tool into the recessed portion (4d) of the backing tool, pressing the shoulder surface (3b) of the shoulder portion of the rotary tool against the front surface of the joint portion, and sandwiching the joint portion (J) between the shoulder surface (3b) of the rotary tool and the pressing force maintaining surface (4b) of the backing tool when the rotary tool and the backing tool are moved in a direction so as to approach each other; and
the moving device (75) is suitable for moving the metal plates (1, 2) in the welding direction under the state that the tip end of the protruding portion (3d) of the rotary tool is inserted in the recessed portion (4d) of the backing tool, the shoulder surface (3b) of the shoulder portion of the rotary tool is pressed against the front surface of the joint portion, so that the rotary tool (3) frictionally stirs the joint portion in the entire region in a thickness direction of the metal plates.

7.  The friction stir welding apparatus according to Claim 5 or 6, further comprising:
inclination supporting devices (76a, 76b) for inclining and supporting at least one of the rotary tool (3) and the backing tool (4) such that, regarding a distance ($\delta$) between the shoulder surface (3b) and the pressing force maintaining surface (4b) of the rotary and backing tools (3) and (4) arranged in opposed relationship, a distance ($\delta2$) between the surfaces on a back side of a traveling direction of the rotary and backing tools is smaller than a distance ($\delta1$) between the surfaces on a front side of the traveling direction of the rotary and backing tools.

8.  The friction stir welding apparatus according to any of claims 5 to 7, further comprising:
a control device (83) that controls the tool pressing device (45), the tool position maintaining device (46), and the moving devices (47, 48, 75) so that:

the rotary tool (3) is moved by position control to a planned insertion depth in the thickness direction of the metal plates (1, 2) before the start of the friction stir welding;
the rotary tool is moved in the welding progress direction by position control from the edge surface (24) of the joint portion of the two metal plates and starts the friction stir welding while the insertion depth of the rotary tool (3) is maintained;
after the start of the friction stir welding, the control is switched to load constant control of controlling an insertion position of the rotary tool so that a load applied to the rotary tool (3) is a predetermined value;
before the tools reach a joint end portion at which the friction stir welding is terminated, the control is switched to the position control of maintaining an insertion position of the rotary tool (3) at that time and the tools pass through the joint end portion;
and the backing tool (4) is moved by the position control to a planned insertion depth in the thickness direction of the metal plates (1, 2) before the start of the friction stir welding and the position control is performed to maintain the position from the start to end of the friction stir welding.

9.  The friction stir welding apparatus according to any of claims 5 to 8, wherein:

the rotary tool is made of a cemented carbide alloy of sintered tungsten carbide or a tungsten alloy; and
the two metal plates (1, 2) to be joined are made of a material having a melting point of 1000°C or higher.

**Patentansprüche**

1.  Rührreibschweißverfahren, bei dem ein Rotationswerkzeug (3) und ein Stützwerkzeug (4) an Vorder- und Rückseite eines Verbindungsbereichs (J) von zwei aneinanderstoßenden Metallplatten (1, 2) angeordnet sind, wobei das Rotationswerkzeug den Verbindungsbereich rührreibt und das Rührreibschweißen an den beiden Metallplatten durchführt, wobei:

    das Rotationswerkzeug (3) einen Werkzeugkörper (3a) mit einem an einem Spitzenendabschnitt davon ausgebildeten Schulterabschnitt (3c) und mindestens einem vorstehenden Abschnitt (3d) umfasst, der geformt ist, um von dem Spitzenendabschnitt des Werkzeugkörpers vorzustehen,
    wobei
    das Stützwerkzeug (4) einen Stützwerkzeugkörper (4a) mit einem eine Anpresskraft aufrechterhaltenden Oberflächenabschnitt (4c), der an einem Spitzenendabschnitt davon ausgebildet ist, und mindestens einen vertieften Abschnitt (4d) aufweist, der ein zylindrisches Loch zum Aufnehmen eines Spitzenendes des vorstehenden Abschnitts (3d) ist, wenn die beiden Metallplatten (1, 2) geschweißt werden sollen,
    wobei das Verfahren die Schritte umfasst:

    Anordnen des Rotationswerkzeugs (3) und des Stützwerkzeugs (4) in gegenüberliegender Beziehung an Vorder- und Rückseite des Verbindungsbereichs (J) der beiden Metallplatten;
    Rotieren des Rotationswerkzeugs (3); Bewegen des Rotationswerkzeugs (3) in einer solchen Richtung, dass sich das Rotationswerkzeug (3) dem Stützwerkzeug (4) nähert; Einführen des Spitzenendes des vorstehenden Abschnitts (3d) des Rotationswerkzeugs (3) in den vertieften Abschnitt (4d) des Stützwerkzeugs; Anordnen des Verbindungsbereichs (J) zwischen einer Schulterfläche (3b) des Schulterabschnitts (3c) des Rotationswerkzeugs und einer die Anpresskraft aufrechterhaltenden Fläche (4b) des Stützwerkzeugs;
    Anpressen der Schulterfläche (3b) des Schulterabschnitts des Rotationswerkzeugs und der die Anpresskraft aufrechterhaltenden Fläche (4b) des Stützwerkzeugs gegen die Vorder- bzw. Rückseite des Verbindungsbereichs;
    Bewegen des Drehwerkzeugs (3) und des Stützwerkzeugs (4) entlang des Verbindungsbereichs in Synchronisation miteinander; und
    Rührreiben des Verbindungsbereichs in der gesamten Region in Dickenrichtung der Metallplatten mittels des Rotationswerkzeugs (3).

2.  Rührreibschweißverfahren, bei dem ein Rotationswerkzeug (3) und ein Stützwerkzeug (4) an Vorder- und Rückseite eines Verbindungsbereichs (J) von zwei aneinanderstoßenden Metallplatten (1, 2) angeordnet sind, wobei das Rotationswerkzeug den Verbindungsbereich rührreibt und das Rührreibschweißen an den beiden Metallplatten durchführt, wobei:

    das Rotationswerkzeug (3) einen Werkzeugkörper (3a) mit einem an einem Spitzenendabschnitt davon ausgebildeten Schulterabschnitt (3c) und mindestens einem vorstehenden Abschnitt (3d) umfasst, der geformt ist, um von dem Spitzenendabschnitt des Werkzeugkörpers vorzustehen,
    das Stützwerkzeug (4) einen Stützwerkzeugkörper (4a) mit einem eine Anpresskraft aufrechterhaltenden Oberflächenabschnitt (4c), der an einem Spitzenendabschnitt davon ausgebildet ist, und mindestens einen vertieften Abschnitt (4d) aufweist, der ein zylindrisches Loch zum Aufnehmen eines Spitzenendes des vorstehenden Abschnitts (3d) ist, wenn die beiden Metallplatten (1, 2) verschweißt werden sollen,
    wobei das Verfahren die Schritte umfasst:

    Anordnen des Rotationswerkzeugs (3) und des Stützwerkzeugs (4) in gegenüberliegender Beziehung an Vorder- und Rückseite des Verbindungsbereichs (J) der beiden Metallplatten;
    Rotieren des Rotationswerkzeugs (3); Bewegen des Rotationswerkzeugs (3) in einer solchen Richtung, dass sich das Rotationswerkzeug (3) dem Stützwerkzeug (4) nähert; Einführen des Spitzenendes des vorstehenden Abschnitts (3d) des Rotationswerkzeugs (3) in den vertieften Abschnitt (4d) des Stützwerkzeugs; Anordnen des Verbindungsbereichs (J) zwischen einer Schulterfläche (3b) des Schulterabschnitts (3c) des Rotationswerkzeugs und einer die Anpresskraft aufrechterhaltenden Fläche (4b) des Stützwerkzeugs;
    Anpressen der Schulterfläche (3b) des Schulterabschnitts des Rotationswerkzeugs und der die Anpresskraft aufrechterhaltenden Fläche (4b) des Stützwerkzeugs gegen die Vorder- bzw. Rückseite des Verbindungsbereichs;

Bewegen der beiden Metallplatten (1, 2) in einer Schweißrichtung; und

Rührreiben des Verbindungsbereichs in der gesamten Region in Dickenrichtung der Metallplatten mittels Hilfe des Rotationswerkzeugs (3).

3. Rührreibschweißverfahren nach Anspruch 1 oder 2, bei dem:

bezüglich eines Abstands (δ) zwischen der Schulterfläche (3b) und der die Anpresskraft aufrechterhaltenden Fläche (4b) des Rotationswerkzeugs (3) und des Stützwerkzeugs (4), die in gegenüberliegender Beziehung angeordnet sind, das Rotationswerkzeug (3) und/oder das Stützwerkzeug (4) so geneigt ist, dass ein Abstand (δ2) zwischen den Flächen an einer in Bewegungsrichtung des Rotationswerkzeugs und des Stützwerkzeugs hinteren Seite kleiner als ein Abstand (δ1) zwischen den Flächen an einer in Bewegungsrichtung des Rotationswerkzeugs und des Stützwerkzeugs vorderen Seite ist.

4. Rührreibschweißverfahren nach einem der Ansprüche 1 bis 3, bei dem:

das Rotationswerkzeug (3) vor dem Beginn des Rührreibschweißens durch Positionssteuerung in Dickenrichtung der Metallplatten (1, 2) auf eine geplante Eintauchtiefe bewegt wird;

das Rotationswerkzeug durch Positionssteuerung von einer Kantenfläche (24) des Verbindungsbereichs der beiden Metallplatten aus bewegt wird und das Rührreibschweißen beginnt, während die Einführtiefe des Rotationswerkzeugs (3) beibehalten wird;

die Steuerung auf eine Lastkonstantsteuerung umgeschaltet wird, bei der eine Einführposition des Rotationswerkzeugs so gesteuert wird, dass eine auf das Rotationswerkzeug (3) ausgeübte Last nach dem Beginn des Rührreibschweißens einen vorgegebenen Wert hat;

bevor die Werkzeuge einen Verbindungsendabschnitt erreichen, an dem das Rührreibschweißen beendet wird, die Steuerung auf Positionssteuerung zur Beibehaltung einer Einführungsposition des Rotationswerkzeugs (3) zu diesem Zeitpunkt geschaltet wird, und die Werkzeuge den Verbindungsendabschnitt durchlaufen; und

das Stützwerkzeug (4) vor Beginn des Rührreibschweißens durch die Positionssteuerung in Dickenrichtung der Metallplatten (1, 2) auf eine geplante Eintauchtiefe bewegt wird und die Positionssteuerung durchgeführt wird, um die Position vom Beginn bis zum Ende des Rührreibschweißens beizubehalten.

5. Rührreibschweißvorrichtung, bei der ein Rotationswerkzeug (3) und ein Stützwerkzeug (4) an Vorder- und Rückseite eines Verbindungsbereichs (J) von zwei aneinanderstoßenden Metallplatten (1, 2) angeordnet sind und das Rotationswerkzeug den Verbindungsbereich rührreibt und das Rührreibschweißen an den beiden Metallplatten durchführt, umfassend:

erste und zweite Spannvorrichtungen (5, 6), die jeweils die Metallplatten (1, 2) einspannen;

eine Werkzeugrotationsvorrichtung (7), an der das Rotationswerkzeug befestigt ist und die das Rotationswerkzeug rotierend antreibt, so dass das Rotationswerkzeug (3) und das Stützwerkzeug (4) in gegenüberliegender Beziehung an Vorder- und Rückseite des Verbindungsbereichs (J) der Metallplatten (1, 2) angeordnet sind;

eine Werkzeugpositionshaltevorrichtung (46), die das Stützwerkzeug (4) an einer Metallplatten-Rückseitenposition hält;

eine Werkzeuganpressvorrichtung (45), die bewirkt, dass sich das an der Werkzeugrotationsvorrichtung angebrachte Rotationswerkzeug (3) in einer solchen Richtung bewegt, dass sich das Rotationswerkzeug (3) dem Stützwerkzeug (4) nähert und das Rotationswerkzeug gegen die Vorderseite des Verbindungsbereichs der Metallplatten drückt; und

Bewegungsvorrichtungen (47, 48, 75), die das an der Werkzeugrotationsvorrichtung angebrachte Rotationswerkzeug (3) und das Stützwerkzeug (4) entlang des Verbindungsbereichs (J) bewegen, wobei das Rotationswerkzeug (3) und das Stützwerkzeug (4) miteinander synchronisiert sind,

wobei:

das Rotationswerkzeug (3) einen Werkzeugkörper (3a) mit einem an seinem Spitzenendabschnitt davon ausgebildeten Schulterabschnitt (3c) und mindestens einem vorstehenden Abschnitt (3d) aufweist, der geformt ist, um von dem Spitzenendabschnitt des Werkzeugkörpers vorzustehen;

das Stützwerkzeug (4) einen Werkzeugkörper (4a) mit einem eine Anpresskraft aufrechterhaltenden Oberflächenabschnitt (4c), der an einem Spitzenendabschnitt davon ausgebildet ist, und mindestens einen vertieften Abschnitt (4d) aufweist, der ein zylindrisches Loch ist, das an dem Spitzenendabschnitt des Werkzeugkörpers ausgebildet ist und konfiguriert ist, um ein Spitzenende des vorstehenden Abschnitts (3d) aufzunehmen, wenn die beiden Metallplatten (1, 2) geschweißt werden sollen;

die Werkzeuganpressvorrichtung (45) geeignet ist, eine Anpresskraft auf den Verbindungsbereich (J) auszuüben, indem das Spitzenende des vorstehenden Abschnitts (3d) des Rotationswerkzeugs in den vertieften Abschnitt (4d) des Stützwerkzeugs eingeführt wird, die Schulterfläche (3b) des Schulterabschnitts des Rotationswerkzeugs an die Vorderseite des Verbindungsbereichs angepresst wird und der Verbindungsbereich (J) zwischen der Schulterfläche (3b) des Rotationswerkzeugs und der die Anpresskraft aufrechterhaltenden Fläche (4b) des Stützwerkzeugs eingeklemmt wird, wenn das Rotationswerkzeug in einer solchen Richtung bewegt wird, dass es sich dem Stützwerkzeug nähert; und
die Bewegungsvorrichtungen (47, 48, 75) geeignet sind, das Rotationswerkzeug (3) und das Stützwerkzeug (4) entlang des Verbindungsbereichs in dem Zustand zu bewegen, in dem das Spitzenende des vorstehenden Abschnitts (3d) des Rotationswerkzeugs in den vertieften Abschnitt (4d) des Stützwerkzeugs eingeführt ist, die Schulterfläche (3b) des Schulterabschnitts des Rotationswerkzeugs an die Vorderseite des Verbindungsbereichs angepresst wird und das Rotationswerkzeug (3) und das Stützwerkzeug (4) miteinander synchronisiert sind, so dass das Rotationswerkzeug (3) den Verbindungsbereich in der gesamten Region in Dickenrichtung der Metallplatten rührreibt.

6. Rührreibschweißvorrichtung, bei der ein Rotationswerkzeug (3) und ein Stützwerkzeug (4) an Vorder- und Rückseite eines Verbindungsbereichs (J) von zwei aneinanderstoßenden Metallplatten (1, 2) angeordnet sind und das Rotationswerkzeug den Verbindungsbereich rührreibt und das Rührreibschweißen an den beiden Metallplatten durchführt, umfassend:

erste und zweite Spannvorrichtungen (5, 6), die jeweils die Metallplatten (1, 2) einspannen;
eine Werkzeugrotationsvorrichtung (7), an der das Rotationswerkzeug befestigt ist und die das Rotationswerkzeug rotierend antreibt, so dass das Rotationswerkzeug (3) und das Stützwerkzeug (4) in gegenüberliegender Beziehung an Vorder- und Rückseite des Verbindungsbereichs (J) der Metallplatten (1, 2) angeordnet sind;
eine Werkzeugpositionshaltevorrichtung (46), die das Stützwerkzeug (4) an einer Metallplatten-Rückseitenposition hält;
eine Werkzeuganpressvorrichtung (45), die bewirkt, dass sich das an der Werkzeugrotationsvorrichtung angebrachte Rotationswerkzeug (3) in einer solchen Richtung bewegt, dass sich das Rotationswerkzeug (3) dem Stützwerkzeug (4) nähert und das Rotationswerkzeug gegen die Vorderseite des Verbindungsbereichs der Metallplatten drückt; und
eine Bewegungsvorrichtung (75), die die Spannvorrichtungen (5, 6) veranlasst, die beiden Metallplatten (1, 2) in einer Schweißrichtung zu bewegen,
wobei:

das Rotationswerkzeug (3) einen Werkzeugkörper (3a) mit einem an einem Spitzenendabschnitt davon ausgebildeten Schulterabschnitt (3c) und mindestens einem vorstehenden Abschnitt (3d) aufweist, der geformt ist, um von dem Spitzenendabschnitt des Werkzeugkörpers vorzustehen;
das Stützwerkzeug (4) einen Werkzeugkörper (4a) mit einem eine Anpresskraft aufrechterhaltenden Oberflächenabschnitt (4c), der an einem Spitzenendabschnitt davon ausgebildet ist, und mindestens einen vertieften Abschnitt (4d) aufweist, der ein zylindrisches Loch ist, das an dem Spitzenendabschnitt des Werkzeugkörpers ausgebildet und konfiguriert ist, um ein Spitzenende des vorstehenden Abschnitts (3d) aufzunehmen, wenn die beiden Metallplatten (1, 2) geschweißt werden sollen; die Werkzeuganpressvorrichtung (45) geeignet ist, eine Anpresskraft auf den Verbindungsbereich (J) auszuüben, indem das Spitzenende des vorstehenden Abschnitts (3d) des Rotationswerkzeugs in den vertieften Abschnitt (4d) des Stützwerkzeugs eingeführt wird, die Schulterfläche (3b) des Schulterabschnitts des Rotationswerkzeugs an die Vorderseite des Verbindungsbereichs angepresst wird, und der Verbindungsbereich (J) zwischen der Schulterfläche (3b) des Drehwerkzeugs und der die Anpresskraft aufrechterhaltenden Fläche (4b) des Stützwerkzeugs eingeklemmt wird, wenn das Rotationswerkzeug und das Stützwerkzeug in einer solchen Richtung bewegt werden, dass sie sich einander annähern; und
die Bewegungsvorrichtung (75) geeignet ist, die Metallplatten (1, 2) in der Schweißrichtung in dem Zustand zu bewegen, in dem das Spitzenende des vorstehenden Abschnitts (3d) des Drehwerkzeugs in den vertieften Abschnitt (4d) des Stützwerkzeugs eingeführt ist, die Schulterfläche (3b) des Schulterabschnitts des Drehwerkzeugs an die Vorderseite des Verbindungsbereichs angepresst wird, so dass das Rotationswerkzeug (3) den Verbindungsbereich in der gesamten Region in Dickenrichtung der Metallplatten rührreibt.

7. Rührreibschweißvorrichtung nach Anspruch 5 oder 6, die ferner umfasst:
Neigungsstützvorrichtungen (76a, 76b) zum Neigen und Stützen des Rotationswerkzeugs (3) und/oder des Stützwerkzeugs (4), so dass in Bezug auf einen Abstand ($\delta$) zwischen der Schulterfläche (3b) und der die Presskraft aufrechterhaltenden Fläche (4b) des Rotations- und des Stützwerkzeugs (3) und (4), die in gegenüberliegender Beziehung angeordnet sind, ein Abstand ($\delta$2) zwischen den Flächen an einer in Bewegungsrichtung des Rotationswerkzeugs und des Stützwerkzeugs hinteren Seite kleiner als ein Abstand ($\delta$1) zwischen den Flächen an einer in Bewegungsrichtung des Rotationswerkzeugs und des Stützwerkzeugs vorderen Seite ist.

8. Rührreibschweißvorrichtung nach einem der Ansprüche 5 bis 7, ferner umfassend:
eine Steuervorrichtung (83), die die Werkzeug-Pressvorrichtung (45), die Werkzeug-Positionshaltevorrichtung (46) und die Bewegungsvorrichtungen (47, 48, 75) so steuert, dass:

das Rotationswerkzeug (3) vor dem Beginn des Rührreibschweißens durch Positionssteuerung in Dickenrichtung der Metallplatten (1, 2) auf eine geplante Eintauchtiefe bewegt wird;
das Rotationswerkzeug durch Positionssteuerung von der Kantenfläche (24) des Verbindungsbereichs der beiden Metallplatten aus in Schweißfortschrittsrichtung bewegt wird und das Rührreibschweißen beginnt, während die Einführtiefe des Rotationswerkzeugs (3) beibehalten wird;
nach dem Start des Rührreibschweißens die Steuerung auf eine Lastkonstantsteuerung umgeschaltet wird, bei der eine Einführposition des Rotationswerkzeugs so gesteuert wird, dass eine auf das Rotationswerkzeug (3) ausgeübte Last einen vorgegebenen Wert hat;
bevor die Werkzeuge einen Verbindungsendabschnitt erreichen, an dem das Rührreibschweißen beendet wird, die Steuerung auf Positionssteuerung zur Beibehaltung einer Einführungsposition des Rotationswerkzeugs (3) zu diesem Zeitpunkt umgeschaltet wird und die Werkzeuge den Verbindungsendabschnitt durchlaufen;
und das Stützwerkzeug (4) vor Beginn des Rührreibschweißens durch die Positionssteuerung in Dickenrichtung der Metallplatten (1, 2) auf eine geplante Eintauchtiefe bewegt wird und die Positionssteuerung durchgeführt wird, um die Position vom Beginn bis zum Ende des Rührreibschweißens beizubehalten.

9. Rührreibschweißvorrichtung nach einem der Ansprüche 5 bis 8, bei der:

das Rotationswerkzeug aus einer Sinterkarbidlegierung aus gesintertem Wolframkarbid oder aus einer Wolframlegierung besteht; und
die beiden zu verbindenden Metallplatten (1, 2) aus einem Material mit einem Schmelzpunkt von 1000°C oder höher bestehen.

**Revendications**

1. Méthode de soudage par friction-malaxage dans laquelle un outil rotatif (3) et un outil d'appui (4) sont disposés sur les surfaces avant et arrière d'une partie de joint (J) de deux plaques métalliques (1, 2) aboutées, l'outil rotatif malaxe par friction la partie de joint et effectue un soudage par friction-malaxage sur les deux plaques métalliques, dans laquelle :

l'outil rotatif (3) comprend un corps d'outil (3a) ayant une partie d'épaulement (3c) formée à une partie d'extrémité de pointe de celui-ci et au moins une partie saillante (3d) formée pour faire saillie de la partie d'extrémité de pointe du corps d'outil,
dans laquelle
l'outil d'appui (4) comprend un corps d'outil d'appui (4a) ayant une partie de surface de maintien de force de pressage (4c) formée à une partie d'extrémité de pointe de celui-ci et au moins une partie en retrait (4d) qui est un trou cylindrique pour recevoir une extrémité de pointe de la partie saillante (3d) lorsque les deux plaques métalliques (1, 2) doivent être soudées,
le procédé comprenant les étapes de :

disposer l'outil rotatif (3) et l'outil d'appui (4) en relation opposée sur les surfaces avant et arrière de la partie de joint (J) des deux plaques métalliques ;
faire tourner l'outil rotatif (3) ; déplacer l'outil rotatif (3) dans une direction telle que l'outil rotatif (3) s'approche de l'outil de support (4) ; insérer l'extrémité de pointe de la partie saillante (3d) de l'outil rotatif (3) dans la partie en retrait (4d) de l'outil de support ; prendre en sandwich la partie de joint (J) entre une surface d'épaulement (3b) de la partie d'épaulement (3c) de l'outil rotatif et une surface de maintien de force de pressage (4b) de l'outil de support ;
presser la surface d'épaulement (3b) de la partie d'épaulement de l'outil rotatif et la surface de maintien de force de pressage (4b) de l'outil d'appui contre les surfaces avant et arrière de la partie de joint, respectivement ;

déplacer l'outil rotatif (3) et l'outil d'appui (4) le long de la partie de joint en synchronisation l'un avec l'autre ; et malaxer par friction la partie de joint dans la région entière dans le sens de l'épaisseur des plaques métalliques à l'aide de l'outil rotatif (3).

2. Méthode de soudage par friction-malaxage dans laquelle un outil rotatif (3) et un outil de support (4) sont disposés sur les surfaces avant et arrière d'une partie de joint (J) de deux plaques métalliques aboutées (1, 2), l'outil rotatif malaxe par friction la partie de joint et effectue un soudage par friction-malaxage sur les deux plaques métalliques, dans laquelle :

l'outil rotatif (3) comprend un corps d'outil (3a) ayant une partie d'épaulement (3c) formée à une partie d'extrémité de pointe de celui-ci et au moins une partie saillante (3d) formée pour faire saillie de la partie d'extrémité de pointe du corps d'outil,
l'outil d'appui (4) comprend un corps d'outil d'appui (4a) ayant une partie de surface de maintien de force de pressage (4c) formée à une partie d'extrémité de pointe de celui-ci et au moins une partie en retrait (4d) qui est un trou cylindrique pour recevoir une extrémité de pointe de la partie saillante (3d) lorsque les deux plaques métalliques (1, 2) doivent être soudées,
le procédé comprenant les étapes de :

disposer l'outil rotatif (3) et l'outil d'appui (4) en relation opposée sur les surfaces avant et arrière de la partie de joint (J) des deux plaques métalliques ;
faire tourner l'outil rotatif (3) ; déplacer l'outil rotatif (3) dans une direction telle que l'outil rotatif (3) s'approche de l'outil de support (4) ; insérer l'extrémité de pointe de la partie saillante (3d) de l'outil rotatif (3) dans la partie en retrait (4d) de l'outil de support ; prendre en sandwich la partie de joint (J) entre une surface d'épaulement (3b) de la partie d'épaulement (3c) de l'outil rotatif et une surface de maintien de force de pressage (4b) de l'outil de support ;
presser la surface d'épaulement (3b) de la partie d'épaulement de l'outil rotatif et la surface de maintien de force de pressage (4b) de l'outil d'appui contre les surfaces avant et arrière de la partie de joint, respectivement ;
déplacer les deux plaques métalliques (1, 2) dans un sens de soudage ; et
malaxer par friction la partie de joint dans la région entière dans le sens de l'épaisseur des plaques métalliques à l'aide de l'outil rotatif (3).

3. Méthode de soudage par friction-malaxage selon la revendication 1 ou 2, dans laquelle :
concernant une distance ($\delta$) entre la surface d'épaulement (3b) et la surface de maintien de force de pressage (4b) des outils rotatif et d'appui (3) et (4) disposés en relation opposée, au moins l'un des outils rotatif (3) et d'appui (4) est incliné de sorte qu'une distance ($\delta2$) entre les surfaces sur un côté arrière dans le sens de déplacement des outils rotatif et d'appui est inférieure à une distance ($\delta1$) entre les surfaces sur un côté avant dans le sens de déplacement des outils rotatif et d'appui.

4. Méthode de soudage par friction-malaxage selon l'une des revendications 1 à 3, dans laquelle :

l'outil rotatif (3) est déplacé par contrôle de position à une profondeur d'insertion prévue dans le sens de l'épaisseur des plaques métalliques (1, 2) avant le début du soudage par friction-malaxage ;
l'outil rotatif est déplacé par contrôle de position à partir d'une surface de bord (24) de la partie de joint des deux plaques métalliques et commence le soudage par friction-malaxage tandis que la profondeur d'insertion de l'outil rotatif (3) est maintenue ;
la commande est commutée à une commande de charge constante pour contrôler une position d'insertion de l'outil rotatif de sorte qu'une charge appliquée à l'outil rotatif (3) soit d'une valeur prédéterminée après le début du soudage par friction-malaxage ;
avant que les outils n'atteignent une partie d'extrémité de joint à laquelle le soudage par friction-malaxage se termine, la commande est commutée à la commande de position pour maintenir une position d'insertion de l'outil rotatif (3) à ce moment-là, et les outils passent à travers la partie d'extrémité de joint ; et
l'outil d'appui (4) est déplacé par le contrôle de position à une profondeur d'insertion prévue dans le sens de l'épaisseur des plaques métalliques (1, 2) avant le début du soudage par friction-malaxage et le contrôle de position est effectué pour maintenir la position du début à la fin du soudage par friction-malaxage.

5. Appareil de soudage par friction-malaxage dans lequel un outil rotatif (3) et un outil d'appui (4) sont disposés sur les surfaces avant et arrière d'une partie de joint (J) de deux plaques métalliques (1, 2) aboutées, et l'outil rotatif malaxe par friction la partie de joint et effectue un soudage par friction-malaxage sur les deux plaques métalliques, ledit appareil comprenant

un premier et un deuxième dispositif de serrage (5, 6) qui serrent les plaques métalliques (1, 2), respectivement ; un dispositif de rotation d'outil (7) auquel l'outil rotatif est fixé et qui entraîne en rotation l'outil rotatif de sorte que l'outil rotatif (3) et l'outil de support (4) soient disposés en relation opposée sur les surfaces avant et arrière de la partie de joint (J) des plaques métalliques (1, 2) ;

un dispositif de maintien de position d'outil (46) qui maintient l'outil d'appui (4) en position sur la surface arrière de la plaque métallique ;

un dispositif de pressage d'outil (45) qui fait que l'outil rotatif (3) fixé au dispositif de rotation d'outil se déplace dans une direction telle que l'outil rotatif (3) s'approche de l'outil de support (4) et presse l'outil rotatif contre la surface avant de la partie de joint des plaques métalliques ; et

des dispositifs de déplacement (47, 48, 75) qui déplacent l'outil rotatif (3) fixé au dispositif de rotation d'outil et l'outil d'appui (4) le long de la partie de joint (J) tandis que l'outil rotatif (3) et l'outil d'appui (4) sont synchronisés l'un avec l'autre,

dans lequel :

l'outil rotatif (3) comprend un corps d'outil (3a) ayant une partie d'épaulement (3c) formée à une partie d'extrémité de pointe de celui-ci et au moins une partie saillante (3d) formée de manière à faire saillie de la partie d'extrémité de pointe du corps d'outil ;

l'outil de support (4) comprend un corps d'outil (4a) ayant une partie de surface de maintien de force de pressage (4c) formée à une partie d'extrémité de pointe de celui-ci et au moins une partie en retrait (4d) qui est un trou cylindrique formé à la partie d'extrémité de pointe du corps d'outil et configuré pour recevoir une extrémité de pointe de la partie en saillie (3d) lorsque les deux plaques métalliques (1, 2) doivent être soudées ;

le dispositif de pressage d'outil (45) est adapté pour appliquer une force de pressage à la partie de joint (J) en insérant l'extrémité de pointe de la partie saillante (3d) de l'outil rotatif dans la partie en retrait (4d) de l'outil de support, en pressant la surface d'épaulement (3b) de la partie d'épaulement de l'outil rotatif contre la surface avant de la partie de joint, et en prenant en sandwich la partie de joint (J) entre la surface d'épaulement (3b) de l'outil rotatif et la surface de maintien de force de pressage (4b) de l'outil de support lorsque l'outil rotatif est déplacé dans une direction de manière à s'approcher de l'outil de support ; et

les dispositifs de déplacement (47, 48, 75) sont adaptés pour déplacer l'outil rotatif (3) et l'outil d'appui (4) le long de la partie de joint, à condition que l'extrémité de la partie saillante (3d) de l'outil rotatif soit insérée dans la partie en retrait (4d) de l'outil d'appui, la surface d'épaulement (3b) de la partie d'épaulement de l'outil rotatif soit pressée contre la surface avant de la partie de joint, et l'outil rotatif (3) et l'outil d'appui (4) soient synchronisés l'un avec l'autre, de sorte que l'outil rotatif (3) malaxe par friction la partie de joint dans la région entière dans le sens de l'épaisseur des plaques métalliques.

6. Appareil de soudage par friction-malaxage dans lequel un outil rotatif (3) et un outil de support (4) sont disposés sur les surfaces avant et arrière d'une partie de joint (J) de deux plaques métalliques (1, 2) aboutées, et l'outil rotatif malaxe par friction la partie de joint et effectue un soudage par friction-malaxage sur les deux plaques métalliques, ledit appareil comprenant

un premier et un deuxième dispositif de serrage (5, 6) qui serrent les plaques métalliques (1, 2), respectivement ; un dispositif de rotation d'outil (7) auquel l'outil rotatif est fixé et qui entraîne en rotation l'outil rotatif de sorte que l'outil rotatif (3) et l'outil d'appui (4) soient disposés en relation opposée sur les surfaces avant et arrière de la partie de joint (J) des plaques métalliques (1, 2) ;

un dispositif de maintien de position d'outil (46) qui maintient l'outil d'appui (4) en position sur la surface arrière de la plaque métallique ;

un dispositif de pressage d'outil (45) qui fait que l'outil rotatif (3) fixé au dispositif de rotation d'outil se déplace dans une direction telle que l'outil rotatif (3) s'approche de l'outil de support (4) et presse l'outil rotatif contre la surface avant de la partie de joint des plaques métalliques ; et

un dispositif de déplacement (75) qui fait que les dispositifs de serrage (5, 6) déplacent les deux plaques métalliques (1, 2) dans un sens de soudage, dans lequel :

l'outil rotatif (3) comprend un corps d'outil (3a) ayant une partie d'épaulement (3c) formée à une partie d'extrémité de pointe de celui-ci et au moins une partie saillante (3d) formée de manière à faire saillie de la partie d'extrémité de pointe du corps d'outil ;

l'outil de support (4) comprend un corps d'outil (4a) ayant une partie de surface de maintien de la force de pressage (4c) formée à une partie d'extrémité de pointe de celui-ci et au moins une partie en retrait (4d) qui est un trou cylindrique, formé à la partie d'extrémité de pointe du corps d'outil et configuré pour recevoir une extrémité de pointe de la partie saillante (3d) lorsque les deux plaques métalliques (1, 2) doivent être soudées ;

le dispositif de pressage d'outil (45) est adapté pour appliquer une force de pressage à la partie de joint (J) en insérant l'extrémité de pointe de la partie saillante (3d) de l'outil rotatif dans la partie en retrait (4d) de l'outil de support, en pressant la surface d'épaulement (3b) de la partie d'épaulement de l'outil rotatif contre la surface avant de la partie de joint, et en prenant en sandwich la partie de joint (J) entre la surface d'épaulement (3b) de l'outil rotatif et la surface de maintien de force de pressage (4b) de l'outil de support lorsque l'outil rotatif et l'outil de support sont déplacés dans une direction de manière à se rapprocher l'un de l'autre ; et

le dispositif de déplacement (75) est adapté pour déplacer les plaques métalliques (1, 2) dans le sens de soudage dans l'état où l'extrémité de pointe de la partie saillante (3d) de l'outil rotatif est insérée dans la partie en retrait (4d) de l'outil de support, la surface d'épaulement (3b) de la partie d'épaulement de l'outil rotatif est pressée contre la surface avant de la partie de joint, de sorte que l'outil rotatif (3) malaxe par friction la partie de joint dans la région entière dans une direction d'épaisseur des plaques métalliques.

7. Appareil de soudage par friction-malaxage selon la revendication 5 ou 6, comprenant en outre :

des dispositifs de support en inclinaison (76a, 76b) pour incliner et supporter au moins l'un de l'outil rotatif (3) et de l'outil de support (4) de telle sorte que, en ce qui concerne une distance ($\delta$) entre la surface d'épaulement (3b) et la surface de maintien de force de pressage (4b) des outils rotatif et de support (3) et (4) disposés en relation opposée, une distance ($\delta2$) entre les surfaces sur un côté arrière dans un sens de déplacement des outils rotatif et de support est inférieure à une distance ($\delta1$) entre les surfaces sur un côté avant dans le sens de déplacement des outils rotatif et de support.

8. Appareil de soudage par friction-malaxage selon l'une des revendications 5 à 7, comprenant en outre
un dispositif de commande (83) qui commande le dispositif de pressage d'outil (45), le dispositif de maintien de position d'outil (46) et les dispositifs de déplacement (47, 48, 75) de manière à ce que :

l'outil rotatif (3) soit déplacé par contrôle de position à une profondeur d'insertion prévue dans le sens de l'épaisseur des plaques métalliques (1, 2) avant le début du soudage par friction-malaxage ;

l'outil rotatif soit déplacé dans le sens de la progression du soudage par contrôle de position à partir de la surface du bord (24) de la partie de joint des deux plaques métalliques et commence le soudage par friction-malaxage tandis que la profondeur d'insertion de l'outil rotatif (3) est maintenue ;

après le début du soudage par friction-malaxage, la commande est commutée à la commande de charge constante pour contrôler une position d'insertion de l'outil rotatif de sorte qu'une charge appliquée à l'outil rotatif (3) soit d'une valeur prédéterminée ;

avant que les outils n'atteignent une partie d'extrémité de joint à laquelle le soudage par friction-malaxage se termine, la commande est commutée à la commande de position pour maintenir une position d'insertion de l'outil rotatif (3) à ce moment-là et les outils passent à travers la partie d'extrémité de joint ;

et l'outil d'appui (4) est déplacé par la commande de position à une profondeur d'insertion prévue dans le sens de l'épaisseur des plaques métalliques (1, 2) avant le début du soudage par friction-malaxage et la commande de position est effectuée pour maintenir la position du début à la fin du soudage par friction-malaxage.

9. Appareil de soudage par friction-malaxage selon l'une des revendications 5 à 8, dans lequel :

l'outil rotatif est constitué d'un alliage de carbure cémenté de carbure de tungstène fritté ou d'un alliage de tungstène ; et

les deux plaques métalliques (1, 2) à joindre sont faites d'un matériau ayant un point de fusion de 1000°C ou plus.

FIG. 1

FIG. 2

FIG. 3

FIG. 4

FIG. 5

TRAVELING
DIRECTION
OF
METAL PLATES

EP 2 703 110 B1

41

FIG. 6

TRAVELING
DIRECTION OF
METAL PLATES

EP 2 703 110 B1

42

FIG. 7

FIG. 8

WELDING DIRECTION

CONTROL DEVICE

J(1,2)

FIG. 9

FIG. 10

TRAVELING DIRECTION
OF METAL PLATES

FIG. 11

EP 2 703 110 B1

TRAVELING
DIRECTION OF
METAL PLATES

FIG. 12

TRAVELING
DIRECTION OF
METAL PLATES

EP 2 703 110 B1

EP 2 703 110 B1

FIG. 13

FIG. 14

FIG. 15

FIG. 16

WELDING PROGRESS
DIRECTION

FIG. 17

FIG. 18

FIG. 19

15

3

21a POSITION AT WHICH
FRICTION STIR
WELDING STARTS

WELDING
DIRECTION

J(1,2)

24

21b POSITION AT WHICH
FRICTION STIR
WELDING STARTS

4

# FIG. 20

21a  POSITION AT WHICH FRICTION STIR WELDING STARTS

21b  POSITION AT WHICH FRICTION STIR WELDING STARTS

WELDING DIRECTION

$\theta 1$

$15a$

$3$

$24$

$\delta 1$

$\delta 2$

$J(1,2)$

$4$

$15b$

$\theta 2$

EP 2 703 110 B1

## FIG. 21

POSITION CONTROL | LOAD CONTROL | POSITION CONTROL

20a ROTARY TOOL STANDBY POSITION

20b ROTORY TOOL STANDBY POSITION

3

15a

21a POSITION AT WHICH FRICTION STIR WELDING STARTS

22a POSITION AT WHICH FRICTION STIR WELDING IS TERMINATED

J(1,2)

24

15b

21b POSITION AT WHICH FRICTION STIR WELDING STARTS

22b POSITION AT WHICH FRICTION STIR WELDING IS TERMINATED

4

20b BACKING TOOL STANDBY POSITION

20b BACKING TOOL STANDBY POSITION

POSITION FIXED

## FIG. 22

STEP S1

CALCULATE RELATIVE POSITIONS OF PLATES AND
UPPER AND LOWER TOOLS
(PERFORM CALCULATION USING VALUE MEASURED
BY POSITION MEASURING DEVICE AND USE
CALCULATED POSITIONS FOR POSITION CONTROL)

STEP S2

ROTARY TOOL: POSITION CONTROL
BACKING TOOL: POSITION FIXED (INITIAL SETTING)
(FROM STANDBY POSITIONS TO PLATE EDGE
SURFACE AT WHICH FRICTION STIRRING STARTS)

STEP S3

ROTARY TOOL: LOAD CONTROL
BACKING TOOL: POSITION FIXED (INITIAL SETTING)
(FROM PLATE EDGE SURFACE AT WHICH FRICTION
STIRRING STARTS TO POSITIONS AT WHICH
FRICTION STIRRING IS TERMINATED)

STEP S4

ROTARY TOOL: POSITION CONTROL
BACKING TOOL: POSITION FIXED (INITIAL SETTING)
(FROM POSITIONS AT WHICH FRICTION STIRRING IS
TERMINATED TO TOOL STANDBY POSITIONS)

# FIG. 23

POSITION CONTROL | LOAD CONTROL | POSITION CONTROL

20a ROTARY TOOL STANDBY POSITION

20b ROTARY TOOL STANDBY POSITION

3

15a

21a POSITION AT WHICH FRICTION STIR WELDING STARTS

22a POSITION AT WHICH FRICTION STIR WELDING IS TERMINATED

J(1,2)

24

15b

4

21b POSITION AT WHICH FRICTION STIR WELDING STARTS

22b POSITION AT WHICH FRICTION STIR WELDING IS TERMINATED

20b BACKING TOOL STANDBY POSITION

20b BACKING TOOL STANDBY POSITION

POSITION CONTROL

# FIG. 24

STEP S1

| CALCULATE RELATIVE POSITIONS OF PLATES AND UPPER AND LOWER TOOLS (PERFORM CALCULATION USING VALUE MEASURED BY POSITION MEASURING DEVICE AND USE CALCULATED POSITIONS FOR POSITION CONTROL) |
|---|

STEP S2A

| ROTARY TOOL: POSITION CONTROL BACKING TOOL: POSITION CONTROL (FROM STANDBY POSITIONS TO PLATE EDGE SURFACE AT WHICH FRICTION STIRRING STARTS) |
|---|

STEP S3A

| ROTARY TOOL: LOAD CONTROL BACKING TOOL: POSITION CONTROL (FROM PLATE EDGE SURFACE AT WHICH FRICTION STIRRING STARTS TO POSITIONS AT WHICH FRICTION STIRRING IS TERMINATED) |
|---|

STEP S4A

| ROTARY TOOL: POSITION CONTROL BACKING TOOL: POSITION CONTROL (FROM POSITIONS AT WHICH FRICTION STIRRING IS TERMINATED TO STANDBY POSITIONS OF TOOLS FOR FRICTION STIRRING) |
|---|

FIG. 25

FIG. 26

FIG. 27A

FIG. 27B

FIG. 28

FIG. 29

FIG. 30

## FIG. 31

FIG. 32

FIG. 33

FIG. 34

WELDING DIRECTION

J

3

1

2

4

FIG. 35

1

2

J

FIG. 36

FIG. 37

WELDING DIRECTION

FIG. 38

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2712838 B
- JP 3289650 B
- JP 3317192 B